(19) Europäisches Patentamt
European Patent Office
Office européen des brevets

(11) EP 4 722 994 A1

(12) **EUROPEAN PATENT APPLICATION**

(43) Date of publication:
08.04.2026 Bulletin 2026/15

(51) International Patent Classification (IPC):
*G06N 10/60* (2022.01)     *G06N 10/20* (2022.01)

(21) Application number: 25206726.9

(52) Cooperative Patent Classification (CPC):
**G06N 10/60**; G06N 10/20

(22) Date of filing: 03.10.2025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 04.10.2024 GB 202414661

(71) Applicant: **Phasecraft Limited**
**London Greater London W1T 4PW (GB)**

(72) Inventors:
• **MONTANARO, Ashley**
**London, W1T 4PW (GB)**
• **CLINTON, Laura**
**London, W1T 4PW (GB)**
• **STROEKS, Maarten**
**London, W1T 4PW (GB)**
• **GARCIA-PATRON SANCHEZ, Raul**
**London, W1T 4PW (GB)**
• **STANISIC, Stasja**
**London, W1T 4PW (GB)**
• **CUBITT, Toby**
**London, W1T 4PW (GB)**

(74) Representative: **Mathys & Squire**
**The Shard**
**32 London Bridge Street**
**London SE1 9SG (GB)**

(54) **PHASE RETRIEVAL IN HYBRID QUANTUM-CLASSICAL COMPUTING SYSTEMS**

(57) The invention relates to methods and apparatuses for reconstructing phase information in a time series, the time series being derived from a time evolution of an input state acted on by a Hamiltonian, $H$. First, an input state, $|\psi\rangle$, a total time evolution time, $T$, and the Hamiltonian, $H$ are received. Next a time evolution of the input state is enacted, using $H$ to generate an absolute value of a first time series, $|f_1|$. In addition at least one additional family of absolute values of time series is generated, each time series being a discrete or continuous function of time $t$, for $t \in [0, T]$. Finally, phase information is extracted for the time series of the input state from the absolute values of the first time series and the at least one additional family of absolute values of time series.

Figure 1c

Receive input state and Hamiltonian — 110

Enact time evolution of the input state using Hamiltonian — 112

Generate an absolute value of a first time series — 114

Generate at least one additional family of absolute values of time series — 116

Extract phase information for time series of input state — 118

## Description

### Field of invention

The present invention relates to phase retrieval from time evolved quantum computations, and in particular to phase retrieval from time evolutions where the time evolution is not a control time evolution operation.

### Background

Various documents have been published in this field, which we refer to in the following as:

[1] S. Duckett and B. Gilbert. Foundations of Spectroscopy. Oxford Chemistry Primers. Oxford University Press, 2000. ISBN 9780198503354. URL https://books.google.co.uk/books?id=boG7ngEACAAJ.

[2] J. P. F. LeBlanc, Andrey E. Antipov, Federico Becca, Ireneusz W. Bulik, Garnet Kin-Lic Chan, Chia-Min Chung, Youjin Deng, Michel Ferrero, Thomas M. Henderson, Carlos A. Jiménez-Hoyos, E. Kozik, Xuan-Wen Liu, Andrew J. Millis, N. V. Prokof' ev, Mingpu Qin, Gustavo E. Scuseria, Hao Shi, B. V. Svistunov, Luca F. Tocchio, I. S. Tupitsyn, Steven R. White, Shiwei Zhang, Bo-Xiao Zheng, Zhenyue Zhu, and Emanuel Gull. Solutions of the two-dimensional Hubbard model: Benchmarks and results from a wide range of numerical algorithms. Phys. Rev. X, 5:041041, Dec 2015. doi: 10.1103/PhysRevX.5.041041. URL https://link.aps.org/doi/10.1103/PhysRevX.5.041041.

[3] Bela Bauer, Sergey Bravyi, Mario Motta, and Garnet Kin-Lic Chan. Quantum algorithms for quantum chemistry and quantum materials science. Chemical Reviews, 120(22):12685-12717, October 2020. ISSN 1520-6890. doi: 10.1021/acs.chemrev.9b00829. URL http://dx.doi.org/10.1021/acs.chemrev.9b00829.

[4] R. Somma, G. Ortiz, J. E. Gubernatis, E. Knill, and R. Laflamme. Simulating physical phenomena by quantum networks. Phys. Rev. A, 65:042323, Apr 2002. doi: 10.1103/PhysRevA.65.042323. URL https://link.aps.org/doi/10.1103/PhysRevA.65.042323.

[5] Rolando D Somma. Quantum eigenvalue estimation via time series analysis. New Journal of Physics, 21(12):123025, dec 2019. doi: 10.1088/1367-2630/ab5c60. URL https://dx.doi.org/10.1088/1367-2630/ab5c60.

[6] Thomas E O'Brien, Brian Tarasinski, and Barbara M Terhal. Quantum phase estimation of multiple eigenvalues for small-scale (noisy) experiments. New Journal of Physics, 21(2):023022, Feb 2019. doi: 10.1088/1367-2630/aafb8e. URL https://dx.doi.org/10.1088/1367-2630/aafb8e.

[7] Lin Lin and Yu Tong. Heisenberg-limited ground-state energy estimation for early fault-tolerant quantum computers. PRX Quantum, 3:010318, Feb 2022. doi: 10.1103/PRXQuantum.3.010318. URL https://link.aps.org/doi/10.1103/PRXQuantum.3.010318.

[8] Kianna Wan, Mario Berta, and Earl T. Campbell. Randomized quantum algorithm for statistical phase estimation. Phys. Rev. Lett., 129:030503, Jul 2022. doi: 10.1103/PhysRevLett.129.030503. URL https://link.aps.org/doi/10.1103/PhysRevLett.129.030503.

[9] Guoming Wang, Daniel Stilck Franga, Ruizhe Zhang, Shuchen Zhu, and Peter D. Johnson. Quantum algorithm for ground state energy estimation using circuit depth with exponentially improved dependence on precision. Quantum, 7:1167, November 2023. ISSN 2521-327X. doi: 10.22331/q-2023-11-06-1167. URL https://doi.org/10.22331/q-2023-11-06-1167.

[10] Nick S. Blunt, Laura Caune, Róbert Izsák, Earl T. Campbell, and Nicole Holzmann. Statistical phase estimation and error mitigation on a superconducting quantum processor. PRX Quantum, 4:040341, Dec 2023. doi: 10.1103/PRXQuantum.4.040341. URL https://link.aps.org/doi/10.1103/PRXQuantum.4.040341.

[11] Thomas E. O'Brien, Stefano Polla, Nicholas C. Rubin, William J. Huggins, Sam McArdle, Sergio Boixo, Jarrod R. McClean, and Ryan Babbush. Error mitigation via verified phase estimation. PRX Quantum, 2:020317, May 2021. doi: 10.1103/PRXQuantum.2.020317. URL https://link.aps.org/doi/10.1103/PRXQuantum.2.020317.

[12] A. Baroni, J. Carlson, R. Gupta, Andy C. Y. Li, G. N. Perdue, and A. Roggero. Nuclear two point correlation functions on a quantum computer. Phys. Rev. D, 105:074503, Apr 2022. doi: 10.1103/PhysRevD.105.074503. URL https://link.aps.org/doi/10.1103/PhysRevD.105.074503.

[13] Nishad Maskara, Stefan Ostermann, James Shee, Marcin Kalinowski, Abigail McClain Gomez, Rodrigo Araiza Bravo, Derek S. Wang, Anna I. Krylov, Norman Y. Yao, Martin Head-Gordon, Mikhail D. Lukin, and Susanne F. Yelin. Programmable simulations of molecules and materials with reconfigurable quantum processors, 2023. https://arxiv.org/abs/2312.02265

[14] Bela Bauer, Dave Wecker, Andrew J. Millis, Matthew B. Hastings, and Matthias Troyer. Hybrid quantum-classical approach to correlated materials. Phys. Rev. X, 6:031045, Sep 2016. doi: 10.1103/PhysRevX.6.031045. URL https://link.aps.org/doi/10.1103/PhysRevX.6.031045.

[15] Hans Hon Sang Chan, Richard Meister, Matthew L. Goh, and Bálint Koczor. Algorithmic shadow spectroscopy, 2024. https://arxiv.org/abs/2212.11036

[16] Yilun Yang, Arthur Christianen, Mari Carmen Bañuls, Dominik S. Wild, and J. Ignacio Cirac. Phase-sensitive quantum measurement without controlled operations. Phys. Rev. Lett., 132:220601, May 2024. doi: 10.1103/PhysRevLett.132.220601. URL https://link.aps.org/doi/10.1103/PhysRevLett.132.220601.

[17] A. E. Russo, K. M. Rudinger, B. C. A. Morrison, and A. D. Baczewski. Evaluating energy differences on a quantum computer with robust phase estimation. Phys. Rev. Lett., 126:210501, May 2021. doi: 10.1103/PhysRevLett.126.210501. URL https://link.aps.org/doi/10.1103/PhysRevLett.126.210501.

[18] Adriaan Walther. The question of phase retrieval in optics. Optica Acta: International Journal of Optics, 10(1):41-49, 1963. doi: 10.1080/713817747. URL https://doi.org/10.1080/713817747.

[19] Oren Raz, Nirit Dudovich, and Boaz Nadler. Vectorial phase retrieval of 1-d signals. IEEE Transactions on Signal Processing, 61(7):1632-1643, 2013. doi: 10.1109/TSP.2013.2239994.

[20] James Fienup. Phase retrieval algorithms: a comparison. Applied optics, 21:2758-69, 08 1982. doi: 10.1364/AO.21.002758.

[21] A.V. Oppenheim, A.S. Willsky, and S.H. Nawab. Signals & Systems. Prentice-Hall signal processing series. Prentice-Hall International, 1997. ISBN 9780136511755. URL https://books.google.co.uk/books?id=O9ZHSAAACAAJ.

[22] Rick P. Millane. Phase retrieval in crystallography and optics. Journal of The Optical Society of America A-optics Image Science and Vision, 7(3):394-411, 1990. doi: 10.1364/JOSAA.7.000394.

[23] J. Dainty and James Fienup. Phase retrieval and image reconstruction for astronomy. Image Recovery: Theory Appl, 13, 01 1987.

[24] Tamir Bendory, Robert Beinert, and Yonina C. Eldar. Fourier Phase Retrieval: Uniqueness and Algorithms, pages 55-91. Springer International Publishing, Cham, 2017. ISBN 978-3-319-69802-1. doi: 10.1007/978-3-319-69802-1 2. URL https://doi.org/10.1007/978-3-319-69802-1_2.

[25] Yu.M. Bruck and L.G. Sodin. On the ambiguity of the image reconstruction problem. Optics Communications, 30(3):304-308, 1979. ISSN 0030-4018. doi: https://doi.org/10.1016/0030-4018(79)90358-4. URL https://www.sciencedirect.com/science/article/pii/0030401879903584.

[26] Dani Kogan, Yonina C. Eldar, and Dan Oron. On the 2d phase retrieval problem. IEEE Transactions on Signal Processing, 65(4):1058-1067, February 2017. ISSN 1941-0476. doi: 10.1109/tsp.2016.2631455. URL http://dx.doi.org/10.1109/TSP.2016.2631455.

[27] Eliyahu Osherovich. Numerical methods for phase retrieval. ArXiv, abs/1203.4756, 2012. URL https://api.semanticscholar.org/CorpusID:14566173.

[28] Daniel P. Arovas, Erez Berg, Steven A. Kivelson, and Srinivas Raghu. The Hubbard model. Annual Review of Condensed Matter Physics, 13(Volume 13, 2022):239-274, 2022. ISSN 1947-5462. doi: https://doi.org/10.1146/annurev-conmatphys-031620-102024. URL https://www.annualreviews.org/content/journals/10.1146/annurev-conmatphys-031620-102024.

[29] Mingpu Qin, Thomas Schäfer, Sabine Andergassen, Philippe Corboz, and Emanuel Gull. The Hubbard model: A computational perspective. Annual Review of Condensed Matter Physics, 13(1):275-302, March 2022. ISSN 1947-5462. doi: 10.1146/annurev-conmatphys-090921-033948. URL http://dx.doi.org/10.1146/annurev-conmatphys-090921-033948.

[30] Robert Beinert. One-dimensional phase retrieval with additional interference intensity measurements. Results in Mathematics, 72(1):1-24, 2017. doi: 10.1007/s00025-016-0633-9. URL https://doi.ora/10.1007/s00025-016-0633-9.

[31] Emmanuel J. Candes, Thomas Strohmer, and Vladislav Voroninski. Phaselift: Exact and stable signal recovery from magnitude measurements via convex programming, 2011. URL https://arxiv.orq/abs/1109.4499.

[32] Kishore Jaganathan, Yonina C. Eldar, and Babak Hassibi. Phase retrieval: An overview of recent developments, 2015. URL https://arxiv.org/abs/1510.07713.

[33] Charles Derby, Joel Klassen, Johannes Bausch, and Toby Cubitt. Compact fermion to qubit mappings. Phys. Rev. B, 104:035118, July 2021. Doi: 10.1103/PhysRevB.104.035118. URL https://link.aps.org/doi/10.1103/PhysRevB.104.035118.

[34] Michael A. Nielsen and Isaac L. Chuang. Quantum Computation and Quantum Information: 10th Anniversary Edition. Cambridge University Press, 2010.

The prediction of spectral properties is a key aspect in the discovery of novel materials and advancing our understanding of chemical properties and reactions [1]. The evaluation of spectral properties of large many-body systems is a computationally intensive task, limited by numerical bottlenecks associated with classical simulation of time-evolution [2]. Quantum computers have the potential to make such simulations tractable, offering the opportunity to revolutionize material science and chemistry [3]. Algorithms based on quantum phase estimation offer a route towards obtaining such spectral properties, albeit requiring one to perform many costly time-evolution simulation steps *controlled* on one or several ancillary qubit(s), making it difficult to be run on current *fault-prone* quantum computers. Therefore, eliminating or reducing the need for controlled time-evolution in quantum phase estimation has attracted a lot of attention, as it could render the prediction of spectral properties accessible to near-term devices.

A significant step in this direction was the proposal of statistical phase estimation (see e.g. [4, 5, 6]) which reduces quantum phase-estimation to the computation of a time series $f(t) = \langle\psi|e^{itH}|\psi\rangle$ on a quantum device followed by classical post-processing to obtain an estimate of the spectrum of $H$ with similar resolution as standard quantum phase estimation for most Hamiltonians. Note that in this document, $exp(itH) = \exp(iHt)$ throughout and either may be used interchangeably.

Statistical phase estimation reduces the required quantum circuit to two variants of a Hadamard test circuit, giving the real and imaginary parts of $f(t)$. This result has spurred a plethora of theoretical work [7, 8, 9], followed by experimental demonstrations [10, 11], which can be adapted to estimation of more general spectral quantities such as linear response of quantum systems [12], operator-resolved density of states [13] or Green functions [14], to give some examples. Even if statistical phase-estimation brings an indisputable progress toward making quantum phase estimation more reachable for near-term devices, a single-qubit control time-evolution remains a highly non-trivial operation to implement on near-term devices. This makes it often unpractical to implement statistical phase estimation on currently existing hardware (beyond trivial-size problems). Its difficulty arises from the significant numbers of qubits and non-trivial circuit depth time-evolution operations that need to be controlled by one (or few) qubit(s), making it extremely sensitive to decoherence, increasing the cost of each time-evolution step, and also significantly increasing the circuit depth of implementing all of the required controlled-time-evolution operations. The advantage of performing control-free quantum phase estimation being both the reduction of the number of required coherent operations and its circuit depth.

The significant limitation imposed by the *controlled* time-evolution operation has led to an effort to develop algorithmic techniques to retrieve spectra using control-free time evolution operations. Note that the quantity $|\langle\psi|e^{itH}|\psi\rangle|^2$ can be obtained with a simpler circuit, which does not make use of a controlled operation. Unfortunately, this only gives us access to the absolute values of the complex-valued time-series $f(t) = \langle\psi|e^{itH}|\psi\rangle$, while its phases are key in recovering the spectrum. One way of exploiting the access to $|\langle\psi|e^{itH}|\psi\rangle|^2$ is to compute its Fourier transform to retrieve a new spectrum composed of differences between energy levels, rather than obtaining the energies directly, as done in [15]. Alternatively, in [16] the authors use a complex-time evolution, and in [17] use the knowledge of one eigenvector and eigenenergies, to obtain information about the spectrum using control-free operations. As we discuss below, each technique has its own limitations and sometimes strong constraints, leaving room for significant improvements.

Retrieving a spectrum while not having (complete) access to the phases of its signal is a problem in classical signal-processing called phase-retrieval [18], which has been extensively studied and offers a plethora of different solutions, each one having its own benefits and set of most appropriate applications. The time-series obtained on a digital quantum computer or quantum simulator can be understood as a classical signal and retrieving the spectrum of the many-body problem can therefore benefit from phase- retrieval ideas and algorithms.

The statistical phase-estimation proposal [4, 5, 6] was a significant improvement over traditional quantum phase-estimation, as it realizes a simplification of the circuit requirement while keeping the same resolution on the recovered spectrum for general Hamiltonians. In practice, however, time-evolution controlled by a single qubit remains an extremely sensitive operation and hard to implement especially on devices with connectivity constraints. Targeting implementation on today's quantum computing devices, there has been a growing interest in finding scenarios where the control can be removed. In 2020, Russo and collaborators proposed a technique [17] to measure the energy difference between two eigenvectors of the Hamiltonian that allows one to replace the controlled time-evolution by a simpler time evolution at the cost of having to prepare equal superpositions of both eigenvectors, which for many problems of interests may be intractable. Recently, there were two works that removed the constraint on the input state requirements, making ancillary-free quantum phase-estimation closer to the range of applicability of traditional quantum phase-estimation. In [15], Chan et al. leveraged the power of the recently proposed classical shadows technique to estimate energy gaps via the computation of the expectation values of certain operators as a function of time. A downside of the technique is that it cannot provide the spectrum of $\langle\psi|e^{itH}|\psi\rangle$, but rather the spectrum of $|\langle\psi|e^{itH}|\psi\rangle|^2$, which suffers from the computational cost of recovering the eigenvalues of the Hamiltonian from the energy gaps. Almost at the same time, Yang et al. showed that one can remove the ancillary qubit by combining real-time and imaginary-time evolution [16], exploring ideas from complex function analysis. Its main limitation is the implementation of imaginary-time evolution on a quantum device itself, which currently works only for input states with finite correlation length and short evolution times, but improvement in this direction could render the technique more widely applicable. Finally, in the recent work [13] the authors propose a hybrid classical-quantum algorithm for calculating quantities of interest in many-body spectroscopy that exploits ideas inspired by classical shadows that do not require a controlled time-evolution due to peculiarity of the spectral objects of interest. Nonetheless, the approach requires the application of a (potentially shallow) controlled unitary gate independent of the time evolution. In addition, despite the promise of delegating part of the computation to a classical computer, the constraints it imposes in terms of having access to families of states that can be classically emulated may limit its use for arbitrary Hamiltonians.

## Summary of the invention

The present invention addresses specifically the aforementioned problems in implementing a controlled time evolution operator on quantum hardware. For example, Noisy Intermediate-Scale Quantum hardware (NISQ), early fault-tolerant devices and certain fault-tolerant schemes that simply do not allow for complicated controlled time evolution to be carried out due to noise and gate fidelity issues, can be improved. This process is important if the phase of states during a time evolution (the phase being essential for e.g. identifying the spectrum of the Hamiltonian used to implement the time evolution) is to be extracted.

The present invention provides methods for extracting phase information after having performed a different, simpler, time evolution operation, which extracts the time-evolved state without the phase information. This allows time evolution operations to be performed without needing an external control qubit and hence can be implemented on NISQ hardware, and the phase reconstructed from those measurements.

The solutions provided in this document can generally be considered as making, in addition to the "magnitude only" measurements of the time-evolved state of interest, additional states, dynamics and/or measurements to provide redundant information. Crucially, the interaction between the signal of interest and the redundant information allows the phase to be reconstructed.

This disclosure demonstrates the use of adapted classical phase retrieval algorithms to perform control-free quantum phase estimation, eliminating the costly controlled time evolution and Hadamard tests commonly required to access the complex time-series needed to reconstruct the spectrum. This significant reduction of the number of coherent controlled-operations lowers the circuit depth and considerably simplifies the implementation of (statistical) quantum phase estimation in near-term devices. In phase-retrieval, this is achieved by extending the problem that one wishes to solve to one with a larger set of input signals and exploiting natural constraints on the signal and/or the spectrum.

The general goal of implementing and exploiting redundancy in this context is demonstrated in processes in two main categories, *vectorial phase-retrieval* and *two-dimensional phase-retrieval.* Each allows us to remove the intricate controlled time-evolution currently limiting the scalability of phase-estimation algorithms. Vectorial phase-retrieval works by including measurements of absolute values of additional time series, and - crucially - measurements of the absolute values of interferences of the target time series and these additional time series. In addition, we show how to recast the problem as a two-dimensional one, which can be solved using a *hybrid input-output algorithm.* We numerically investigate the feasibility of both approaches for estimating the spectrum of the Fermi-Hubbard model and discuss the resilience to inherent statistical noise.

This work is devoted to designing these algorithms in the scenario of ancillary-free quantum phase-estimation (QPE). It is important to note that phase-retrieval literature defines unique solution up to unavoidable trivial ambiguities corresponding to a multiplication by a global phase, a time-shift, and time-reversal complex-conjugation of the signal $f[t]$, which do not affect the outcome of the retrieved spectrum. The last two generate the same spectrum, while the global phase on the time-series induces a shift of the spectrum that has no real physical impact, as experimentally we only have access to energy differences. There is an additional subtlety due to the fact that phases are defined over a bounded domain and a shift becomes a cyclic permutation. A proper map of the energies to phases can ensure that the smallest value of the spectrum remains above 0 and below $2\pi$, resulting in a potentially shifted but not distorted spectrum.

Accordingly, disclosed herein is a method for reconstructing phase information in a time series, the time series being derived from a time evolution of an input state acted on by a Hamiltonian, $H$, the method comprising: (a) receiving an input state, $|\psi\rangle$, a total time evolution time, $T$, and the Hamiltonian, $H$; (b) enacting a time evolution of the input state using $H$ to generate an absolute value of a first time series, $|f_1|$, and generating at least one additional family of absolute values of time series, wherein each time series is a discrete or continuous function of time $t$, for $t \in [0, T]$; and (c) extracting phase information for the time series of the input state from the absolute values of the first time series and the at least one additional family of absolute values of time series.

In general, a problem of interest to be solved is defined by a specified starting state, evolving under a specified $H$, for a total time $T$. That is, having identified a system of interest and the Hamiltonian controlling the dynamics of that system, a time series of (discrete or continuous) values between $t = 0$ and $t = T$ are extracted to study the time evolution of the initial state of the system. In general, values of parameters such as $t, z$, as well as other parameters, may be written in square brackets (e.g. $[t, z]$) or round brackets (e.g. $(t, z)$). Whilst conventionally, round brackets may be reserved for continuous parameters and square brackets may be reserved for discrete parameters, in this document both will be used interchangeably, unless explicitly stated otherwise. Furthermore, in the case of a discrete closed set, the notation $(t, z)$ may be subscripted to read $[t_j, z_l]$ or similar, where $j$ and $l$ indicate the specific value in the sets for $t$ and $z$.

The process is therefore set up as a problem to be solved by a user by specifying these parameters which encapsulate the system of interest. Note that typically, to get a time series, we construct a circuit to implement a specific time evolution (e.g. $t = j\Delta t$, where $\Delta t = T/N$ is and $j$ is an integer indexing which of the $N$ time steps is being implemented) under the Hamiltonian, $H$. This circuit is then run a plurality of times, so that statistical information on the state after that evolution time can be extracted. Once all $N$ time steps have been implemented in this way, a time series is formed by time ordering the measurements.

A larger value of $T$ improves the resolution, e.g. the resolution of the energy spectrum of the Hamiltonian, but at the cost of a more complex circuit being required to implement a longer time evolution. A smaller $\Delta t$ allows a higher maximum energy in the extracted spectrum. Ultimately, these are both limited by available resources, (time, qubits, gate fidelity, connectivity/topology of physical qubits, etc.), so the user will tailor their parameterization of the time evolution to the specific quantum hardware they are using.

In step (b), the redundancy is introduced by virtue of the at least one additional family of absolute value time series being included in the process. Additional families of this type allow the reconstruction of phase (as set out in more detail below) by examining the effect of the evolution of interest in combination with the evolution of the redundant information provided by the additional families. As noted above, this avoids the need to implement the controlled time evolution operation which can be expensive and hard to implement.

This idea is developed in more detail below, in which additional families generated by time evolving a different initial state (in addition to the state of interest and interferences of the state of interest with the different initial state) can be thought of as broadly analogous to a single input state being evolved by two Hamiltonians (the Hamiltonian of interest and another, dummy Hamiltonian which evolves the state along a distinct and independent time direction) because the time evolution of the dummy Hamiltonian provides a series of new states (one at each time step along the dummy time direction), which then form a family of input states which are evolved by the Hamiltonian of interest, thereby allowing an analogous extraction of phase information from the interference so obtained.

The adaptation of phase-retrieval algorithms to the quantum-phase-estimation scenario is unfortunately not a trivial "plug & play". First it requires a conceptual adaptation of the framework. The standard problem in classical phase-retrieval literature consists of reconstructing the phases $e^{i\theta[t]}$ of $f[t]$ while having access to $|F[\omega]|$, where in our case we know $|f[t]|$ and want to recover $e^{i\theta[t]}$ (and therefore $F[\omega]$) instead. Because of the symmetries of the standard classical signal processing literature problem where both signal and its spectrum are potentially complex functions, we can most of the time circumvent this slight difference by just exchanging the role of time and frequency in most phase-retrieval algorithms. Secondly, one needs to find an enlarged set of time-series, by enlarging the set input states or inducing additional dynamics, that combined with natural constraints on the spectrum, such as its non-negativity or the fact that it has a well-defined support to guarantee an efficient recovery of the phases $e^{i\theta[t]}$.

This will finally allow approximate reconstruction of our initial spectrum of interest, but also all auxiliary ones needed in the process. In this document, we show how to re-design two phase-retrieval techniques, vectorial phase-retrieval and two-dimensional phase-retrieval, to address the problem of ancillary-free quantum phase-estimation. Vectorial phase-retrieval achieves its goal by including measurements of the absolute values of multiple well-behaved time-series, and - importantly - the time-series of their interferences. Where standard vectorial phase-retrieval makes use of two signals (the target signal and one additional signal) and their interferences, we generalize to multiple additional signals and adapt the convex-optimisation relaxation to improve the algorithm's resilience to noise in the quantum phase-estimation framework.

Secondly, we show how to transform a one-dimensional time series (corresponding to time evolution of an input state under a Hamiltonian) into a two-dimensional phase-retrieval problem by adding a dummy Hamiltonian $H_D$ that commutes with H and produces non-trivial dynamics on the input state of interest. We then exploit the *Hybrid Input Output* algorithm to retrieve the target spectra.

Optionally, the at least one additional family of absolute value time series includes, for $r = 1, ... R$, a set of: R second absolute value time series, $\left|f_2^{(r)}\right|$, derived by enacting the time evolution using $H$ on $R$ additional input states, $|\varphi_r\rangle \neq |\psi\rangle$, wherein $|\varphi_i\rangle \neq |\varphi_j\rangle$ for $i \neq j$; R third absolute value time series $\left|f_3^{(r)}\right|$, derived by enacting a time evolution using H on a superposition of two input states, $(|\psi\rangle + |\varphi_r\rangle)$; and R fourth absolute value time series $\left|f_4^{(r)}\right|$, derived by enacting a time evolution using $H$ on a superposition of two input states $(|\psi\rangle + i|\varphi_r\rangle)$.

In line with the above discussion, the various absolute value time series are measured by preparing the initial state of interest and enacting a circuit to evolve the input state for a time $t$, under the action of $H$. Note that since there is one circuit for evolving any state for a time $t$, under the action of $H$ (i.e. all that changes is the input state), it may be beneficial to arrange this circuit, measure the evolution if the input state of interest, $|\psi\rangle$, and the additional $3R$ time series for the same time step, before moving on to construct a new circuit for the next time step and repeating the procedure.

This provides redundancy in the form of one or more well-defined additional input state(s), as well as a clear form for the superposition of the input state with the additional state(s). The measurement of the interference of the initial state and the additional state(s) allows the phase information to be extracted. The intuition here is that taking the magnitude of the states individually and combining their magnitudes together does not necessarily correspond to the magnitude of the superposition of the states, because phase-related interference may cause constructive or destructive interference to change the absolute magnitude, relative to the individual magnitudes of the states. By considering the magnitudes of the states individually as well as the magnitude of the interference of the two states (at a time $t$) this discrepancy can be identified, and the phase difference between the states inferred.

Note that although specific superpositions are proposed above, i.e. $(|\psi\rangle + |\varphi_r\rangle)$ and $(|\psi\rangle + i|\varphi_r\rangle)$, these are not the only superpositions which will work. For example, the prefactor for $|\varphi_r\rangle$ (1, and $i$) above could be any of $\pm 1$ and $\pm i$, for example, or indeed any prefactors which are spaced apart sufficiently far in the complex plane (ideally close to orthogonal from the origin) to allow detection of a range of phase shifts between the two signals.

This allows us to implement vectorial phase retrieval, a one-dimensional phase retrieval technique. One-dimensional phase retrieval techniques aim to solve a problem that, clearly, is ambiguous in general. Namely, without any further constraints, every assignment of phases $\{x_j\}_{j=0}^{N-1}$ constitutes a time series $\{|f[j]|x_j\}_{j=0}^{N-1}$ that is consistent with the absolute value measurements $\{|f[j]|\}_{j=0}^{N-1}$. Therefore, in order to (approximately) solve the one-dimensional phase retrieval problem, one has to include additional constraints or measurements. In the vectorial phase retrieval framework, this is done by including absolute value measurements of interferences between the target time series $f$ (which we shall henceforth denote by $f_1$) and another (secondary) time series $f_2$ (or more generally, a family of R such time series $f_2^{(r)}$, $r = 1, ..., R$). To be more precise, vectorial phase-retrieval resolves the ambiguity in the retrieval of the phases of the signal $f_1$ by measuring not only its absolute values $|f_1[j]|$, but also those of secondary signals $\left|f_2^{(r)}[j]\right|$ and their interferences, e.g. $\left|f_1[j] + f_2^{(r)}[j]\right|$ and $\left|f_1[j] + if_2^{(r)}[j]\right|$. The vectorial phase retrieval problem admits a unique solution - up to trivial ambiguities - in the noiseless scenario.

More generally, our investigations suggest that the noise resilience of the vectorial phase retrieval algorithm is improved by taking $R > 1$. We note that increasing $R$ increases the amount of classical data to be processed, the running time of the classical post-processing algorithm and the number of quantum circuit shots required. The trade-off between resources cost and quality of solution will therefore play a role in the final choice of $R$. In addition, it is important to cleverly pick the secondary quantum states so that the circuit generating them and their superposition with the target state is a shallow circuit, so that it does not significantly increase the depth of the quantum circuit needed for the implementation. The accurate retrieval of the spectrum using the vectorial phase retrieval algorithm can be attributed to the large number of secondary states employed in the algorithm, leading improved noise resilience.

Optionally, the phase information is extracted from the at least one additional family of absolute value time series by optimising a cost function applied to the first, second, third, and fourth absolute value time series for each $r \in \{1, ..., R\}$. Since the relative phase information is embedded in the first to fourth absolute value time series, cost functions are a clear and well-studied approach to identifying the optimum phase assignment from the measured information.

Optionally, the cost function includes a relative phase term:

$$Q_{\text{interference}}(\boldsymbol{y}) := \sum_{r=1}^{R}\left[\sum_{j=0}^{N-1}\left|y_j - y_j^{(r)}G_r[j]/|G_r[j]|\right|^2\right]$$

wherein $G_r$ represents estimates of the relative difference in phase between $|\psi\rangle$ and $|\varphi_r\rangle$ for a value of $r$ and $\boldsymbol{y}$ is a vector encoding the phase of each time series at discrete time steps. That is, $G_r$ is calculated from the measured phase information, and $\boldsymbol{y}$ is optimized so that the phases assigned to each discrete time step of each time series are as consistent as possible (i.e. the cost is minimized) with the measured phase information (extracted from the absolute values of the input signal and the at least one additional input state, as well as the superpositions of the input state and the at least one additional state). The vector y therefore has $(R + 1)N$ entries, each being complex and having magnitude 1 (since they each represent a phase). This is made up of the phase entry for $N$ discrete time steps for each of $|f_1[j]|$ and all R time series $\left|f_2^{(r)}\right|$ for $r = \{1 ... R\}$. Where the interference states are provided by $(|\psi\rangle + |\varphi_r\rangle)$ and $(|\psi\rangle + i|\varphi_r\rangle)$, $G[j]$ has the form:

$$G[j] := \frac{|f_1[j] + f_2[j]|^2 + i|f_1[j] + if_2[j]|^2 - (1 + i)(|f_1[j]|^2 + |f_2[j]|^2)}{2|f_1[j]||f_2[j]|}$$

Where different superpositions are used, the specific form of $G[j]$ will change, but the general principles of the process remain the same.

Optionally, the cost function includes a support term:

$$Q^{(s)}_{\text{support}}(\boldsymbol{y}) := \sum_{k=s}^{N-1} \left| \sum_{j=0}^{N-1} |f_1[j]||y_j \exp\left[\frac{-i2\pi jk}{N}\right]\right|^2 + \sum_{r=1}^{R} \left[\sum_{k=s}^{N-1} \left|\sum_{j=0}^{N-1} \left|f_2^{(r)}[j]\right| y_{N+j}^{(r)} \exp\left[\frac{-i2\pi jk}{N}\right]\right|^2\right]$$

wherein $\boldsymbol{y}$ is a vector encoding the phase of each time series at discrete time steps.

Optionally, the input states $|\psi\rangle$ and $|\varphi_r\rangle$ are selected so that their corresponding times series, $f_1$ and $f_2^{(r)}$, are spectrally independent of one another and their Fourier transforms each have no support outside a finite interval. Optionally here, the size of the interval may be at most $N/2$ or, equivalently, of size at most $\pi$ in terms of frequency. Note that spectral independence arises when the knowledge of the spectrum of $f_1$ does not provide information on the spectrum of $f_2^{(r)}$, for example where the spectra may be distinguished topologically. It may also be desirable to provide $f_2^{(r)}$ which are each spectrally independent of one another, in order to provide redundancy which adds more new information with each additional $f_2^{(r)}$.

Optionally, the at least one additional family of absolute value time series includes providing a dummy Hamiltonian, $H_D$, which implements a time evolution in an independent time dimension, z, and wherein $|f_1|$ and the at least one additional family of absolute value time series collectively form a two-dimensional absolute value time series:

$$|f(t,z)| := \left|\langle\psi| e^{itH} e^{izH_D} |\psi\rangle\right|.$$

As noted above, this is a convenient way to provide an additional family of time series. Note that this approach may provide a more tractable route to a phase reconstruction in some cases than the methods above in which additional input states are generated.

It is known in phase-retrieval literature that two dimensional problems are more resilient to nontrivial ambiguities of the solution. Non-trivial ambiguities in the 1D problem arise from the fact that the z-transform of the signal is a univariate reducible polynomial. In contrast, reducible multivariate polynomials have measure zero, which implies that the phase retrieval problem in the multidimensional case typically has a unique solution, unless disguising a single variable polynomial as a multivariable one. Nonetheless, this result strongly suggests that two-dimensional phase-retrieval should work in practice.

These ideas allow us to embed the problem - which is naturally one dimensional - into a larger 2D problem so that the benefits of two-dimensional phase-retrieval can be exploited in this new setting. The full details of this method can be found below, but in summary we introduce an additional dummy Hamiltonian $H_D$ and a second independent time variable $z$.

Optionally, the dummy Hamiltonian $H_D$ commutes with the Hamiltonian $H$; and/or the input state $|\psi\rangle$ is not an eigenvector of $H_D$. These features help to ensure that the output of the process is tractable and that a unique solution may be found.

Optionally, the dummy Hamiltonian $H_D$ is the total particle number operator. Optionally, the dummy Hamiltonian $H_D$ is a sum of single qubit Pauli-Z operators, optionally wherein the dummy Hamiltonian $H_D$ is encoded using a Jordan-Wigner mapping as:

$$H_D = \frac{1}{2} \sum_{i \in V, \sigma} (I_{i\sigma} - Z_{i\sigma}).$$

These forms for the Hamiltonian have been shown to lead to good solutions and a suitable time evolution in the dummy time dimension for extracting the phase information of interest.

Optionally, phase information is extracted from $|f(t, z)|$ by performing a hybrid input-output algorithm to iteratively converge on a reconstructed phase. This is specific operation facilitates convergence to a solution.

Optionally, the hybrid input-output algorithm loops the following four steps, where the index i tracks the iteration number of the loop and $f^0([j, l]) := f(|[j, l]) := |\langle\psi|e^{itjH}e^{izlHD}|\psi\rangle|e^{\theta}$, where $\theta$ is a complex phase randomly chosen in the interval $[0, 2\pi]$: (i) from $f^i[j,l]$, generate a new two-dimensional time series, $\tilde{f}^i[j, l]$, such that $|\tilde{f}^i[j, l]| = |f^i[j, l]|$ and the phase of $\tilde{f}^i[j, l]$ is the same as the phase of $f^i[j, l]$; (ii) perform a discrete Fourier transform on $\tilde{f}^i[j, l]$ to derive $\tilde{F}^i[k, m]$; (iii) where $\tilde{F}^i[k, m] \geq 0$, set $F^{i+1}[k, m] = \tilde{F}^i[k, m]$, and otherwise, set $F^{i+1}[k, m] = F^i[k, m] - \beta\tilde{F}^i[k, m]$, where $0 \leq \beta \leq 1$ is a tuneable parameter selected by a user; (iv) perform an inverse discrete Fourier transform on $F^{i+1}[k, m]$ to derive $f^{i+1}[j, l]$.

Here, we start with the absolute value measurement and apply a random phase to that absolute value (in order to give the optimisation a parameter to manipulate as we converge towards the solution by alternating between operations in the time and frequency domains).

Optionally and alternatively, the hybrid input-output algorithm loops the following four steps, wherein: an index $i$ tracks the iteration number of the loop and $f^{i=0}(j, l) := f^0(j, l) := f(j, l) := \langle\psi|e^{itjH}e^{izlHD}|\psi\rangle e^\theta$; $\theta$ is a complex phase randomly chosen in the interval $[0, 2\pi]$, and; the $i$-th iteration starts with a candidate spectrum $F^i$: (1) transform the candidate spectrum $F^i$ into a time series $f^i$ candidate via an inverse discrete Fourier transform; (2) generate a new time series $\tilde{f}^i$ that has the same phase as $f^i$ and satisfies $|\tilde{f}^i[j, l]| = |f[j, l]|$; (3) transform the new time series $\tilde{f}^i$ back to the Fourier domain; (4) take the real part of the discrete Fourier transform of the time series $\tilde{f}^i$ and then implement an update rule to impose positivity of the spectrum.

Optionally, the above steps (1) to (4) and/or (i) to (iv) of the method may be repeated until a convergence condition is met. Repeating these steps until a convergence condition is met is particularly useful for continuing the method to probe increasingly accurate phase estimations, whilst at the same time enables a user to choose a convergence condition that allows the method to be adapted to a wide range of machines with different computing capabilities.

Optionally, the update rule takes the form

$$F^{i+1}[k, m] = \begin{cases} \tilde{F}^i[k, m], & \tilde{F}^i[k, m] \geq 0 \\ F^i[k, m] - \beta\tilde{F}^i[k, m], & \text{else,} \end{cases}$$

wherein $0 \leq \beta \leq 1$ is a parameter tuneable by a user. In this work we apply the hybrid input-output algorithm (HIO) proposed by Fienup [20] in 1982. Importantly, we first establish additional constraints on our 2D problem in order to obtain reliable performance with this established class of algorithms. HIO is known to perform well when the DFT of $f[j, l]$, that is $F[k, m]$, is real and positive. This is because this knowledge can be used to drive the HIO algorithm. By adapting the above four steps to include the real part of the discrete Fourier transform of $\tilde{f}^i$ and the update rule to preserve positivity of the spectrum, the effective of the HIO algorithm can be increased. These constraints can be imposed very naturally, as we detail below. Positivity can be ensured by choosing a $H_D$ which commutes with $H$, and by windowing the time-series in a suitable fashion.

Fienup's hybrid input-output algorithm (HIO) [20] involves transforming back and forth between the Fourier and object domain interspersed by projections that guarantee the satisfaction of the time-series values $|f[j, l]|$ in the object domain and the $F[k, m]$ constraints in the Fourier domain. The algorithm is non-linear and of an iterative nature, where the constraint on the spectrum defines a new element $F^{i+1}$. The parameter $0 \leq \beta \leq 1$ is carefully selected to optimize the performance.

In addition to the constraints that the signal is real and positive, we also incorporate knowledge of the phases for $f$ $[0, l]$. This information can be computed classically in any given experiment as these points correspond to evolution under $H_D$ only.

We want the algorithm to work over a wide range of the remaining free parameters, such as $M$, $N$ and $|\psi\rangle$, and for arbitrary system sizes of $H$. The choice of these parameters is determined by the original problem under consideration, which previously would have been solved through implementing a Hadamard test to obtain $f$ directly. Here we want to show that phase retrieval is a viable alternative to this. Therefore, the algorithm must succeed for a variety of cases, each perhaps corresponding to a quantum phase estimation problem with different demands on accuracy and spectral resolution.

In our implementation, the Fourier domain constraints are that the true spectrum is both real and positive.

The convergence condition may be a technical one, such as looking for a change in values (or phases) of any of $f^i$ $(j, l)$, $\tilde{f}^i(j, l)$, $F^i(k, m)$ or $\tilde{F}^i(k, m)$ on successive iterations which are less than a threshold value. Other conditions may be more practical such as time or resource based (i.e. run the loop no more than a certain number of times or for no more than a given amount of time). In yet further examples, it may be clear that the method will never converge (e.g. due to corrupted data input or settings such as $\beta$ being incorrect), which may result in termination of the method to prevent resource wastage. That is to say that the convergence condition may comprise: a maximum number of loops; or a threshold value where the value of $\tilde{f}^i(j, l)$, $f^i(j, l)$, $F^i(k, m)$, or $\tilde{F}^i(k, m)$ changes by less than a threshold value in successive iterations.

Optionally, a windowing function is applied to $|f(t, z)|$ prior to extracting the phase information, optionally wherein the windowing function is a triangular windowing function.

In our implementation we choose the simplest effective windowing function, which corresponds to a triangular window multiplying the time series $f[j, l]$. We can ensure $F[k, m]$ is real by exploiting the fact that $f[j, l] = f^*[-j, -l]$ and by simply ordering our time-series samples appropriately.

Note that in practice, since a time series has a start time (a nominal $t = 0$) and an end time ($t = T$, as used herein), *every* time series is implicitly windowed by a rectangular windowing function. Additional windowing is used to improve the data processing.

In this 2D example, the HIO algorithm converges properly if the spectrum solution is positive. This is ensured with: (1) $H_D$ commuting with $H$ and (2) using a triangular time-window. This helps because a rectangular time-window has as Fourier transform of a sinc function (sinc(x) = sinc(x) = sin(x)/x) that has negative values. This produces instabilities in the HIO algorithm and prevents proper convergence on the optimal solution.

By using a triangular time-window that has an all-positive Fourier transform (specifically, a $\text{sinc}^2$ function). This has a cost that the $\text{sinc}^2$ function results in a larger widening of the spectral lines, as we convolute by a function ($\text{sinc}^2$) that is wider than a normal sinc function. Other windowing may be desirable with these factors in mind.

Optionally, each absolute value time series is a discrete time series comprising values at $N$ times and an additional input parameter in step (a) above is the size of a time step, $\Delta t = T/N$. A related change in view of this is that Fourier transforms, where used above are discrete Fourier transforms (DFT) rather than the continuous version of the Fourier transform. The time steps are usually evenly spaced, but they need not be. In the 2D case, the time steps may be equal in number and size, although this is not essential.

Optionally, each absolute value time series is derived by measuring an output of a quantum computer having encoded thereon the operation of H acting on the input state for times $t_j$, where $j \in 0,1, ..., N$ and $t_j = j\Delta t$. As noted above, a circuit for enacting the evolution after $t$ has elapsed is set up and input states are input into that circuit so that the evolution of that state can be measured. In such cases, each time series may be extracted from a plurality of measurements of the output of the quantum computer for that time series. This allows real world quantum measurements to form the backbone of the data used in this method. This is important as it allows problems which are well-suited to enacting on quantum hardware (e.g. modelling of materials where electronic interactions are crucial to understanding their behaviour) to be performed on a natural hardware for doing so, while not allowing certain limitations to hinder operation.

Also disclosed herein is an apparatus for reconstructing phase information in a time series, the time series being derived from a time evolution of an input state acted on by a Hamiltonian, $H$, the apparatus comprising a classical processor configured to enact any of the method steps discussed above. In addition, standard computational elements such as memory (e.g. for storing instructions, allowing calculations to be performed, etc.), input/output devices, and so forth may be included to allow a user to prepare instructions and interpret the output.

The apparatus may further comprise a quantum computer for generating the time series by measurement an output of a quantum computer having encoded thereon the operation of H acting on the input state for a time $t$, and wherein the classical processor is operatively coupled to the quantum computer to supply control signals thereto, and to receive outputs therefrom.

The apparatus may further be arranged to carry out any of the method steps described above.

Also disclosed herein is a computer program comprising instructions which, when enacted by a processor, cause the processor to enact any of the method steps discussed above.

## Brief description of figures

The invention will now be described with reference, by way of example only, to the figures, in which:

Figure 1a depicts a known method of single ancillary qubit quantum phase estimation computing a time series;

Figure 1b depicts an ancillary qubit-free circuit that allows one to estimate the square of absolute value of a time series;

Figure 1c illustrates a flow chart of the methods described herein;

Figure 2a is a graph showing the variation of the two smallest eigenvalues of the matrix $A_s^\dagger A_s$ as a function of s for two different values of R in the noisy setting with large sample size $N_{\text{samples}}$;

Figure 2b is a graph comparing the reconstructed spectrum against the exact solution;

Figure 2c illustrates an implementation of the VPR algorithm;

Figure 3 depicts the spectrum of $A_s^\dagger A_s$ for varying s;

Figure 4a is a graph showing the variation of the two smallest eigenvalues of the matrix $A_s^\dagger A_s$ as a function of s for two different values of R in the noiseless scenario;

Figure 4b is a graph comparing the reconstructed spectrum against the exact solution in the noiseless scenario;

Figure 4c is a graph showing the variation of the two smallest eigenvalues of the matrix $A_s^\dagger A_s$ as a function of s for two different values of R in the noisy scenario with large sample size $N_{\text{samples}}$;

Figure 4d is a graph comparing the reconstructed spectrum against the exact solution in the noisy scenario with large sample size $N_{\text{samples}}$;

Figure 5a is a graph showing the variation of the two smallest eigenvalues of the matrix $A_s^\dagger A_s$ as a function of s for R = 10 in the noiseless and noisy scenarios;

Figure 5b is a graph comparing the approximations of the time series in the noiseless setting and with large sample size $N_{\text{samples}}$;

Figure 6a is a schematic diagram illustrating the four steps of Fienup's input-output algorithm;

Figure 6b depicts the update rule required in Fienup's input-output algorithm to ensure positivity of the spectrum;

Figure 6c illustrates an implementation of Fienup's input-out algorithm;

Figure 7a is a plot of the true discretized (target) spectrum for a $2 \times 2$ Fermi-Hubbard Hamiltonian.

Figure 7b is a plot of the absolute value time series input into the 2D hybrid input-output algorithm.

Figure 7c is a plot of the reconstructed image using the 2D hybrid input-output algorithm.

Figure 8a is a graph comparing the target and reconstructed discrete Fourier transform of a times series in the noiseless scenario;

Figure 8b is a graph comparing the target and reconstructed discrete Fourier transform of a times series in the noisy scenario;

Figure 9a is a graph comparing the true spectrum against the approximation according to the VPR phase retrieval method;

Figure 9b is a graph comparing the true spectrum against the approximation according to the 2D hybrid input-output phase retrieval method;

Figure 10a is a graph of the unrounded solution obtained through vector phase retrieval.

Figure 10b is a graph of the rounded solution obtained through vector phase retrieval.

Figure 11a shows a possible layout of the spinless Fermi-Hubbard model on a lattice with 2d connectivity.

Figure 11b shows a possible layout of the spinless Fermi-Hubbard model with one possible Trotter layer grouping on a lattice with 2d connectivity.

To simplify the mathematical discussion in this document we will use dimensionless time and frequency variables, i.e., we will use the notation $f[j]$, where $j \in \mathbb{N}$ and $t_j = j\Delta t$, and $F[k]$, where $k \in \mathbb{N}$ and $\omega_k = \frac{2\pi k}{T}$, and we have defined $\Delta t = \frac{T}{N}$.

## Detailed Description

### *Statistical phase estimation and controlled time evolution*

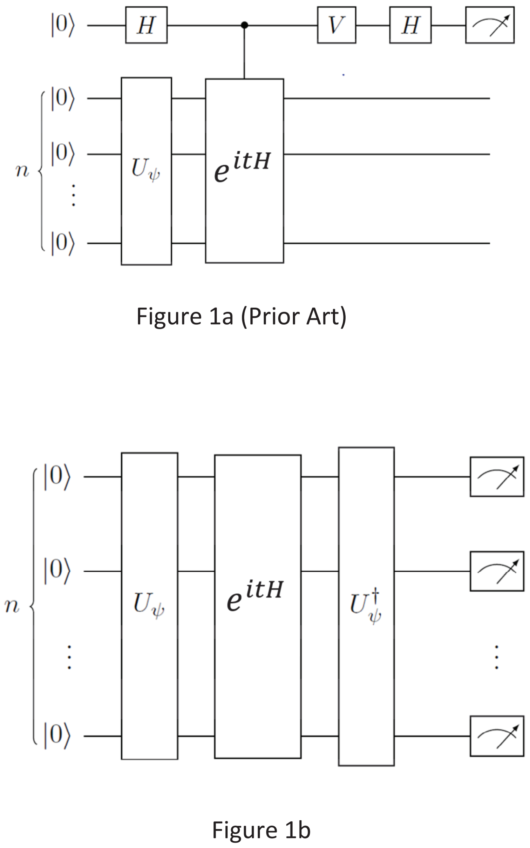

As noted above, previous disclosures may use the computationally demanding and resource-intensive method of controlled time evolution. An example of this is shown in Figure 1a. Here, $n + 1$ qubits are input in the $|0\rangle$ state. One of these qubits is transformed into the $|+\rangle$ state by a Hadamard gate, and the remaining $n$ qubits are transformed into an (n-qubit) input state, $|\psi\rangle$, by the action of a Unitary, $U_\psi$. Next a controlled time evolution operation, $exp(itH)$ is enacted on the n-qubit input state, $|\psi\rangle$), using the $|+\rangle$ state as a control qubit. A time series $f(t) = \langle\psi|e^{itH}|\psi\rangle$ including phase information for time $t$ is extracted by next operating on the control qubit with a gate V, a further Hadamard gate, and measuring. If the real part of the time series is of interest, V is an identity gate, while where the imaginary part of the time series is of interest, V is an $S^{\dagger}$ gate, where $S$ is the phase gate. By switching only the form of the V gate and repeating the measurement with each variant (often repeatedly each for improved accuracy), a time series can be extracted having both real and imaginary parts. This full complex signal includes phase information.

In short, statistical phase estimation reduces the required quantum circuit to two variants of a Hadamard test circuit, giving the real and imaginary parts of $f(t)$. This result has spurred a plethora of theoretical work [7, 8, 9], followed by experimental demonstrations [10, 11], which can be adapted to estimation of more general spectral quantities such as linear response of quantum systems [12], operator-resolved density of states [13] or Green functions [14], to give some examples.

As mentioned above, even if statistical phase-estimation brings an indisputable progress toward making quantum phase estimation more reachable for near-term devices, a single-qubit control time- evolution remains a highly non-trivial operation to implement on near-term devices. In practice, the complexity of controlled time evolution which can be enacted in quantum hardware is limited by various factors such as: the physical arrangement and connectivity of the qubits; the native gates available on the hardware; the noise tolerance/maximum gate depth of the hardware; and other stability and fidelity considerations. This means that in practice many controlled time evolutions may not be practical to implement on current or near-term hardware. Indeed, some may never be achievable, no matter the state of hardware. Its difficulty arises from the significant numbers of qubits and non-trivial-circuit-depth time-evolution operations that need to be controlled by one (or several) qubit(s), making it extremely sensitive to decoherence, but also significantly increasing the circuit depth of such controlled-time-evolution operations, which is undesirable as greater depths lead to more noise and decoherence. Therefore, the advantage of performing control-free quantum phase estimation is two-fold. It reduces the number of coherent operations that is required, and (independently) it reduces the circuit depth of the required operations.

Such a control-free operation, which can be carried out on current hardware, is shown in Figure 1b. Here, no control qubit is used. Instead, the $n$ input qubits are transformed into an (n-qubit) input state, $|\psi\rangle$, by the action of a Unitary, $U_{\psi}$, as before. Next a time evolution operation, $\exp(itH)$ is enacted on the n-qubit input state, $|\psi\rangle$, without control from another qubit. Finally, a second Unitary, $U_{\psi}^{\dagger}$, is applied to allow the measurement to correctly perform a measurement related to $\langle\psi|e^{itH}|\psi\rangle$. However, removing the control qubit means that we lose phase information, specifically, the measurement is in fact of $|f(t)|^2 = |\langle\psi|e^{itH}|\psi\rangle|^2$.

This is a substantially simpler circuit to execute, but the absence of phase information means that aspects such as the spectrum of the Hamiltonian cannot be extracted from the measured information. This document illustrates methods and apparatuses for retrieving the phase from $|f(t)|^2 = |\langle\psi|e^{itH}|\psi\rangle|^2$ by making use of additional input states, additional dynamics, and/or measurements to introduce redundancy, by which the phase can be extracted.

The classical post-processing in statistical phase-estimation is a standard signal processing problem: One is provided with a noisy version of some complex-valued signal $f(t)$, which is typically measured at integer multiples of some time increment $\Delta t$ (resulting in a discrete time-series $f[t]$ - we use square brackets to stress that the function takes discrete input). The goal is to approximately determine the Fourier transform $F(\omega)$ of the continuous signal, typically corresponding to some quantity of interest such as the spectrum of a Hamiltonian. This is a non-trivial task due to noise and to finite measurement time $T$. There exists extensive literature on this problem with applications to multiple areas of engineering, such as optical imaging, spectroscopy and audio processing [21, 22, 23, 24]. We note that in the statistical phase-estimation scenario, the largest measurement time $T$ is bounded by the largest circuit depth we can afford in the simulation of the controlled time evolution unitary $\exp(itH)$.

**Phase *retrieval***

A key non-trivial insight has been to understand the conditions under which this generalized and constrained problem has a unique solution that recovers all phases of the signals. If such an insight can be used to develop an algorithm that solves the problem in the ideal noiseless case, a non-trivial aspect is to design algorithms that work efficiently in realistic regimes of noise and have reasonable computational cost.

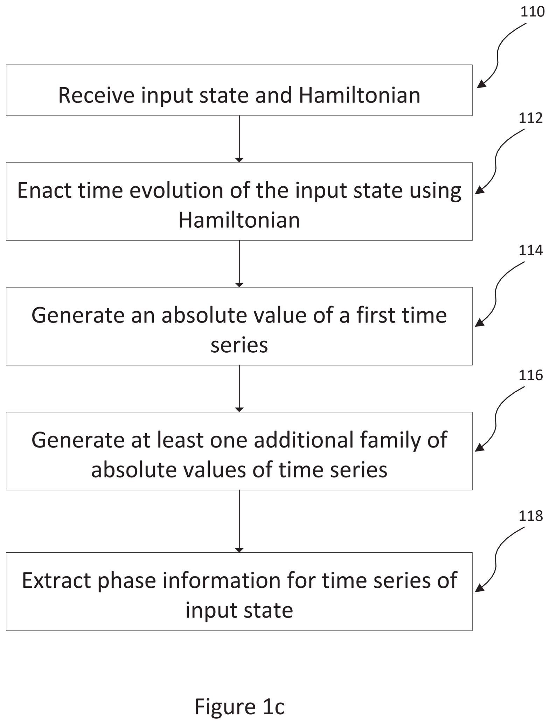

An example of a method for reconstructing phase information in a time series in line with the present disclosure is shown in Figure 1c. The time series in this example is derived from a time evolution of an input state acted on by a Hamiltonian, $H$. In this Figure, a flow chart illustrates the main steps in such a method.

At step 110, an input state $|\psi\rangle$ and Hamiltonian $H$ are provided. In addition, a total evolution time T may be provided at this stage. the total evolution time sets an upper limit on the time evolution, such that the time evolution will be measured/monitored discretely or continuously as a function of time $t$, for $t \in [0, T]$. At step 112, a time evolution of the input state is enacted, using the Hamiltonian. Note that typically, to get a time series, we construct a circuit to implement a specific time evolution (e.g. $t = j\Delta t$, where $\Delta t = T/N$ is and $j$ is an integer indexing which of the $N$ time steps is being implemented) under the Hamiltonian, $H$. This circuit is then run a plurality of times, so that statistical information on the state after that evolution time can be extracted. Once all $N$ time steps have been implemented in this way, a time series is formed by time ordering the measurements.

By virtue of enacting a time evolution in this manner, at step 114, an absolute value of a first time series, $|f_1|$ is generated. Moreover, at step 116, at least one additional family of absolute values of time series is also generated. Each absolute value time series may be a discrete time series, as discussed above, or it may be continuous. Optionally, each absolute value time series may be derived by measuring an output of a quantum computer having encoded thereon the operation of $H$ acting on the input state for times $t_j$, where $j \in 0, 1, ..., N$ and $t_j = j\Delta t$ - i.e. a discrete time series. A circuit for enacting the evolution after $t$ has elapsed can be set up and input states are input into that circuit so that the evolution of that state can be measured. In such cases, each time series may be extracted from a plurality of measurements of the output of the quantum computer for that time series. This allows real world quantum measurements to form the backbone of the data used in this method. This is important as it allows problems which are well-suited to enacting on quantum hardware (e.g. modelling of materials where electronic interactions are crucial to understanding their behaviour) to be performed on a natural hardware for doing so, while not allowing the limitations of the NISQ regime to hinder the work. As an alternative, a classical algorithm to simulate the time evolution on virtual qubits, although this is extremely resource-intensive and unlikely to be practical for many operations.

Whatever the form of the time series, we see that the at least one additional family of absolute value time series being included in the process introduces redundancy. Additional families of this type allow the reconstruction of phase (as set out in more detail below) by examining the effect of the evolution of interest in combination with the evolution of the redundant information provided by the additional families. As noted above, this avoids the need to implement the controlled time evolution operation which can be expensive and hard to implement on NISQ technology.

This redundancy is exploited in step 118, in which phase information is extracted for the time series corresponding to the input state $|\psi\rangle$. This allows reconstruction of our initial spectrum of interest, but also all auxiliary ones needed in the process. In particular, interferences or other redundancies in the measured data allow us to reconstruct the phase information from absolute value measurements.

It is important to note in the following explanations that the goal of phase-retrieval is solely to reconstruct the phases of the time series. Because a core use of phase information to use the time-series to later generate a quantum phase-estimation spectrum related to a given many-body problem, we will use the recovery of the spectrum as a good metric of performance of the phase-retrieval problem. In order to keep the analysis simple, we just implement a recovery relying on a (discrete or continuous) Fourier transform, (D)FT of the time-series, which being a unitary transform will preserve the distance between the ideal time-series and phase-retrieved counterpart. However, we note that the discrete Fourier transform is not necessarily the most accurate reconstruction of the spectrum of a Hamiltonian. Typically, classical post-processing techniques like the one developed in [5] can be used to obtain a more useful description of the spectrum.

We stress that phase retrieval algorithms recover the phases of the state-evolution time series, of which one learns just the absolute values in the scenario of control-free quantum phase estimation. In some portions of this work, for convenience, we compare the discrete Fourier transform of the retrieved time series to that of the true time series to judge the accuracy of the phase retrieval. However, we note that the discrete Fourier transform is not necessarily an accurate description of the spectrum of a Hamiltonian. Typically, classical post-processing techniques like the one developed in [5] can be used to obtain a more useful description of the spectrum. We note that since phase retrieval algorithms recover the phases of the state-evolution time series, their output could be processed with the post-processing algorithm from [5].

We note that despite the Hybrid Input-Output algorithm used in two-dimensional phase-retrieval working well in-practice, it is also possible to relax the problem to a convex optimization, which improves convergence guarantees, leads to better running times, improved scaling, and potentially better resilience to noise.

It is similarly important to point out that while in the ideal case recovery of the exact spectrum with perfect precision may be desirable, our objective is often to achieve a good approximation to this. Note that recovery of the exact spectrum of the Fermi-Hubbard model with perfect precision is not practical even for a fault-tolerant computer due to the exponential increase of spectral picks with the size of the system. A useful benchmark for this work is therefore to compare the phase-retrieval approaches to what could be achieved with a noiseless statistical phase-estimation algorithm that has access to controlled time evolution but with the same realistic constraints on the length of time it can simulate.

*Preliminaries*

In what follows we adopt the following continuous Fourier transform convention

$$F(\omega) = \mathcal{FT}[f] := \int_{-\infty}^{\infty} f(t)\, e^{(-i\omega t)dt}$$

$$f(t) = \mathcal{FT}^{-1}[F] := \tfrac{1}{2}\pi \int_{-\infty}^{\infty} F(\omega) e^{i\omega t} d\omega \tag{1}$$

and the discrete Fourier transform definition as

$$F[k] = \mathcal{DFT}[f] := \sum_{j=0}^{N-1} f[j] e^{-i2\pi \frac{kj}{N}}$$

$$f[j] = \mathcal{DFT}^{-1}[F] := \frac{1}{N} \sum_{k=0}^{N-1} F[k] e^{i2\pi \frac{kj}{N}} . \tag{2}$$

### *Real Fourier spectrum*

For a spectrum $F(\omega)$ to be a real function it needs to satisfy $F(\omega) = F^*(\omega)$ for all $\omega$. It is easy to check from the definitions above that this is only possible if

$$F(\omega) - F^*(\omega) = \int [f(t) - f^*(-t)] e^{i\omega t} dt = 0 \tag{3}$$

which holds if and only if $f(t) = f^*(-t)$.

### *Ideal statistical phase-estimation*

Let's consider a Hamiltonian H $= \Sigma_i E_i \Pi_i$, where $E_i$ is the $i$-th eigenvalue of the Hamiltonian and $\Pi_i$ is the projector into its eigenspace. In the case of a rank-1 projector we have $\Pi_i = |E_i\rangle\langle E_i|$. Its time evolution reads $e^{iHt} = \Sigma_i e^{iE_i t}\Pi_i$ and $\mathrm{Tr}[\rho\Pi_i]$ $= p_i$ is the amplitude of spectrum of $\rho$ at energy $E_i$, where the full spectrum of $\rho$ can be written in a compact form as $F(\omega) = 2\pi \Sigma_i p_i \delta(\omega - E_i)$, where the positivity of $p_i$ implies that of the spectrum $F(\omega)$. The Hadamard test in Figure 1a used in statistical phase-estimation allows the computation of the complex amplitude

$$f(t) = \mathrm{Tr}\big[\rho e^{iHt}\big] \tag{4}$$

for different times $t$, i.e., time series. It is easy to see that $f(t) = \mathrm{Tr}[\rho e^{iHt}] = f^*(-t)$ due to $\rho$ being Hermitian and the cyclic property of the trace, which proves that the spectrum is real. We will now show that it is also positive in the ideal case.

### *Positivity of the spectrum*

Applying the Fourier transform we obtain

$$\mathcal{FT}[f(t)] = \int \mathrm{Tr}\left[\rho \sum_i e^{iE_i t}\Pi_i\right] e^{-i\omega t} dt \tag{5}$$

which using linearity of the trace and some rearrangements leads to

$$\mathcal{FT}[f(t)] = \mathrm{Tr}[\rho\Pi_i]\int e^{-i(\omega - E_i)t} dt \tag{6}$$

which using the definition of the amplitudes of the spectrum and $\int e^{-i(\omega - E_i)t} dt = 2\pi\delta(\omega - E_i)$ leads to

$$\mathcal{FT}[f(t)] = 2\pi \sum_i p_i \delta(\omega - E_i) = F(\omega) . \tag{7}$$

In what follows we assume the Hamiltonian eigenvalues $E_i$ satisfy the condition $E_i \in [0, 1]$. Otherwise, assuming the Hamiltonian maximum and minimum eigenvalue energies, or providing decent upper and lower bounds, one can always re-scale the Hamiltonian accordingly.

### Time-window and resolution

In practice continuous signals $f(t)$ can only be probed inside a finite time window $[-T/2, T/2]$. Therefore, we can only observe the signal $\hat{f}(t) = f(t)\Pi_T(t)$, resulting from the multiplication of the original signal $f(t)$ and a time-window function

$$\Pi_T(t) = \begin{cases} 1, & |t| \leq T/2 \\ 0, & |t| > T/2 \end{cases} \tag{8}$$

Using the convolution theorem, relating the Fourier transform of a product to the convolution of its respective Fourier transforms ($\mathcal{FT}[A \cdot B] = \mathcal{FT}[A] * \mathcal{FT}[B]$) together with the Fourier transforms of the step function

$$\mathcal{FT}[\Pi_T(t)](\omega) = \frac{2\sin\left(\frac{T\omega}{2}\right)}{\omega} = T\text{sinc}(T\omega/2) \tag{9}$$

where we define $\mathcal{FT}[f(t)](\omega) = F(\omega)$, leads to

$$\mathcal{FT}[\hat{f}(t)](\omega) = F(\omega) * T\text{sinc}(T\omega/2). \tag{10}$$

We will use the notation $\hat{F}(\omega)$ for the convolution of $= F[\omega] * \text{sinc}(T\omega)$, resulting from the broadening of the spectral peaks due to the finite-size time window.

The convolution $\hat{F}[\omega] = F[\omega] * \text{sinc}(T\omega/2)$ generally leads to a broadening of the spectral peaks of $F(\omega)$. The main lobe width of $\text{sinc}(T\omega/2)$ being $4\pi/T$, it is easy to see that a time window of size $T$ can generally only resolve energy gaps of order $0(1/T)$. Therefore, to have full resolution of the spectrum one needs to do time-evolution up to T inverse proportional to the smallest gap between eigenvalues in the spectrum. The choice of T gives an upper-bound on how good the quality is of the recovered spectrum, i.e., even under ideal reconstruction conditions one can at best retrieve $= F[\omega] * \text{sinc}(T\omega)$. For Hamiltonians with gaps scaling beyond $1/\text{poly}(n)$, it is impossible to reconstruct the exact spectrum and retrieving the coarser version $\hat{F}[\omega]$ will be the only option.

### Alternative time-window

Remark that despite the ideal spectrum $F(\omega)$ being positive the convolution with a sinc function, resulting from the finite-size time window, may lead to a spectrum that has some slight negativities. In our 2D phase-retrieval algorithm this could be an issue for the convergence of our algorithm. We will therefore use a different time window that will ensure the target spectrum in our reconstruction being all positive. The simplest way to achieve this is via a triangle time-window, resulting from the convolution of two rectangular time-windows $\Pi_T(t)$, which has a squared sinc function as Fourier transform.

### Sampling and aliasing

In practice continuous signals $f(t)$ can only be probed inside a finite time window $[-T/2, T/2]$ and for a finite number $N$ of time values. We will assume these samples are evenly spaced with time $\Delta t$. Note that in this discussion we always choose an odd number of samples $N$ and set the spacing to be $\Delta t = T/N$. We have odd time values as $t = 0$ is also included and we are probing up to time $t_{N-1} = (N - 1)/N \times T/2$. The discretized sampling over a finite range is modelled via the multiplication of the initial signal $\hat{f}(t)$ by a Dirac comb

$$\text{III}_{\Delta t}(t) = \sum_{j \in \mathbb{Z}} \delta(t - j\Delta t) \tag{11}$$

leading to the new discretized and finite signal

$$g(t) = f(t)\Pi_T(t)\text{Ш}_{\Delta t}(t) \qquad (12)$$

Using the convolution theorem together with the Fourier transforms of Dirac comb

$$\mathcal{FT}[\text{Ш}_{\Delta t}(t)](\omega) = \frac{2\pi}{\Delta t}\text{Ш}_{\Delta t}(t)_{2\pi/\Delta t}(\omega) = \frac{2\pi}{\Delta t}\sum_{k \in \mathbb{Z}} \delta\left(\omega - k\frac{2\pi}{\Delta t}\right) \qquad (13)$$

together with equation (10) we obtain

$$G(\omega) := \mathcal{FT}[g(t)](\omega) = 2\pi\frac{T}{\Delta t}\sum_{k \in \mathbb{Z}} F(\omega) * \text{sinc}\left(\frac{T\omega}{2}\right) * \delta\left(\omega - k\frac{2\pi}{\Delta t}\right). \qquad (14)$$

One can simplify the previous equation using the properties of delta functions and their convolutions

$$\mathcal{FT}[g(t)](\omega) = 2\pi N \sum_{k \in \mathbb{Z}} \hat{F}\left(\omega - \frac{k}{\Delta t}\right) \qquad (15)$$

and using the definition $\hat{F}(\omega) = F(\omega) * T\text{sinc}\left(\frac{T\omega}{2}\right)$,

$$G(\omega) = \frac{2\pi}{\Delta t}\sum_{k \in \mathbb{Z}} \hat{F}\left(\omega - k\frac{2\pi}{\Delta t}\right). \qquad (16)$$

Due to the discrete-time nature of the sampling, the spectrum $\mathcal{FT}[g(t)](\omega)$ becomes periodic function of period $\frac{2\pi}{\Delta t}$. The celebrated Nyquist-Shannon theorem states that sampling at twice the bandwidth of the signal guarantees a unique recovery of the continuous function. If one samples at a lower rate, the weights of higher frequency lines are shifted to the lower part of the spectrum, an effect called aliasing. In an ideal scenario (and unrealistic) scenario of an infinite time-window and the spectrum of $H$ having largest absolute value frequency $\omega_{max} = \max\{|\omega|\}$, it would be sufficient to guarantee the condition $2\Delta t \cdot \omega_{max} < 1$ to have perfect reconstruction and zero aliasing. In practice, depending on the choice of time-window and the finite value of T we always observe some amount of aliasing, but a good choice of sampling rate, time-window shape and having access to large enough T will help make aliasing small or even negligible.

***Connection to DFT***

We are now interested in connecting this to the discrete Fourier transform. We *choose* as set of discrete frequencies $\omega_k = \frac{2\pi k}{T}$, where $k = 0, 1, \ldots, N-1$ and define a length $N$ vector $F[k] := \mathcal{FT}[g(t)](\omega_k) = G(\omega_k)$, whose entries are samples of the continuous time Fourier transform of $g(t) = f(t)\Pi_T(t)\text{Ш}_{\Delta t}(t)$ at points $\omega_k$. We begin by writing the Fourier transform of our sampled function as

$$F[k] := \mathcal{FT}[g(t)](\omega_k) = \int_{-\infty}^{\infty} f(t)\Pi_T(t)\text{Ш}_{\Delta t}e^{-i\omega t}dt \qquad (17)$$

where using the definition of the Dirac comb in equation (11) and $\int f(t)\delta(x-a)dt = f(a)$ we obtain

$$F[k] = \sum_{j=-\infty}^{\infty} f(j\Delta t) \cdot \Pi(j\Delta t)e^{-i\omega_k j\Delta t}. \qquad (18)$$

which using the discretisation notation $\hat{f}[j] := f(j\Delta t)\Pi(j\Delta t)$ and the fact that $\omega_k j\Delta t = \frac{2\pi jk}{N}$ leads to

$$F[k] = \sum_{j=-\infty}^{\infty} \hat{f}[j]e^{-\frac{2i\pi kj}{N}}. \tag{19}$$

The connection between the DFT and samples of the continuous functions at $\omega_k$ and $t_j = j\Delta t$ is almost complete. We have obtained the conventional DFT frequencies, however we have an infinite sum in the above expression.

We deal with this as follows. One can replace the sum over integers by the following double sum

$$F[k] = \sum_{j'\in\mathbb{Z}} \sum_{j=0}^{N-1} \hat{f}[j - j'N]\, e^{-i\left(\frac{2\pi kj}{N}+2\pi j'k\right)} = \sum_{j=0}^{N-1} \left(\sum_{j'\in\mathbb{Z}} \hat{f}[j - j'N]\right) e^{-\frac{i2\pi kj}{N}} \tag{20}$$

then using the definition

$$f[j] := \sum_{j'\in\mathbb{Z}} \hat{f}[j - j'N] \tag{21}$$

leads to

$$F[k] = \sum_{j=0}^{N-1} f[j]e^{-\frac{i2\pi kj}{N}}. \tag{22}$$

This shows that $F[k]$ is actually the DFT of $f[j]$, which is an N-periodic version of the windowed samples $\hat{f}[j]$.

Notice that $f[j]$ is a periodic sequence where the values within the window are repeated with period $N$. The previous exposition provides an interpretation of the discretized time-series linked to a discrete spectrum via the DFT, in a similar fashion as occurred for their continuous counterparts. Provided we properly choose $T$ and $\Delta t$ to avoid aliasing and limit leakage, we can safely work on a discrete setting using the DFT to move between the sampled time-series and a discretized version of the spectrum.

### Fermi-Hubbard and its simulation

We will be interested in instances of the Fermi-Hubbard model over a square lattice graph G, where $V$ is the set of vertices and E the edges, where each lattice site, i.e., vertex, has two spin modes $\sigma \in \{\uparrow, \downarrow\}$. The Hamiltonian reads

$$H = -\tau \sum_{\langle i,j\rangle\in E,\sigma} \left(a_{i\sigma}^{\dagger}a_{j\sigma} + a_{j\sigma}^{\dagger}a_{i\sigma}\right) + U \sum_{v\in V} n_{v\uparrow}n_{v\downarrow} \tag{23}$$

where the first term of the Hamiltonian consists of hopping terms among modes of same spin while the second sum corresponds to interactions between particles of opposite spin at the same lattice site. This model is of great interest, since despite its simple form it demonstrates interesting phenomena found in more complex materials and molecular Hamiltonians [29, 30, 31]. Throughout this work we will take $\tau = 1$ and $U = 4$, which is an intermediate coupling regime where the model exhibits non-trivial behaviour [31]. When referring to states, we note that one embodiment may restrict to qubit states, which are related to the fermionic states by a Jordan-Wigner transformation, wherein the standard basis qubit state corresponds to a position-spin-basis Slater determinant.

### Time-evolution simulation

In order to compute time-series of the form $|\langle\psi|e^{iHt}|\phi\rangle|^2$ (forming the input to our phase retrieval algorithms) and time-series $\langle\psi|e^{iHt}|\phi\rangle$ (which we use to compare to our phase-retrieved solution), one needs to simulate the time-evolution of the Fermi-Hubbard model $e^{iHt}$ We will be using numerical simulations to obtain the time-series, by brute-force calculation of $e^{iHt_j}$ with $t_j = j\Delta t$. Then, for some states $|\psi\rangle$ and $|\phi\rangle$, we simply evaluate the expressions $f[j] = \langle\psi|e^{ij\Delta tH}|\phi\rangle$ and similarly for $|f[j]|$.

Due to the current limitation on near-term quantum computers, we will be interested to explore states that have shallow preparation circuits. For our current work, we have restricted to examples of at most a single layer of single-qubit or two-qubit gates, as discussed elsewhere.

*Sampling Noise*

A crucial aspect of the practical implementation of phase-retrieval algorithms is their resilience to noise. We model the sampling noise on time series $|\langle\phi|e^{ij\Delta tH}|\psi\rangle|^2$ (for some $|\psi\rangle$ and $|\phi\rangle$) by sampling from a binomial random variable. In an experimental setting, one can estimate $\left|\left\langle 0^n\left|U_\phi^\dagger \exp(ij\Delta tH)\, U_\psi\right|0^n\right\rangle\right|^2$ by repeatedly running the circuit depicted in Figure 1b, (where $U_\psi$ and $U_\phi$ are the state preparation unitaries such that $|\psi\rangle = U_\psi|0\rangle$ and $|\phi\rangle = U_\phi|0\rangle$), which is equivalent to acting with $U_\phi^\dagger \exp(ij\Delta tH)\, U_\psi$ on $|0^n\rangle$ and simply performing standard-basis projective measurements on each of the $n$ qubits. The estimate is then given by the fraction of the number of times that output $|0\rangle^{\otimes n}$ is obtained and the total number of circuit executions M.

Therefore, we model the sampling noise by estimating $|\langle\phi|e^{ij\Delta tH}|\psi\rangle|^2$ by the number of successes $M_0$ (divided by M) obtained in a binomial random variable realization with success probability $|\langle\phi|e^{ij\Delta tH}|\psi\rangle|^2$ and M trials, which is what a user would implement in practice.

*Trivial Ambiguities*

We call operations that leave the absolute value of the time series unchanged "trivial ambiguities". We can ignore trivial ambiguities and therefore match the recovered signal to the true time series $f \in \mathbb{C}^N$ up to: (1) a global phase $e^{i\theta}f$; (2) linear phase shifts $\{e^{-i2\pi jm/N}\,f[j]\}$; (3) complex conjugation f*, or combinations thereof. These respectively induce the following operations on the DFT of $f$: (1) multiplication by a global phase; (2) translation by m; (2 combined with 3) reflection and complex conjugation. As explained below, we can always ensure that the true signal is real and so eliminate one class of trivial ambiguities. Translational ambiguities correspond to a shift in the energies, but provided that the support of the spectrum is bounded, we can ensure that this translation does not lead to confusion in the ordering of the recovered peaks. The shape of the spectrum will be correct up to a constant shift, and can always be bounded by normalising the Hamiltonian as $H/\wedge$ where $\|H\| \leq \Lambda$. Provided this is established the resulting shifts simply correspond to shifting the definition of the Hamiltonian via the identity. The final trivial ambiguity is a reflection of the spectrum, making it unclear whether the spectrum corresponds to $\pm H$. However, neither of these ambiguities alter the physics of the Hamiltonian under consideration and so we do not discuss them further.

*Vectorial* **Phase** *Retrieval*

In the setting of control-free quantum phase estimation, we take $f_1[j] = \langle\Phi|\exp(ijH\Delta t)|\Phi\rangle$ and $f_2[j] = \langle\Phi|\exp(ijH\Delta t)|\psi\rangle$ (for some state $|\psi\rangle$ different from $|\Phi\rangle$), so that $f_1[j] + f_2[j] = \langle\Phi|\exp(ijH\Delta t)(|\Phi\rangle + |\psi\rangle)$ and $f_1[j] + if_2[j] = \langle\Phi|\exp(ijH\Delta t)(|\Phi\rangle + i|\psi\rangle)$. Remark that in our scenario we are interested in retrieving the phases of the time series $f_1$, which can then - for instance - be used to obtain $F_1$. Two important factors that lead to one only obtaining an approximation of the correct assignment of phases $\{x_j\}_{j=0}^{N-1}$ in a practical setting are (1) the noise on the learned signals $|f_1|$ and $|f_2|$ and (2) the fact that $F_1$ and $F_2$ do not only have support inside some finite interval. This second factor has two causes. The first cause is spectral leakage of $F_1$ and $F_2$ away from the eigenvalues of $H$. The second cause is more subtle and comes up in the usual scenario of the number of eigenvalues of $H$ supported on $|\Phi\rangle$ being much larger than $N$, the size of the time-series. The state $|\Phi\rangle$ and distribution of supported eigenvalues might be such that $F_1$ and $F_2$ decay slowly near either end of the spectrum. We find that to ensure that the approximate solution obtained through vectorial phase retrieval is accurate, one must ensure that the scenario is such that $F_1$ and $F_2$ have approximately well-defined support. This can generally be done by for instance increasing the total evolution time (at the expense of deeper circuits implementing the time evolution) and/or making informed choices for the reference states or $|\Phi\rangle$ (when the problem we aim to solve allows for some freedom in the choice of the input state). Our numerical investigations suggest that vectorial phase retrieval performs relatively well even when $F_1$ and $F_2$ do not have well-defined support.

*Vectorial phase retrieval* **as** *an optimization problem*

The key aspect behind the vectorial phase-retrieval technique is the realization that the phases of $f_1[j]$ and $f_2[j]$ are related by the relation $e^{\theta_1}[j] = e^{\theta_2[j]}G[j]$, where

$$G[j] := \frac{|f_1[j] + f_2[j]|^2 + i|f_1[j] + if_2[j]|^2 - (1+i)(|f_1[j]|^2 + |f_2[j]|^2)}{2|f_1[j]||f_2[j]|} \qquad (24)$$

is fully accessible from the measurement data. This allows us to define an optimization problem over the variable $y \in \mathbb{C}^{2N}$ with unit absolute value entries, encoding the estimates of the phases $\{e^{\theta_1[j]}, e^{\theta_2[j]}\}$. To be clear, a cost function is applied to the first, second, third, and fourth absolute value time series (i.e. to $f_1[j]$ and $f_2[j]$ and their superpositions. Since the relative phase information is embedded in the first to fourth absolute value time series, cost functions are a clear and well-studied approach to identifying the optimum phase assignment from the measured information. The cost function to be optimized consists of two contributions. The first contribution quantifies how close we are from satisfying the relative phase constraints $e^{\theta_1[j]} = e^{\theta_2[j]}G[j]$ and reads

$$Q_{\text{interference}}(\boldsymbol{y}) := \sum_{j=0}^{N-1} \left| y_j - y_{N+j}G[j] \right|^2. \qquad (25)$$

As will be argued below (and in [19]), imposing these phase constraints is not sufficient for (approximate) recovery of the phases in general. Therefore, the cost function also contains a second contribution. This additional contribution quantifies how close we are from $F_1$ and $F_2$ being zero outside the expected support $\{0, 1, ..., \sigma\}$ (for some integer $\sigma \in \{0, 1, ..., N-1\}$). In an ideal noiseless scenario, this contribution is minimized if $F_1$ and $F_2$ are zero on the domain $\{\sigma + 1, \sigma + 2, ..., N-1\}$. In reality, one of the factors making this constraint not fully satisfied is the inevitable spectral leakage of the discrete Fourier transform, that will lead to $F_1$ and $F_2$ having support outside of the supported frequency range. Nonetheless, as we will demonstrate, the approach still recovers the phases relatively accurately provided that $|F_1[k]|$ and $|F_2[k]|$ decay quickly for $k > \sigma$. To impose that the solution (approximately) has the correct support size, we define a family of support cost functions, one for each $s \in \{0, 1, ..., N-1\}$ (since a priori the true support size $\sigma$ might be unknown, or not even well-defined), defined as

$$Q_{\text{support}}^{(s)}(\boldsymbol{y}) = \sum_{k=s}^{N-1} \left| \sum_{j=0}^{N-1} |f_1[j]| y_j \exp\left[\frac{-i2\pi jk}{N}\right] \right|^2 + \sum_{k=s}^{N-1} \left| \sum_{j=0}^{N-1} |f_2[j]| y_{N+j} \exp\left[\frac{-i2\pi jk}{N}\right] \right|^2 \qquad (26)$$

quantifying how far the spectrum is far (close) from being zero on the region $\{s, s+1, ..., N-1\}$.

As we explain in more detail below, one can define a family of total cost functions, combining the support component and the interference component, which can be expressed as a non-negative quadratic form

$$Q^{(s)}(\boldsymbol{y}) := Q_{\text{support}}^{(s)}(\boldsymbol{y}) + Q_{\text{interference}}(\boldsymbol{y}) = \boldsymbol{y}^\dagger A_s^\dagger A_s \boldsymbol{y} \qquad (27)$$

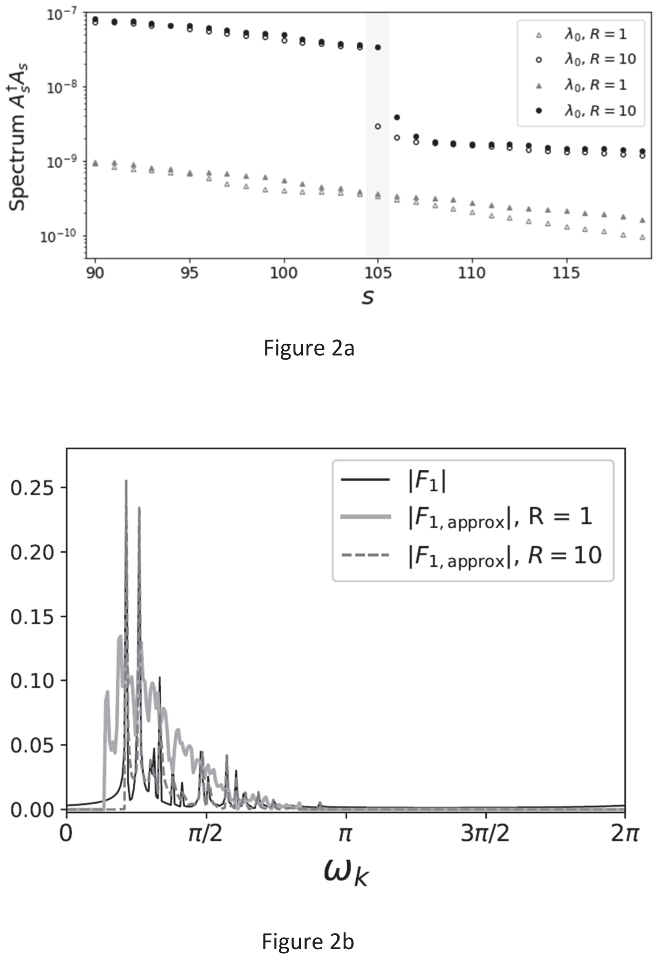

where the entries of $A_s \in \mathbb{C}^{(2(N-s)+N) \times 2N}$ are detailed below. Remark that $Q^{(s)}(y)$ is equal to zero for all $s \in \{\sigma + 1, \sigma + 2, ..., N-1\}$ if $\boldsymbol{y}$ is the unique solution of the ideal noiseless vectorial phase-retrieval problem (i.e., for which $|F_1[k]|$ and $|F_2[k]|$ are indeed equal to zero for $k > \sigma$). When $|F_1[k]|$ and $|F_2[k]|$ are not exactly equal to zero for $k > \tau$, the minimum does not equal zero for any $s \in \{0, 1, ..., N-1\}$. Typically, however, it will decay quickly as a function of s around the optimal choice of s. As presented in Figures 2a and 2b, finding the solution to the optimization problems at different values of s typically allows one to obtain an estimate of an approximate $\sigma$, which in turn can be used to approximately retrieve the phases of $f_1$.

In any case, the optimal assignment of phases $\boldsymbol{y}$ for a given s can be found by minimizing the function $Q^{(s)}(\boldsymbol{y})$ over all assignments of phases $\boldsymbol{y}$, which is not a convex optimization problem due to the constraints on the entries of $\boldsymbol{y}$. To approximate the optimal solution in a practical setting, one will have to relax the non-convex optimization over phase assignments to a convex one. The relaxation that we will employ is the problem of optimizing $Q^{(s)}(\boldsymbol{y})$ over all vectors $\boldsymbol{y} \in \mathbb{C}^{2N}$ for which $\|\boldsymbol{y}\|_2 \leq \sqrt{2N}$, instead of optimization over y whose entries have unit absolute value. It is easy to see that the optimal solution satisfies $\|\boldsymbol{y}\|_2 = \sqrt{2N}$, mapping the problem to one of determining the lowest eigenvalue of a matrix.

Empirical investigation, illustrated in Figures 2a and 2b, has shown us that in order to make the phase-retrieval more resilient to noise, it is convenient to generalize the former problem from one to R *secondary* signals and their respective interference with the target signal. This leads to an equivalent expression for the cost function, now expressed in terms of $\tilde{A}_s \in \mathbb{C}^{((R+1)(N-s)+RN) \times (R+1)N}$ (where $\tilde{\phantom{x}}$ is used to stress that noisy input data is used in the definition of $\tilde{A}_s$)

and $\boldsymbol{y}_R \in \mathbb{C}^{(R+1)}$. The vector $\boldsymbol{y}_R$ has $(R + 1)N$ entries, each being complex and having magnitude 1 (since they each represent a phase), and stores information on all $(R + 1)N$ entries for the phases of the time series. Employing an equivalent relaxation as the one just discussed, we optimize over all vectors $\boldsymbol{y} \in \mathbb{C}^{(R+1)N}$ for which $\|y\|_2 = \sqrt{(R+1)N}$, corresponding to the following eigenvalue problem.

$$\min_{\boldsymbol{y} \in \mathbb{C}^{2N} \; s.t. \; \|\boldsymbol{y}\|_2 = \sqrt{(R+1)N}} \tilde{Q}^{(s)}(\boldsymbol{y}) = (R + 1)N\lambda_{\min}\left(\tilde{A}_s^\dagger \tilde{A}_s\right). \tag{28}$$

Our numerical investigations suggest that for relatively small noise magnitudes, the vector **y** obtained by solving equation (28) will generally be close to the ideal solution. We do note that the entries of the optimal vector $y$ are not necessarily phases (unit absolute value), nonetheless, we approximate $\{f_1[j]\}_{j=0}^{N-1}$ by $\{|f_1[j]|y_j\}_{j=0}^{N-1})$ because our numerical investigations suggest that this gives a more accurate reconstruction compared to the solution that is obtained when rounding to a vector whose entries are phases.

With reference to Figure 1c, the process of performing vectorized phase retrieval can be thought of as including the time series of at least one additional input state time-evolved under the same Hamiltonian as well as the time series derived from the time evolution of the interference of the at least one additional input state with the input state of interest, so that the redundant information encapsulated in these additional time series can be used to reconstruct the phase information.

### *Implementation*

To demonstrate the technique, we apply the vectorial phase retrieval framework to the state evolution signals generated by a $(1 \times 5)$ spinful Fermi-Hubbard Hamiltonian with $|U/\tau| = 4$. The target initial state is taken to be a (standard-basis) state at half filling. We consider a scenario in which the number of secondary states is one (i.e., R = 1), and a scenario in which we include ten secondary states (i.e., $R = 10$). The secondary states are created as follows. Take the target state and select at most $p < n/2$ (distinct) pairs of qubits that are unequally occupied, then flip the states on these qubits or states. Note that the superpositions of the target state and a given secondary state can be produced using a similar circuit to those generating a multi-qubit GHZ state followed by local $X$ gates, which requires $O(\log(n))$ layers of two-qubit gates. We obtain the time series at $N = 300$ points in time (with $N_{\text{samples}} = 10^6$ shots per point in time), with a total evolution time of $T = 2\|H\|$ (corresponding to a time increment $\Delta t = 0.133$).

Figure 2a depicts the smallest two eigenvalues of the $\tilde{A}_s^\dagger \tilde{A}_s$ matrix, whose smallest eigenvector is used as an estimate for the assignment of phases of the time series entries in both scenarios. Our investigations suggest that:

1. The two smallest eigenvalues are a proxy for the quality of the retrieval of phases. That is, the smaller the smallest eigenvalue, the smaller the value of the two residuals of equations (25) and (26).
2. A large gap opening between the two smallest eigenvalues suggests a larger overlap between the smallest eigenvector and the true assignment of phases. This being motivated by the fact that in the ideal noiseless case the solution is unique.

Typically, the smallest eigenvalue of $\tilde{A}_s^\dagger \tilde{A}_s$ drops rapidly as a function of $s$ at a given value s* (s* = 105 in Figure 2a), which our numerical investigations suggest is an indicator of an accurate retrieval of phases around that value of s*. Note that both features described above are present in the $R = 10$ scenario, leading to a good reconstruction, but not in the $R = 1$ scenario, which does not provide an accurate reconstruction, as one can see in Figure 2b (showing the associated estimate of the spectrum $|F_1|$ at s = 105).

### *Vectorial phase retrieval with a single interference signal*

Let us first discuss under which circumstances the (single-interference-signal) VPR problem has a unique solution. This understanding of the uniqueness of the VPR problem was used in [19] to develop a method for obtaining estimates of the phases of the time series $\boldsymbol{f} \in \mathbb{C}^N$.

In the VPR framework, the (non-trivial) ambiguity of the one-dimensional phase retrieval problem is reduced by not only obtaining absolute value measurements $\{|f_1[j]|\}$ of a time series $\boldsymbol{f}_1 \in \mathbb{C}^N$, but also measurements $\{|f_2[j]|\}$ of some other time series $\boldsymbol{f}_2 \in \mathbb{C}^N$, and - crucially - of the absolute values of the time series corresponding to sums of $\boldsymbol{f}_1$ and $\boldsymbol{f}_2$. It was shown in [30] that under some relatively mild conditions on the time series $\boldsymbol{f}_1$ and $\boldsymbol{f}_2$, and assuming exact access to the aforementioned absolute value measurements, the resulting phase retrieval problem has a unique solution. The problem of *finding* this unique solution efficiently was addressed in [19].

Let us define the vectorial phase retrieval problem more exactly. Afterwards, we will discuss under which circumstances the problem has a unique solution, and how one can in practice obtain an accurate estimate of the full time series using the vectorial phase retrieval algorithm [19].

**Problem 1.** [Vectorial phase retrieval (VPR)] Given measurements of the absolute values

$$|f_1[j]|^2, |f_2[j]|^2, |f_3[j]|^2 := |f_1[j] + f_2[j]|^2, |f_4[j]|^2 := |f_1[j] + if_2[j]|^2 \qquad (29)$$

at times $j = 0, 1, ..., N - 1$, determine

$$F_1[k] := \sum_{j=0}^{N-1} f_1[j] e^{\frac{-i2\pi jk}{N}}, \qquad (30)$$

$$F_2[k] := \sum_{j=0}^{N-1} f_2[j] e^{\frac{-i2\pi jk}{N}} \qquad (31)$$

at $k = 0, 1, ..., N - 1$.

In the setting of control-free quantum phase estimation, the input signals are of the form

$$f_1[j] = \langle \Phi | \exp(i\Delta t Hj) | \Phi \rangle \qquad (32)$$

$$f_2[j] = \langle \Phi | \exp(i\Delta t Hj) | \psi \rangle \qquad (33)$$

$$f_3[j] = \langle \Phi | \exp(i\Delta t Hj) (|\Phi\rangle + |\psi\rangle) \qquad (34)$$

$$f_4[j] = \langle \Phi | \exp(i\Delta t Hj) (|\Phi\rangle + i|\psi\rangle) \qquad (35)$$

for some states $|\phi\rangle$ and $|\psi\rangle$. We will come back to which choices of $|\phi\rangle$ and $|\psi\rangle$ are appropriate, but we note that preparing their superposition ideally should not require execution of very deep circuits.

***The* noiseless *scenario***

Let us first address the setting in which one has access to the noiseless absolute value measurements as input to the VPR problem. At the core of the vectorial phase retrieval algorithm is the understanding of when Problem 1 has a unique solution. To illustrate when uniqueness is guaranteed, let us introduce the following notions.

- Two signals $F_1 \in \mathbb{C}^N$ and $F_2 \in \mathbb{C}^N$ are *spectrally independent* if $P_1(z) := \sum_{k=0}^{N-1} F_1[k] z^k$ (with $z \in \mathbb{C}$) and $P_2(z) := \sum_{k=0}^{N-1} F_2[k] z^k$ (with $z \in \mathbb{C}$) have no common roots in the complex plane.

- Two signals $F_1 \in \mathbb{C}^N$ and $F_2 \in \mathbb{C}^N$ have *well-defined support* if they are such that there exist $k_{min} < k_{max} \in \{0, 1, ..., N - 1\}$ such that $k_{max} - k_{min} = \sigma \leq \lfloor N/2 \rfloor$ and $|F_1[k]|, |F_2[k]| \neq 0$ for $k_{min} \leq k \leq k_{max}$ and $|F_1[k]| = |F_2[k]| = 0$ for $k < k_{min}$ and $k > k_{max}$. In other words, they have well-defined support if they are non-zero inside of some interval $(k_{min}, ..., k_{max})$ (of length $\sigma \leq \lfloor N/2 \rfloor$), and zero outside of that interval.

The latter notion in particular will play a central role in the vectorial phase retrieval algorithm, and in our application of the algorithm to spectral estimation of Hamiltonians. The uniqueness of the solution of the vectorial phase retrieval problem is related to these notions in the following way.

- The vectorial phase retrieval problem has a unique solution if and only if $F_1$ and $F_2$ are spectrally independent and have well-defined support [19].

See [19] for a proof of this statement. Note that Problem 1 has trivial ambiguities. The trivial ambiguities correspond in general to all signals related to $(f_1, f_2)$ by

$$\{\exp(i\alpha)\, F_1[k], \exp(i\alpha)\, F_2[k]\}_{k=0}^{N-1} \tag{36}$$

$$\{F_1[k-k_0], F_2[k-k_0]\}_{k=0}^{N-1} \tag{37}$$

$$\{F_1^*[-k], F_2^*[-k]\}_{k=0}^{N-1} \tag{38}$$

or combinations thereof (here $\alpha \in \mathbb{R}$ and $k_0 \in \mathbb{Z}$). Solutions to the vectorial phase retrieval problem will only ever be unique up to these trivial ambiguities.

The vectorial phase retrieval algorithm (presented in [19]) is based on the fact that the unique solution to Problem 1 can be obtained by solving a convex optimization problem in the ideal noiseless scenario. The optimization procedure optimizes over assignments of phases to the time series measurements $\{|f_1[j]|\}$ and $\{|f_2[j]|\}$ such that they are consistent with the interference measurements and such that $\boldsymbol{F}_1$ and $\boldsymbol{F}_2$ have the right support size.

The input to the VPR algorithm consists of $|f_1[j]|^2$, $|f_2[j]|^2$, $|f_3[j]|^2$ and $|f_4[j]|^2$ (at $j = 0,1,\dots,N-1$), and of an estimate s of the support size $\sigma$ of $\boldsymbol{F}_1$ and $\boldsymbol{F}_2$. Its output is given by a vector $y \in \mathbb{C}^{2N}$, whose entries are the estimates of the phases of $f_1[j]$ and $f_2[j]$ at $j = 0,1,\dots,N-1$. The algorithm is an optimization procedure that minimizes a cost function over possible assignments of phases $y \in \mathbb{C}^{2N}$. Let us denote the vector containing the correct phases of $\boldsymbol{f}_1$ and $\boldsymbol{f}_2$ at $j = 0,1,\dots,N-1$ by x. The cost function has two components; one component ensures that the assignment of phases is consistent with the interference measurements, and the other component ensures that $\boldsymbol{F}_1$ and $\boldsymbol{F}_2$ are indeed zero outside of the interval of size s (which is an estimate of $\sigma$). These components are denoted by $Q_{\text{support}}^{(s)}(y)$ and $Q_{\text{interference}}(y)$, respectively. Note that due to the trivial ambiguities, minimization of $|F_1[k]|$ and $|F_2[k]|$ outside of their supported interval can be realized by simply minimizing $|F_1[k]|$ and $|F_2[k]|$ at $k = s, s + 1, \dots, N - 1$ without loss of generality.

The expression for the support component of the cost function is as follows.

$$Q_{\text{support}}^{(s)}(y) := \sum_{k=s}^{N-1} |F_1[k]|^2 + \sum_{k=s}^{N-1} |F_2[k]|^2$$

$$= \sum_{k=s}^{N-1} \left| \sum_{j=0}^{N-1} |f_1[j]|\, y_j\, e^{\frac{-i2\pi jk}{N}} \right|^2 + \sum_{k=s}^{N-1} \left| \sum_{j=0}^{N-1} |f_2[j]|\, y_{N+j}\, e^{\frac{-i2\pi jk}{N}} \right|^2 \tag{39}$$

The expression for the interference component of the cost function is a slightly more involved. Because of the following relations derived from the definitions of $\boldsymbol{f}_3$ and $\boldsymbol{f}_4$ and involving the correct phases $\boldsymbol{x}$,

$$|f_3[j]|^2 = |f_1[j] + f_2[j]|^2 = |f_1[j]|^2 + |f_2[j]|^2 + 2|f_1[j]||f_2[j]|\text{Re}(x_j x_{N+j}^*), \tag{40}$$

$$|f_4[j]|^2 = |f_1[j] + if_2[j]|^2 = |f_1[j]|^2 + |f_2[j]|^2 + 2|f_1[j]||f_2[j]|\text{Im}(x_j x_{N+j}^*) \tag{41}$$

we have that

$$x_j = x_{N+j} G[j], \quad G[j] := \frac{|f_3[j]|^2 + i|f_4[j]|^2 - (1+i)(|f_1[j]|^2 + |f_2[j]|^2)}{2|f_1[j]||f_2[j]|} \tag{42}$$

We note that $|G[j]| = 1$ for $j = 0,1,\dots,N-1$. The second component of the cost function is expressed as follows, and is equal to zero if $\boldsymbol{y} = \boldsymbol{x}$.

$$Q_{\text{interference}}(y) := \sum_{j=0}^{N-1} \left| y_j - y_{N+j} G[j] \right|^2. \tag{43}$$

The total cost function is defined simply as the sum of the support component and the interference component.

We note that this cost function is non-negative by definition:

$$Q^{(s)}(\boldsymbol{y}) := Q^{(s)}_{\text{support}}(\boldsymbol{y}) + Q_{\text{interference}}(\boldsymbol{y}). \qquad (44)$$

Importantly, equation (44) can be expressed as

$$Q^{(s)}(\boldsymbol{y}) := \boldsymbol{y}^{\dagger} A_s^{\dagger} A_s \boldsymbol{y} \qquad (45)$$

where $A_s \in \mathbb{C}^{(2(N-s)+N)\times 2N}$ has entries

$$(A_s)_{p,q} = \begin{cases} |f_1[q]| \exp\left(\dfrac{-i2\pi q(s+p)}{N}\right), & \text{if } q < N, \quad p < N-s, \\[2mm] |f_2[q]| \exp\left(\dfrac{-i2\pi(q-N)(s+p-(N-s))}{N}\right), & \text{if } N \le q < 2N, (N-s) \le p < 2(N-s), \\[2mm] 1, & \text{if } q < N, p = q + 2(N-s), \\[1mm] -G[q-N], & \text{if } N \le q < 2N, p = q - N + 2(N-s), \\[1mm] 0, & \text{otherwise,} \end{cases}$$

$$(46)$$

with $p = 0,1, \dots ,2((N - s) + N) - 1$ and $q = 0,1, \dots ,2N - 1$.

If there exists an assignment of phases $\boldsymbol{y}$ such that $Q^{(s)}(\boldsymbol{y}) = 0$, then we are guaranteed that for that assignment $F_1[k] = F_2[k] = 0$ at $k = s, s+1, \dots, N-1$, and $y_j = y_{N+j}G[j]$ at $j = 0,1, \dots, N-1$. The correct assignment of phases $\boldsymbol{x}$ is a minimizer of the cost function $Q^{(\sigma)}(\boldsymbol{y})$. In particular, since the correct assignment of phases attains zero cost on both cost functions (by definition), we have that

$$\phi_\sigma^{\text{noiseless}} := \min_{\substack{\boldsymbol{y}\in\mathbb{C}^{2N} \text{ s.t.} \\ |y_0|=|y_1|=\cdots=|y_{N-1}|=1}} Q^{(\sigma)}(\boldsymbol{y}) = Q^{(\sigma)}(\boldsymbol{x}) = 0 \qquad (47)$$

where the optimization is over all vectors $\boldsymbol{y} \in \mathbb{C}^{2N}$ whose entries are phase factors.

We are not, however, a priori guaranteed that $\boldsymbol{x}$ is the unique minimizer of $Q^{(\sigma)}(\boldsymbol{y})$, and therefore that solving equation (47) provides the correct assignment of phases $\boldsymbol{x}$. However, it was shown in [19] that $Q^{(\sigma)}(\boldsymbol{y}) = 0$ for *any* vector $\boldsymbol{y} \in \mathbb{C}^{2N}$ (with non-zero 2-form) if and only if $\boldsymbol{y}$ is the exact assignment $\boldsymbol{x}$. From this fact we conclude that the correct assignment of phases $\boldsymbol{x}$ can also be obtained by solving the following relaxation of the non-convex optimization problem in equation (47):

$$\chi_\sigma^{\text{noiseless}} := \min_{\substack{\boldsymbol{y}\in\mathbb{C}^{2N} \text{ s.t.} \\ \|y\|_2=\sqrt{2N}}} Q^{(\sigma)}(\boldsymbol{y}) = (R+1)N\lambda_{\min}\left(A_\sigma^{\dagger} A_\sigma\right) = Q^{(\sigma)}(\boldsymbol{y}) = 0 \qquad (48)$$

where the optimization is over all vectors with 2-norm equal to $\sqrt{2N}$. In other words, in the noiseless scenario, the correct assignment of phases $\boldsymbol{x}$ can be obtained by determining the smallest eigenvector of $A_\sigma^{\dagger} A_\sigma$, making the optimization problem a feasible one.

### The noisy scenario

In practice, one only obtains the noisy versions of the absolute value measurements $|f_1[j]|^2$, $|f_2[j]|^2$, $|f_3[j]|^2$ and $|f_4[j]|^2$, which we respectively denote by $|\tilde{f}_1[j]|^2$, $|\tilde{f}_2[j]|^2$, $|\tilde{f}_3[j]|^2$ and $|\tilde{f}_4[j]|^2$. We denote the correct vector of phases of $\tilde{f}_1$ and $\tilde{f}_2$ by $\tilde{\boldsymbol{x}} \in \mathbb{C}^{2N}$. Let us now define the cost function in terms of these noisy absolute value measurements as follows.

$$\tilde{Q}^{(s)}(\boldsymbol{y}) := \tilde{Q}^{(s)}_{\text{support}}(\boldsymbol{y}) + \tilde{Q}_{\text{interference}}(\boldsymbol{y}) \qquad (49)$$

with

$$\tilde{Q}_{\text{support}}^{(s)}(\boldsymbol{y}) := \sum_{k=s}^{N-1}\left|\sum_{j=0}^{N-1}|\tilde{f}_1[j]|y_j\exp\left[\frac{-i2\pi jk}{N}\right]\right| + \sum_{k=s}^{N-1}\left|\sum_{j=0}^{N-1}|\tilde{f}_2[j]|y_{N+j}\exp\left[\frac{-i2\pi jk}{N}\right]\right| \qquad (50)$$

and

$$\tilde{Q}_{\text{interference}}(\boldsymbol{y}) := \sum_{j=0}^{N-1}\left|y_j - y_{N+j}\tilde{G}[j]/|\tilde{G}[j]|\right|^2, \qquad (51)$$

$$\tilde{G}[j] := \frac{|\tilde{f}_3[j]|^2 + i|\tilde{f}_4[j]|^2 - (1+i)\left(|\tilde{f}_1[j]|^2 + |\tilde{f}_2[j]|^2\right)}{2|\tilde{f}_1[j]||\tilde{f}_2[j]|} \qquad (52)$$

where we stress that $\tilde{G}[j]$ does not necessarily have unit absolute value.

Again, the cost function can be expressed as

$$Q^{(s)}(\boldsymbol{y}) := \boldsymbol{y}^\dagger A_s^\dagger A_s \boldsymbol{y} \qquad (53)$$

where $\tilde{A}_s \in \mathbb{C}^{(2(N-s)+N)\times 2N}$ has entries

$$(\tilde{A}_s)_{p,q}$$

$$= \begin{cases} |\tilde{f}_1[q]|\exp\left(\dfrac{-i2\pi q(s+p)}{N}\right), & \text{if } q < N, p < N-s, \\[2mm] |\tilde{f}_2[q]|\exp\left(\dfrac{-i2\pi (q-N)(s+p-(N-s))}{N}\right), & \text{if } N \le q < 2N, (N-s) \le p < 2(N-s) \\[2mm] 1, & \text{if } q < N, p = q + 2(N-s), \\[2mm] -\tilde{G}[q-N]/|\tilde{G}[q-N]|, & \text{if } N \le q < 2N, p = q - N + 2(N-s), \\[2mm] 0, & \text{otherwise,} \end{cases}$$

$$(54)$$

with $p$ = 0,1, ... ,2($N$ - $s$) + $N$ - 1 and q = 0,1, ... ,2$N$ - 1.

In the noisy setting, there is no guarantee that there is an assignment of phases $y$ for which $\tilde{Q}^{(s)}(\boldsymbol{y})$ = 0, but the optimal assignment of phases could be found by solving the non-convex optimization problem at s = σ:

$$\phi_s^{\text{noisy}} := \min_{\substack{\boldsymbol{y}\in\mathbb{C}^{2N}\, s.t. \\ |y_0|=|y_1|=\cdots=|y_{N-1}|=1}} \tilde{Q}^{(s)}(\boldsymbol{y}). \qquad (55)$$

In general, we now have that $\phi_s^{\text{noisy}} > 0$. The correct assignment $\bar{x}$ is not guaranteed to be the unique minimizer of $\tilde{Q}^{(\sigma)}(\boldsymbol{y})$. However, for relatively small noise magnitudes, any assignment of phases for which $\tilde{Q}^{(\sigma)}(\boldsymbol{y})$ is minimized tends to be close to the correct assignment $\bar{x}$. Since the problem in equation (55) is again non-convex, we relax it to a convex one. Like in the noiseless scenario, we will consider the following relaxation of the above eigenvalue problem.

$$\chi_\sigma^{\text{noisy}} := \min_{\substack{\boldsymbol{y}\in\mathbb{C}^{2N}\, s.t. \\ \|y\|_2=\sqrt{2N}}} \tilde{Q}^{(\sigma)}(\boldsymbol{y}) = 2N\lambda_{\min}\left(\tilde{A}_\sigma^\dagger \tilde{A}_\sigma\right) \qquad (56)$$

where we note that again, generally, $\chi_{\sigma,R}^{\text{noisy}} > 0$. For relatively small noise magnitudes, the optimal assignment obtained by solving equation (56) (where the smallest $\boldsymbol{y}$ to minimize equation (56) will be denoted by $\boldsymbol{y}_{min}$) will be close to the correct assignment $\tilde{\boldsymbol{x}}$.

Before discussing the details of the algorithm, let us consider a generalization that we introduce in this work. This generalization consists of the inclusion of multiple time series that are used for interference, as opposed to just a single one. As we shall demonstrate, this leads to improved performance of the algorithm in the presence of noise.

### *Vectorial phase retrieval using multiple interference signals*

In this work, we consider the scenario in which one employs *multiple* signals $\boldsymbol{f}_2^{(r)} \in \mathbb{C}^N$ (with $r = 1,2, ..., R$) with which the target time series $\boldsymbol{f}_1$ interferes. As we will demonstrate below, we find that the performance of vectorial phase retrieval improves when multiple interference signals are employed in the noisy scenario. This multi-interference vectorial phase retrieval problem is formulated as follows.

That is to say that, for all $r = 1, ... R$, a set of: we also include in the analysis R second absolute value time series, $\left|f_2^{(r)}\right|$, derived by enacting the time evolution using $H$ on R additional input states, $|\varphi_r\rangle \neq |\psi\rangle$ (for all $r$), wherein $|\varphi_i\rangle \neq |\varphi_j\rangle$ *for i $\neq$ j;* R third absolute value time series $\left|f_3^{(r)}\right|$, derived by enacting a time evolution using $H$ on a superposition of two input states, $(|\psi\rangle + |\varphi_r\rangle)$; and R fourth absolute value time series $\left|f_4^{(r)}\right|$, derived by enacting a time evolution using $H$ on a superposition of two input states $(|\psi\rangle + i|\varphi_r\rangle)$. This provides redundancy in the form of one or more well-defined additional input state(s), as well as a clear form for the superposition of the input state with the additional state(s). By considering the magnitudes of the states individually as well as the magnitude of the interference of the two states (at a time $t$) discrepancies in apparent magnitude can be resolved as deriving from phase differences, and the phase difference between the states inferred.

### *Multi-interference vectorial phase retrieval*

Given measurements of the absolute values

$$|f_1[j]|^2, \left\{\left|f_2^{(r)}[j]\right|^2, \left|f_3^{(r)}[j]\right|^2 := \left|f_1[j] + f_2^{(r)}[j]\right|^2, \left|f_4^{(r)}[j]\right|^2 := \left|f_1[j] + if_2^{(r)}[j]\right|^2\right\}_{r=1}^R \qquad (57)$$

at times $j = 0,1, ... , N - 1$, determine

$$F_1[k] := \sum_{j=0}^{N-1} f_1[j] \exp\left[\frac{-i2\pi jk}{N}\right], \qquad \left\{F_2^{(r)}[k] := \sum_{j=0}^{N-1} f_2^{(r)}[j] \exp\left[\frac{-i2\pi jk}{N}\right]\right\}_{r=1}^R \qquad (58)$$

at $k = 0,1, ... , N - 1$.

The trivial ambiguities of Problem 2 are equivalent to those of Problem 1, involving *all* $(R + 1)$ signals $\boldsymbol{F}_1, \boldsymbol{F}_2^{(1)}, ... , \boldsymbol{F}_2^R$ (instead of just $\boldsymbol{F}_1, \boldsymbol{F}_2$).

We will discuss how the multi-interference VPR algorithm can be implemented to (approximately) solve Problem 2. But let us first discuss how the control-free quantum phase estimation routine fits into the multi-interference VPR framework. We take

$$f_1[j] = \langle\Phi|\exp(iH\Delta tj)|\Phi\rangle \qquad (59)$$

and

$$\left\{f_2^{(r)}[j] = \langle\Phi|\exp(iH\Delta tj)|\psi_r\rangle\right\}_{r=1}^R \qquad (60)$$

such that

$$\left\{f_3^{(r)}[j] = f_1[j] + f_2^{(r)}[j] = \langle\Phi|\exp(iH\Delta tj)\,(|\Phi\rangle + |\psi_r\rangle)\right. \tag{61}$$

and

$$\left. f_4^{(r)}[j] = f_1[j] + if_2^{(r)}[j] = \langle\Phi|\exp(iH\Delta tj)\,(|\Phi\rangle + i|\Phi\rangle)\right\}_{r=1}^{R}. \tag{62}$$

Hence by preparing states $|\Phi\rangle$ and $\left\{|\psi_r\rangle, (|\Phi\rangle + |\psi_r\rangle)/\sqrt{2}, (|\Phi\rangle + i|\psi_r\rangle)/\sqrt{2}\right\}_{r=1}^{R}$, then time evolving each of the states under Hamiltonian $H$ for a time $\Delta tj$, and measuring the overlap with $|\Phi\rangle$ we can estimate $|f_1[j]|$ and $\left\{|f_2^{(r)}[j]|, |f_3^{(r)}[j]|, |f_4^{(r)}[j]|\right\}_{r=1}^{R}$ at $j = 0, 1, ..., N-1$. Of course, we do not want the states $|\Phi\rangle$ and $\{|\psi_r\rangle\}_{r=1}^{R}$ to be such that preparing superpositions of $|\Phi\rangle$ with any $|\psi_r\rangle$ requires applying circuits of very large depth.

As discussed before, one only ever obtains noisy versions of the absolute value measurements $|f_1[j]|^2$, $\left\{|f_2^{(r)}[j]|^2, |f_3^{(r)}[j]|^2, |f_4^{(r)}[j]|^2\right\}_{r=1}^{R}$ in practice, which we denote by $|\tilde{f}_1[j]|^2$, $\left\{|\tilde{f}_2^{(r)}[j]|^2, |\tilde{f}_3^{(r)}[j]|^2, |\tilde{f}_4^{(r)}[j]|^2\right\}_{r=1}^{R}$. The multi-interference VPR algorithm takes as *input* these noisy absolute value measurements, and an estimate s of $\sigma$ (with $\sigma$ denoting the support size of $F_1, F_2^{(1)}, ..., F_2^{(R)}$). The *output* of the algorithm is a vector $y \in \mathbb{C}^{(R+1)N}$ whose entries are estimates of the phases of $f_1[j], f_2^{(1)}[j], ..., f_2^{(R)}[j]$ at $j = 0, 1, ..., N-1$. The algorithm again consists of the minimization of a cost function over all these assignments of phases to the absolute value measurements $\left\{|\tilde{f}_1[j]|\right\}, \left\{|\tilde{f}_2^{(1)}[j]|\right\}, ..., \left\{|\tilde{f}_2^{(R)}[j]|\right\}$. We denote by $\tilde{x} \in \mathbb{C}^{(R+1)N}$ the correct phases of $f_1[j], f_2^{(1)}[j], ..., f_2^{(R)}[j]$ at $j = 0, 1, ..., N-1$.

The cost function again consists of a support component $\tilde{Q}_{\text{support}}^{(s)}(y)$ and an interference component $\tilde{Q}_{\text{interference}}(y)$. The support component of the cost function can be written as

$$\tilde{Q}_{\text{support}}^{(s)}(y) :=$$

$$\sum_{k=s}^{N-1}\left|\sum_{j=0}^{N-1}|\tilde{f}_1[j]|\,\left|y_j\exp\left[\frac{-i2\pi jk}{N}\right]\right|\right|^2 + \sum_{r=1}^{R}\left[\sum_{k=s}^{N-1}\left|\sum_{j=0}^{N-1}|\tilde{f}_2^{(r)}[j]|\,\left|y_j^{(r)}\exp\left[\frac{-i2\pi jk}{N}\right]\right|\right|^2\right] \tag{63}$$

which is equivalent to the support component defined in the single-interference-signal framework, except that now it constrains the support of $(R+1)$ signals. The interference component $\tilde{Q}_{\text{interference}}(y)$, which is again an extension of the single-interference-signal interference component to $(R+1)$ signals, can be defined as follows.

$$\tilde{Q}_{\text{interference}}(y) := \sum_{r=1}^{R}\left[\sum_{j=0}^{N-1}\left|y_j - y_j^{(r)}\tilde{G}_r[j]/|\tilde{G}_r[j]|\right|^2\right] \tag{64}$$

where the quantities $\tilde{G}_r[j]$ are defined at $j = 0, 1 ..., N-1$ for $r = 1, 2, ..., R$ as

$$\tilde{G}_r[j] := \frac{\left|\tilde{f}_3^{(r)}[j]\right|^2 + i\left|\tilde{f}_4^{(r)}[j]\right|^2 - (1+i)\left(\left|\tilde{f}_1[j]\right|^2 + \left|\tilde{f}_2^{(r)}[j]\right|^2\right)}{2|\tilde{f}_1[j]|\,\left|\tilde{f}_2^{(r)}[j]\right|} \tag{65}$$

The total cost function

$$\tilde{Q}^{(s)}(y) := \tilde{Q}_{\text{support}}^{(s)}(y) + \tilde{Q}_{\text{interference}}(y) \tag{66}$$

can be expressed as

$$\tilde{Q}^{(s)}(\boldsymbol{y}) := \boldsymbol{y}^{\dagger} \tilde{A}_s^{\dagger} \tilde{A}_s \boldsymbol{y} \qquad (67)$$

where $\tilde{A}_{s,R} \in \mathbb{C}^{((R+1)(N-s)+RN) \times (R+1)N}$ has entries

$$\left(\tilde{A}_{S,R}\right)_{p,q}$$

$$= \begin{cases} |\tilde{f}_1[q]| \exp\left(\dfrac{-i2\pi q(s+p)}{N}\right), & \text{if } \begin{array}{l} q < N, \\ p < N-s, \end{array} \\[2ex] |\tilde{f}_2[q]| \exp\left(\dfrac{-i2\pi(q-N)(s+p-(N-s))}{N}\right), & \text{if } \begin{array}{l} N \le q < 2N, \\ (N-s) \le p < 2(N-s), \end{array} \\[2ex] \vdots & \\[1ex] |\tilde{f}_{R+1}[q]| \exp\left(\dfrac{-i2\pi(q-RN)(s+p-R(N-s))}{N}\right), & \text{if } \begin{array}{l} RN \le q < (R+1)N, \\ R(N-s) \le p < (R+1)(N-s), \end{array} \\[2ex] 1, & \text{if } \begin{array}{l} q < N, \\ p = q + (R+1)(N-s), \end{array} \\[2ex] -\tilde{G}_2[q-N]/|\tilde{G}_2[q-N]|, & \text{if } \begin{array}{l} N \le q < 2N, \\ p = q - N + (R+1)(N-s), \end{array} \\[2ex] 1, & \text{if } \begin{array}{l} q < N, \\ p = q + (R+1)(N-s) + N, \end{array} \\[2ex] -\tilde{G}_3[q-2N]/|\tilde{G}_3[q-2N]|, & \text{if } \begin{array}{l} 2N \le q < 3N, \\ p = q - N + (R+1)(N-s), \end{array} \\[2ex] \vdots & \\[1ex] 1, & \text{if } \begin{array}{l} q < N, \\ p = q + (R+1)(N-s) + (R-1)N, \end{array} \\[2ex] -\tilde{G}_{R+1}[q-RN]/|\tilde{G}_{R+1}[q-RN]|, & \text{if } \begin{array}{l} RN \le q < (R+1)N, \\ p = q - N + (R+1)(N-s), \end{array} \\[2ex] 0, & \text{otherwise,} \end{cases}$$

$$(68)$$

with $p = 0, 1, \ldots, ((R+1)(N-s)+RN) - 1$ and $q = 0, 1, \ldots, (R+1)N - 1$.

The optimal assignment of phases can be found, for example, by solving the non-convex optimization problem

$$\Phi_\sigma^{\text{noisy}}(\boldsymbol{y}) := \min_{\substack{\boldsymbol{y} \in \mathbb{C}^{(R+1)N} \text{ s.t.} \\ |y_0| = |y_1| = \cdots = |y_{N-1}^{(R)}| = 1}} \tilde{Q}^{(\sigma)}(\boldsymbol{y}) \qquad (69)$$

In general, we have that $\Phi_\sigma^{\text{noisy}} > 0$. The correct assignment $\tilde{x}$ is not guaranteed to be a (unique) minimizer of $\tilde{Q}^{(\sigma)}(\boldsymbol{y})$. However, for relatively small noise magnitudes, any assignment of phases for which $\tilde{Q}^{(\sigma)}(\boldsymbol{y})$ is minimized tends to be close to the correct assignment $\tilde{x}$.

We again relax the problem in equation (69) to an eigenvalue problem as follows:

$$\chi_\sigma^{\text{noisy}} := \min_{\substack{\boldsymbol{y} \in \mathbb{C}^{(R+1)N} \text{ s.t.} \\ \|\boldsymbol{y}\|_2 = \sqrt{(R+1)N}}} \tilde{Q}^{(\sigma)}(\boldsymbol{y}) = (R+1)N\lambda_{\min}\left(\tilde{A}_\sigma^{\dagger}\tilde{A}_\sigma\right), \qquad (70)$$

where we note that again, generally, $\chi_\sigma^{\text{noisy}} > 0$. As we shall demonstrate below, for relatively small noise magnitudes, the optimal assignment $\boldsymbol{y}_{\min}$ obtained by solving equation (70) will be close to the correct assignment $\tilde{x}$. Moreover, we will show that for a given noise magnitude, the assignment of phases obtained by solving equation (70) will typically become a better approximation for $\tilde{x}$ as R increases.

We note that the optimal assignment $\boldsymbol{y}_{\min}$ obtained by solving equation (70) is not necessarily an assignment of phases. Although we ensure that $\|\boldsymbol{y}_{\min}\|_2 = \sqrt{(R + 1)N}$, each entry can have absolute value different from one. One could consider rounding $\boldsymbol{y}_{\min}$ to an assignment of phases by dividing each entry by its absolute value. As discussed below, rounding does not necessarily improve the approximation to $\tilde{x}$ in the scenarios that we consider.

### *Comparison between rounding and not rounding*

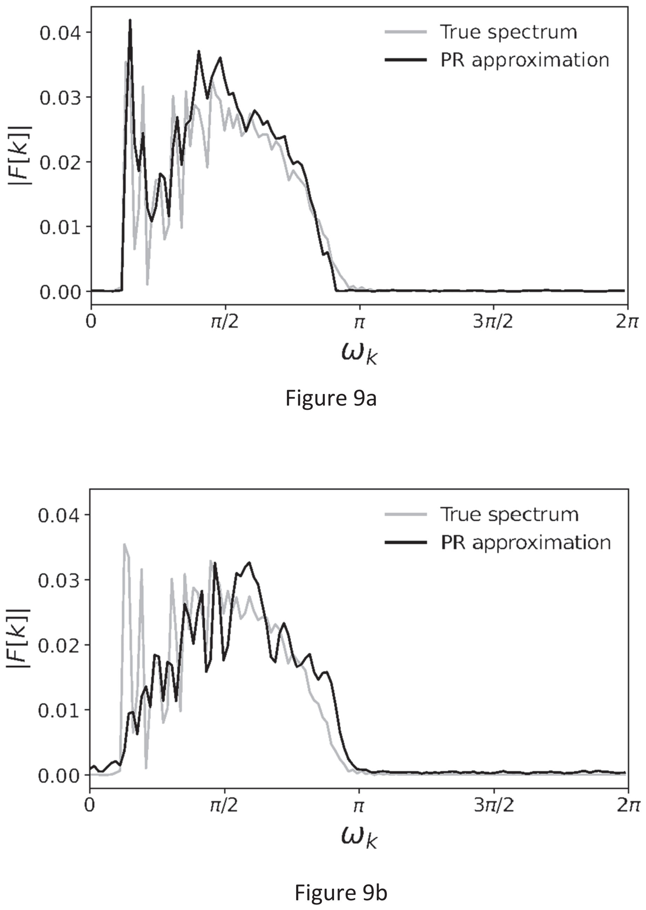

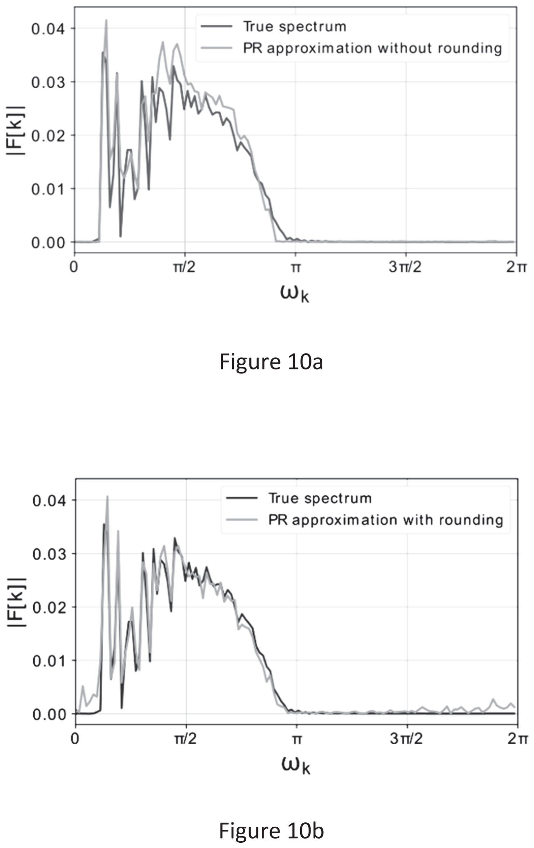

Figures 10a and 10b illustrate whether it is beneficial to round the smallest eigenvector $\boldsymbol{y}_{\min}$ (with 2-norm $\sqrt{(R + 1)N}$) of the matrix $\tilde{A}_s^\dagger \tilde{A}_s$ to a vector whose entries are phase factors, by dividing each entry of $\boldsymbol{y}_{\min}$ by its absolute value. The numerical investigations produced in Figures 10a and 10b suggest that using the entries of this rounded vector to reconstruct the time series does not *necessarily* lead to a more accurate reconstruction. In terms of the reconstructed spectra $F$ (where the scenario in figures 10a and 10b is the same as that for figures 9a and 9b), we note the following differences. The unrounded spectrum recovers the peak locations relatively well. The rounded spectrum performs better at recovering the absolute values $|F|$. However, the latter also seems to recover some peaks for frequencies at which $F$ is not actually supported. Whether rounding is beneficial thus depends on which features one wishes to recover. To quantify the error in the particular case of Figures 10a and 10b, we note that the 1-norm (normalized by $N$) of the vector with entries $|F_{\text{reconstructed}}[k]| - |F_{\text{exact}}[k]|$ is 0.0016 without rounding and 0.0013 with rounding.

In what follows, we will demonstrate numerically how the VPR algorithm can be used to perform spectral estimation for instances of the Fermi-Hubbard Hamiltonian, and discuss its performance in various settings.

### *Vectorial phase retrieval algorithm for spectral estimation of Hamiltonians*

We will now describe the performance of the vectorial phase retrieval algorithm in the context of spectral estimation for Hamiltonians. The signals encountered in this context do not perfectly fit within the framework of VPR. In particular, due to the fact that the (absolute values of) the time series are only measured for a finite measurement time, the signals $F_1$, $F_2^{(1)}, ..., F_2^{(R)}$ do not necessarily have well-defined support. Typically, $|F_1[k]|, \left|F_2^{(1)}[k]\right|, ..., \left|F_2^{(R)}[k]\right|$ decay away from the supported eigenvalues, rather than being equal to zero exactly outside of some frequency interval. The more the signals suffer from this effect, the more ill-defined their support becomes. As a result, a good performance of the vectorial phase retrieval algorithm cannot be guaranteed without further considerations, which we present below for a specific example, although the methods described herein apply to Hamiltonians in general.

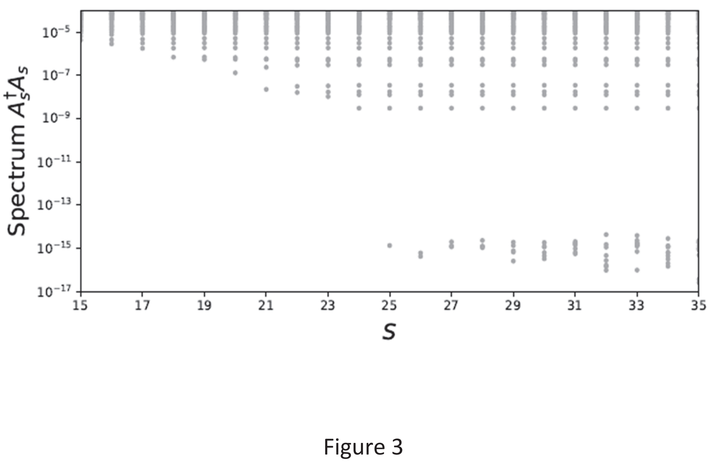

To set the stage, we first provide an example for which the VPR input data is obtained from time evolution of some state under the FH Hamiltonian, where we have artificially ensured that the input data fits exactly in the VPR framework. Namely, we have altered the input data in such a way that $F_1$, $F_2^{(1)}$ (we take R = 1 here) are exactly equal to zero outside of an interval of size $\sigma = 25$. Note that to do this, one generally needs access to the full time series and not just their absolute values (so this cannot be done in practice). The data we have used here is noiseless data. Based on the discussion above (in the noiseless scenario), we expect the matrix $A_s^\dagger A_s$ to have a *single* zero eigenvalue at s = σ, and its smallest eigenvector to correspond to the exact assignment of phases. Figure 3 depicts the spectrum of $A_s^\dagger A_s$ as a function of s. Indeed, its smallest eigenvalue is non-zero for $s < \sigma$ and (numerically) zero at $s = \sigma$. For $s > \sigma$, there are multiple (numerically) zero eigenvalues. For s > σ, there are several zero-eigenvalue eigenvectors, with the correct solution lying in the span of those eigenvectors. In the noisy setting, there will generally be no zero-eigenvalue solutions. However, for sufficiently small noise magnitudes, there will still be a drop in the value of the smallest eigenvalue of $A_s^\dagger A_s$ around σ.

See Figure 3 for an illustration of the spectrum of $A_s^\dagger A_s$ for R = 1 in the noiseless setting, as a function of s. The time series amplitudes used to construct $A_s^\dagger A_s$ correspond to evolution under a 1 × 5 (i.e., 10-mode) Fermi-Hubbard Hamiltonian for which $|\tau/U| = 1/4$. We have taken N = 300. The signals $f_1$ and $f_2$ were artificially processed to ensure that they have well-defined support (here, $\sigma = 25$).

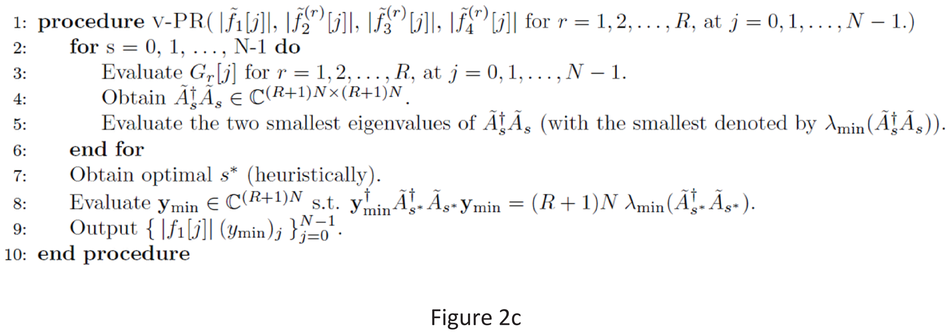

In what follows, we will discuss the performance of vectorial phase retrieval for input data obtained from time evolution under FH Hamiltonians. The procedure that is implemented is given as a pseudocode presented in Figure 2c. As discussed, this input data does not perfectly fit into the VPR framework. Nevertheless, the VPR algorithm performs well in performing phase retrieval in the scenarios that we consider.

The procedure in Figure 2c sets up the problem by receiving a plurality of input absolute value time series (as discussed above - a signal of interest, plus additional redundant time series and the interferences between the additional signals and the input signal of interest). Next the optimal phase assignment is reached for each time step by minimising the cost function. This allows the optimal phase assignments to be extracted and added back into the absolute value time series.

We note that when implementing the VPR algorithm according to Figure 2c to estimate the spectrum of FH Hamiltonians, it is important that $|\Phi\rangle$ and $\{|\psi_r\rangle\}_{r=1}^R$ are such that preparing the superpositions $\{|\Phi\rangle + |\psi_r\rangle\}_{r=1}^R$ and $\{|\Phi\rangle + i|\psi_r\rangle\}_{r=1}^R$ does not require large circuit depths. In particular, we restrict ourselves to states $\{|\psi_r\rangle\}_{r=1}^R$ such that these superpositions can be created by a single layer of two-qubit gates.

*Interplay between R and the noise resilience of the vectorial phase retrieval algorithm*

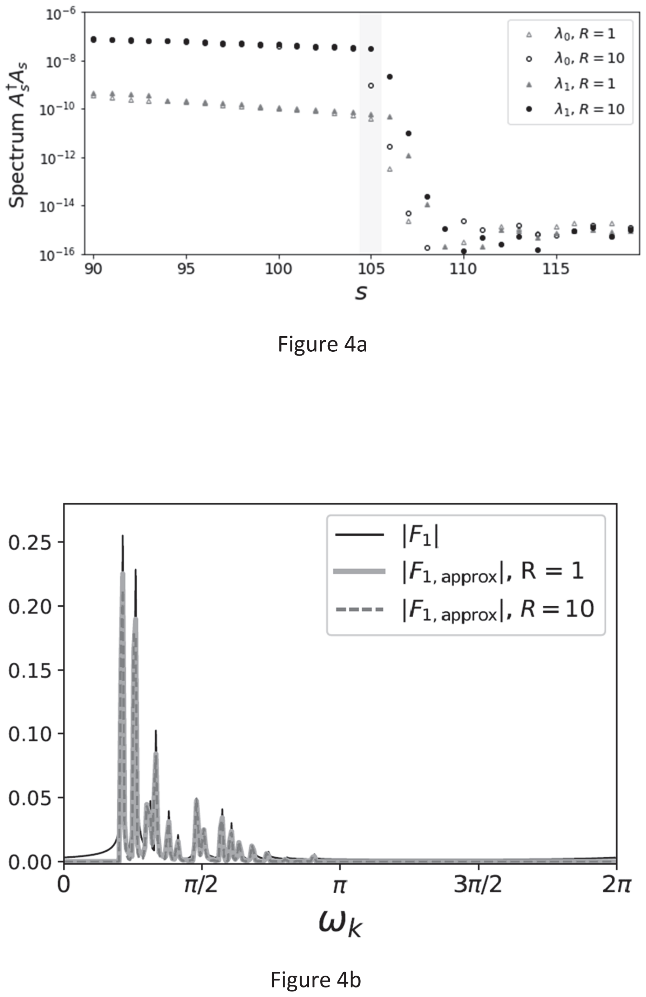

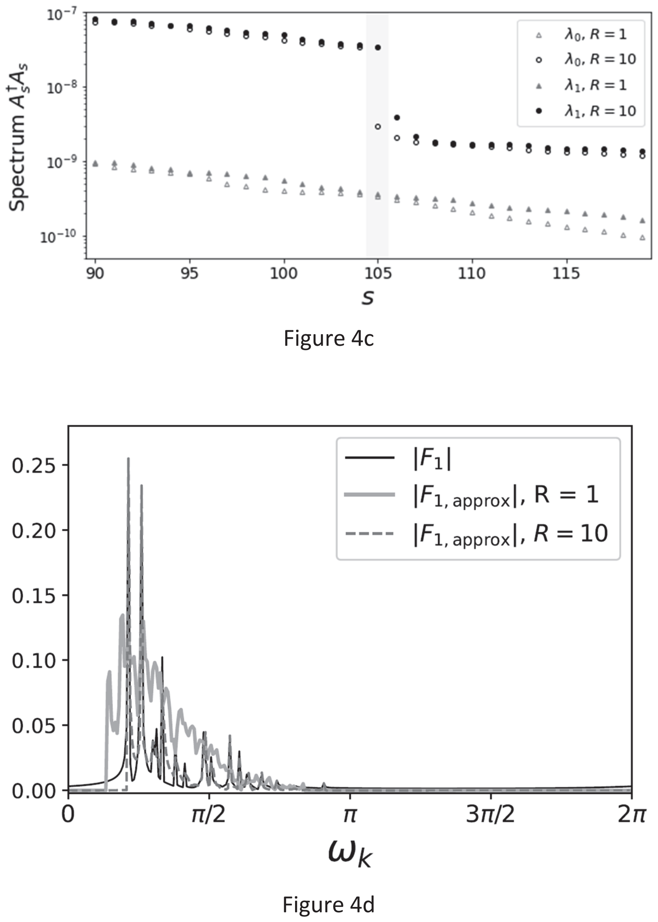

Figures 4a to 4d illustrate the difference in noise resilience of the VPR algorithm between the $R = 1$ and the $R = 10$ scenarios. This difference materializes as follows: In the noisy scenario, there is a sharp drop in the smallest eigenvalue of $A_s^\dagger A_s$ as a function of s for $R = 10$, which is absent for $R = 1$. This can be seen in Figure 4c, where $N_{samples} = 106$. Our numerical investigations suggest that this sharp drop is a signature of an accurate retrieval of phases at that value of s. As can be seen in Figure 4d, where again, $N_{samples} = 106$, indeed the estimate of $F_1$ for $R = 10$ is more accurate than for $R = 1$. Approximations to $|F_1|$ at fixed s = 105 for $R = 1$ and $R = 10$ are depicted in the noiseless setting in Figure 4b, which suggests that choosing larger $R$ does not influence the accuracy significantly in the noiseless scenario. The time series amplitudes used to construct $A_s^\dagger A_s$ correspond to evolution under a $1 \times 5$ (i.e., 10-mode) Fermi-Hubbard Hamiltonian for which $|\tau/U| = 1/4$.

***Performance of the vectorial phase retrieval algorithm for shallower time evolutions***

The fact that $F_1$, $F_2^{(1)}, ..., F_2^{(R)}$ do not have well-defined support is the most prominent reason that the VPR input data in the current setting does not fit perfectly into the framework of VPR. The support of these signals typically becomes more ill-defined (i.e., $F_1$, $F_2^{(1)}, ..., F_2^{(R)}$ decay more slowly away from the supported frequencies) as the total time evolution becomes smaller (due to spectral leakage). Since the circuit depths are limited in our near-term scenario, it is of interest to see how the VPR algorithm fares for shallower time evolutions.

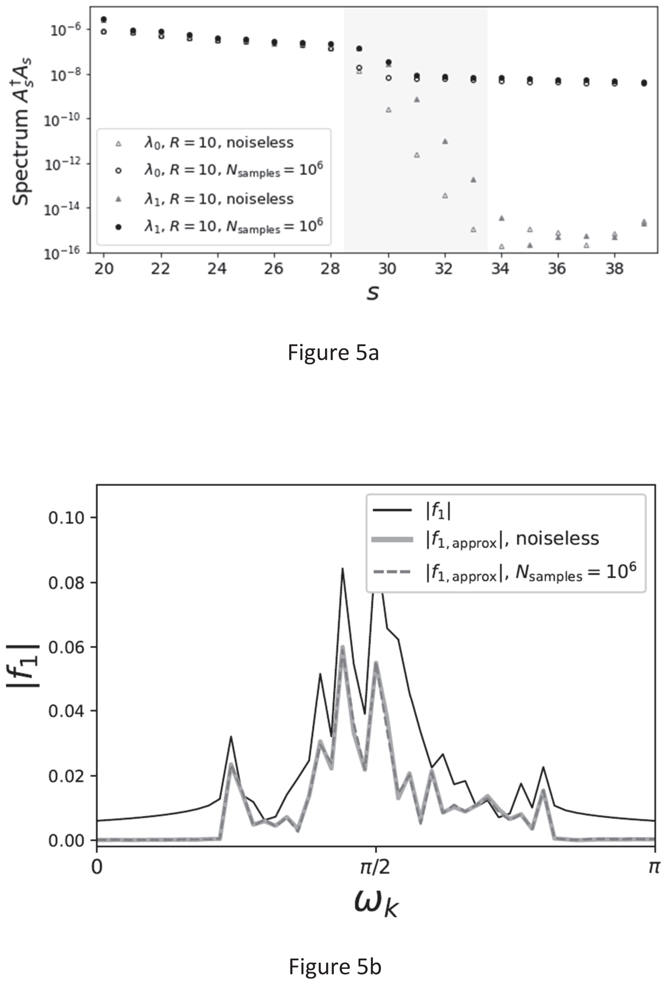

Figure 5a depicts the smallest two eigenvalues of $A_s^\dagger A_s$ as a function of s for $R = 10$ in the noiseless and noisy settings. Clearly, in the noiseless setting, $\lambda_{\min}(A_s^\dagger A_s)$ decays to zero comparatively slowly, which is a result the signals having ill-defined support. We find that the quality of the approximation $|F_{1,approx}|$ to $|F_1|$ is highest at the value of s at which $\lambda_{\min}(A_s^\dagger A_s)$ first starts to decay, i.e., $s = 29$ for Figure 5a. Figure 5b depicts $|f_{1,approx}|$ and in the noiseless scenario, and for $N_{samples} = 10^6$. Although the approximation of $|f_{1,approx}|$ to $|f_1|$ is worse (even in the noiseless scenario) than in Figures 4a to 4d, the approximation retains its noise resilience. The time series amplitudes used to construct $A_s^\dagger A_s$ once more correspond to evolution under a $1 \times 5$ (i.e., 10-mode) Fermi-Hubbard Hamiltonian for which $|\tau/U| = 1/4$, with a relatively small total time evolution $T$. This small total time evolution leads to ill-defined support of $|F_1|$. Note that the input state $|\Phi\rangle$ is chosen differently to that in Figures 4a to 4d.

***2-Dimensional HIO***

Here, we show how to transform a one-dimensional time series (corresponding to time evolution of an input state under a Hamiltonian) into a two-dimensional phase-retrieval problem by adding a dummy Hamiltonian $H_D$ that commutes with $H$ and produces non-trivial dynamics on the input state of interest. We then exploit the *Hybrid Input Output* algorithm to retrieve the target spectra.

In this example, the step 116 in Figure 1c can be thought of as supplying additional (independent) evolution dynamics to provide the at least one additional family of absolute value time series. This allows to embed the problem - which is naturally one dimensional - into a larger 2D problem so that the benefits of two-dimensional phase-retrieval can be exploited in this new setting.

A new discretized time series can then be defined as

$$f[j, l] := \langle \psi | e^{it_j H} e^{iz_l H_D} | \psi \rangle, \qquad (71)$$

by taking samples of a continuous signal (for example, as defined in equation (76) below), for the discrete set of times $t_j = j\Delta t$ and $z_l = l\Delta z$, where $\Delta t = T/N$ and $\Delta z = T'/M$. For simplicity we choose $T = T'$, which is not a fundamental requirement, and other choices are possible and potentially beneficial. This lets us define a matrix $f[j, l]$ whose entries can roughly be thought of as samples of this function at these discrete times. The discrete signal $f[j, l]$ also includes a windowing function and a specific ordering of these elements.

We want the algorithm to work over a wide range of the remaining free parameters, such as $M$, $N$ and $|\psi\rangle$, and for arbitrary system sizes of $H$. The choice of these parameters is determined by the original problem under consideration, which previously would have been solved through implementing a Hadamard test to obtain $f$ directly. Here we want to show that phase retrieval is a viable alternative to this. Therefore, the algorithm must succeed for a variety of cases, each perhaps corresponding to a quantum phase estimation problem with different demands on accuracy and spectral resolution.

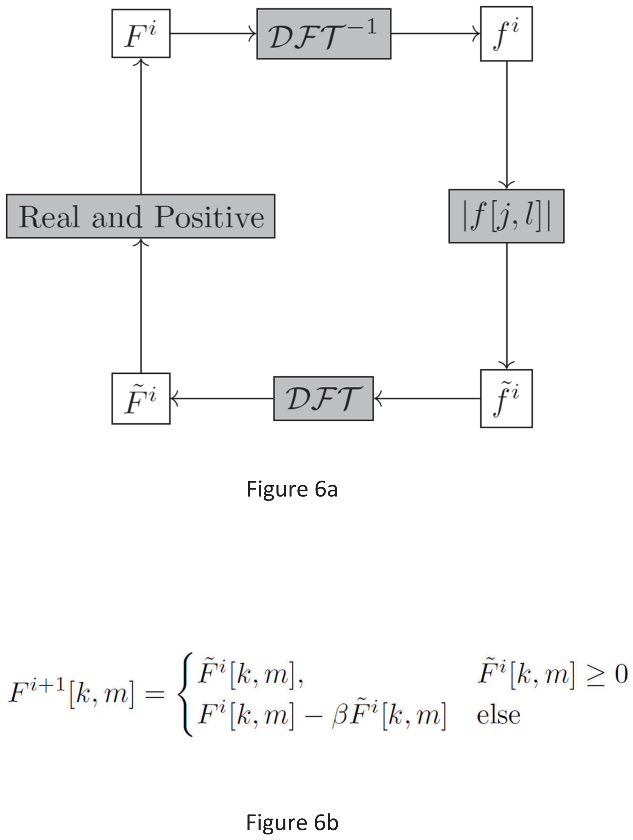

Figures 6a to 6c show examples of this in practice. In Figure 6a, a schematic for Fienup's hybrid input-output algorithm's four steps is shown. The $i$-th iteration starts with a candidate spectrum $F_i$: Step (1) transform the candidate spectrum $F_i$ into a time series $f_i$ candidate via an inverse DFT; Step (2) generate a new $\tilde{f}^i$ that has same phase as $f^i$ and satisfies $|\tilde{f}^i[j, l]| = |f^i[j, l]|$; Step (3) transform back to the Fourier domain; Step (4) take the real part and then implement the update rule in Figure 6b to impose positivity of the spectrum.

The above four steps may alternatively be implemented in the following way, wherein: an index $i$ tracks the iteration number of the loop and $f^{i=0}(j, l) := f^0(j, l) := f(j, l) := |\langle\psi|e^{itjH}e^{izlH_D}|\psi\rangle|e^{\theta}$; $\theta$ is a complex phase randomly chosen in the interval $[0, 2\pi]$, and; the i-th iteration starts with a candidate spectrum $F^i$, wherein $F^0$ is the Fourier transform of $f^0$: (1) transform the candidate spectrum $F^i$ into a time series $f^i$ candidate via an inverse discrete Fourier transform; (2) generate a new time series $\tilde{f}^i$ that has the same phase as $f^i$ and satisfies $|\tilde{f}^i[j, l]| = |f^i[j, l]|$; (3) transform the new time series $\tilde{f}^i$ back to the Fourier domain; (4) take the real part of the discrete Fourier transform of the time series $\tilde{f}^i$ and then implement an update rule to impose positivity of the spectrum.

The update rule may take the form

$$F^{i+1}[k,m] = \begin{cases} \tilde{F}^i[k,m], & \tilde{F}^i[k,m] \geq 0 \\ F^i[k,m] - \beta\tilde{F}^i[k,m], & \text{else,} \end{cases} \qquad (72)$$

wherein $0 \leq \beta \leq 1$ is a parameter tuneable by a user.

Fienup's hybrid input-output algorithm (HIO) [20] involves transforming back and forth between the Fourier and object domain interspersed by projections that guarantee the satisfaction of the time-series values $|f[j, l]|$ in the object domain and the $F[k, m]$ constraints in the Fourier domain. The algorithm is non-linear and of an iterative nature, where the constraint on the spectrum defines a new element $F^{i+1}$. The parameter $0 \leq \beta \leq 1$ is carefully selected to optimize the performance and can be tuneable by a user. This is a well-studied operation which converges neatly to a solution. The loop may be traversed until a convergence or termination condition is met.

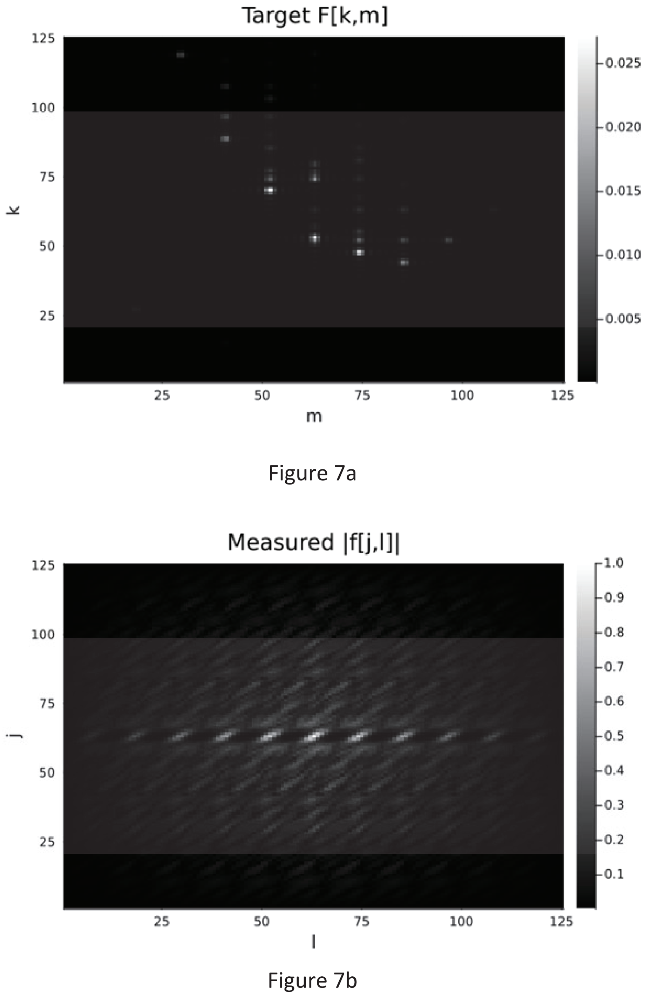

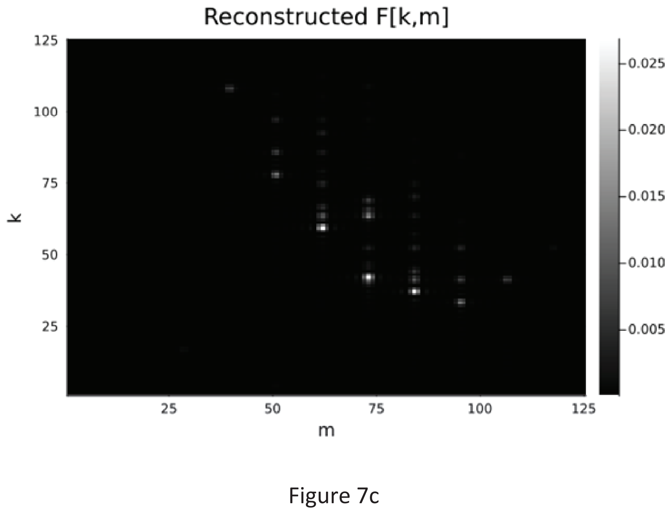

Figures 7a to 7c show this process in practice. These three plots show an example of 2D phase retrieval for a $2 \times 2$ Fermi-Hubbard Hamiltonian with $N \times M = 225 \times 225$. Here $T = 112$ and we take $|\psi\rangle$ to be a uniform super-position over computational basis states. Where $H$ has been normalized so that its eigenvalues lie between 0 and $\pi$. We have chosen the $H_D$ as the total number operator. This example excludes sampling noise. Figure 7a shows the target 2D discretized spectrum $F[k, m]$ as a heatmap. Figure 7b shows the absolute values $|f[j, l]|$, which would be measured using only time-evolution and are the input to the HIO phase-retrieval algorithm. Figure 7c shows the result of using HIO on the measured time-series in Figure 7b, displaying the reconstructed signal. Observe that the recovered spectrum contains a trivial ambiguity, in the form of a shift.

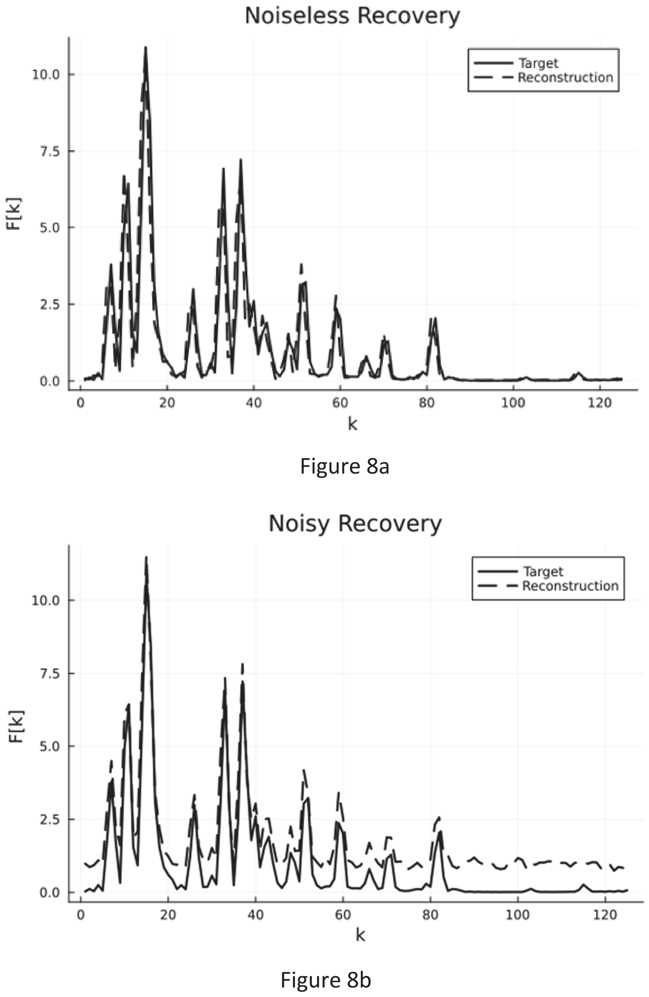

Figures 8a and 8b show the recovered 1D spectrum following the image reconstruction in Figure 7c. Figure 8a shows $F[k] := \mathcal{DFT}[f[j, 0]]$ where $f$ is the inverse discrete Fourier transform of the reconstructed spectrum shown in Figure 7c. This is in the noiseless scenario. Note that the ideal solution includes the triangular window by definition. Figure 8b shows the effect of sample noise on this same problem. In this case we use only 1000 samples per time-series point and still recover the peaks but with a vertical offset in the reconstructed spectrum.

### *Implementation*

We test this algorithm numerically using a 2D spin Fermi-Hubbard model, with $U = 4$ and $\tau = 1$. For the dummy Hamiltonian $H_D$ we use the total particle number operator, which under the Jordan-Wigner encoding is simply a sum of single qubit Pauli-$Z$ operators. Additionally, we incorporate knowledge of the phases for $f[0, l]$ as driving constraints. This information can be computed classically in any given experiment as these points correspond to evolution under $H_D$ only, which can be performed with local gates in any potential experiment. We use $2 \times 2$ spin Fermi-Hubbard model and set $N = M = 125$, time $T = 35$ and choose $|\psi\rangle$ to be the uniform super-position over computational basis states.

The first step is to use the HIO algorithm to reconstruct a 2D image. This is shown in Figures 7a to 7c. Figure 7a shows the target 2D-spectrum $F[k, m]$, which we obtain from a direct numerical calculation of the time-series $f[j, l]$ including its phase. Figure 7b shows the absolute values of $|f[j, l]|$, these would be measured using only time-evolution as sketched in Figure 1b, and form the input to the HIO algorithm. Observe that we also see the effect of the 2D triangular windowing function, the magnitude of $|f[j, l]|$ decreases as we approach the edge of the plot, where zero frequency is plotted in the centre.

Finally, Figure 7c shows the reconstruction of $F[k, m]$ using the HIO algorithm with $\beta = 1$ and $L = 8000$. We can observe a trivial ambiguity in this reconstruction, the final spectrum is translated slightly. Nonetheless the reconstruction is correct up to trivial ambiguities.

Finally, we recover the 1D information following this image reconstruction. To do this we apply a DFT to the recovered signal $f[j, 0]$, which corresponds to the times-series of $H$ without the dummy Hamiltonian. The result of this is shown in Figures 8a and 8b. We also model the effect of sample noise on this algorithm and find that for a modest number of samples - 1000 per calculation of $|f[j, l]|$ - the algorithm can still reconstruct the location of the peaks.

### Problem 3. [2D phase retrieval]

In two-dimensional phase retrieval, one now attempts to solve the following (potentially ambiguous) problem.

Given measurements of the absolute values (the absolute value here means the absolute value of every element $f[j, l]$ of the $N \times M$ matrix $f$) of a signal $f[j, l]$ determine the discrete Fourier transform $F[k, m]$ of that signal (e.g. through equations (73) and (74) below), up to the trivial ambiguities of global phases, shifts and conjugate reflections. This is completely analogous to one-dimensional phase retrieval, however, now we have

$$F[k,m] := \sum_{j,l=0}^{N-1,M-1} f[j,l]e^{-i2\pi\left(\frac{kj}{N}+\frac{ml}{M}\right)} \tag{73}$$

and

$$f[j,l] := \frac{1}{NM} \sum_{j,l=0}^{N-1,M-1} F[k,m]e^{i2\pi\left(\frac{kj}{N}+\frac{ml}{M}\right)}. \tag{74}$$

As before, this problem is inherently ambiguous without further constraints. The trivial ambiguities of global phases, shifts and conjugate reflections remain so we only require a solution up to these ambiguities. Unlike the one-dimensional problem, phase retrieval in two or more dimensions almost always has a unique solution [27]. This is the motivation behind studying a 2D version of the problem, and in demonstrating its applicability to the problem of quantum phase estimation. The uniqueness properties of a signal can be studied through setting up an associated polynomial, as discussed throughout the phase retrieval literature, [27]. Whether these polynomials are irreducible or not determines whether the problem has nontrivial ambiguities. Almost all 2D multivariate polynomials are irreducible, a fact which means almost all 2D signals can be recovered from their Fourier magnitudes [27].

We focus on one of the most widely used phase retrieval algorithms, Fienup's hybrid input-output algorithm or the HIO algorithm [20]. In spite of the uniqueness properties of 2D signals, it is still observed that this algorithm performs best provided the DFT satisfies two strong constraints.

1) The DFT must be real: $F[k,m] \in \mathbb{R}$
2) The DFT must be positive: $F[k, m] \geq 0$.

In what follows, we will review the 2D phase retrieval problem, the hybrid input-output (HIO) algorithm for solving this problem, and then our main contribution. The contribution introduces a procedure for embedding the phase retrieval problem relevant to quantum phase estimation in a 2D time series, which we show can be guaranteed to be both real and positive. Then, we demonstrate numerically that the HIO algorithm succeeds for a time-series generate by a Fermi-Hubbard model. Finally, we show that the algorithm is resilient to sample noise by comparing it to vectorial phase retrieval.

### The Hybrid Input-Output Algorithm

We demonstrate the effectiveness of a specific HIO algorithm, Fienup's hybrid input-output algorithm (HIO) [20], as an example of a HIO algorithm in widespread use that may be adapted to use in conjunction with methods disclosed herein. Fienup's HIO algorithm itself is a generalisation of the earlier Gerchberg-Saxton algorithm. Figures 6a to 6c summarize the iterative HIO algorithm which involves transforming back and forth between the Fourier and object domain and imposing constraints on each domain at every iteration. The signal constraints being the measured magnitudes, while the Fourier domain constraints are more flexible. Sometimes knowledge of the support of $F$ may be used, or knowledge that $F[k, m]$ is real and positive. Let $F^i$ denote the estimate for the true DFT $F$ at step $i$ in the algorithm. An iteration of the algorithm can be summarised as follows.

1) The inverse discrete Fourier transform of $F^i$ is taken to obtain $f^i = \mathcal{DFT}(F^i) = |f^i|e^{i\arg(f_i)}$.

2) The absolute values $|f^i|$ are replaced with the true and known absolute values $|f|$. This defines $\tilde{f}^i = |f|e^{i\arg(f_i)}$, a function which satisfies the absolute values constraints.

3) Next one takes the DFT of this time series, and enforces the constraint that the DFT is real, to obtain $\tilde{F}^i = $ Real ($\mathcal{DFT}(f^i)$).

4) Next, the positivity constraint is used. One defines each element of $F^{i+1}$ with the following update rule,

$$F^{i+1}[k, m] = \begin{cases} \tilde{F}^i[k, m], & \tilde{F}^i[k, m] \geq 0 \\ F^i[k, m] - \beta\tilde{F}^i[k, m], & \text{else} \end{cases}.  \qquad (75)$$

This retains the elements which are positive and replaces the remaining entries by a relaxed version of the positivity constraint with parameter $0 \leq \beta \leq 1$.

The algorithm then loops for $L$ iterations, hopefully converging to the true $F[k]$ or a good approximation of it. It is this constant $\beta$ which represents a relaxation of the positivity constraint.

This is one possible implementation of this algorithm, explained with a specific set of constraints. Other possible constraints can include knowledge of specific values of $F$ or constraints on the support.

### *Adapting Quantum Signals for 2D Phase Retrieval*

We will now explain how to embed the relevant 1D problem into a 2D problem, while ensuring that we impose the constraint the $F$ is real and positive. For the purposes of quantum phase estimation, we are interested in 1D signals of the form $f(t_j) = \langle\psi|\exp(it_jH)|\psi\rangle$, where $H$ is the Hamiltonian being studied. To create a 2D problem we introduce a Hamiltonian which commutes with H, which we denote $H_D$. The fact that these Hamiltonians commute will be essential for ensuring the positivity of the spectrum later.

Note that we do not want $|\psi\rangle$ to be an eigenstate of the Hamiltonian $H_D$ as we do not want a trivial 2D problem. Now we can define a continuous 2D signal as follows

$$f(t, z) = \langle\psi|\exp(itH + izH_D)|\psi\rangle.  \qquad (76)$$

Note that the introduction of an independent time parameter z, associated with $H_D$, has allowed us to define a simple continuous 2D signal. It is important to choose $H_D$ such that $|\psi\rangle$ is not an eigenstate of $H_D$, or otherwise the problem remains of a 1D nature. This has the benefit of being one of the simplest ways we can imagine creating a 2D signal.

### *Continuous to discrete*

Here we adapt some key concepts described about on continuous-time signals, their Fourier transforms and their discretizations in the two-dimensional setting. This is the underlying continuous time signal which we discretize and window as explained above. However, now we will introduce an alternative windowing function which we will show ensures $F[k, m]$ can be guaranteed to be real and positive. This is key to ensuring the reliability of the HIO algorithm.

We represent windowing and discretization in the continuous picture as before, but now in 2D we have the time signal windowed and sampled time-series $g(t, z)$ and its Fourier transform $G(\omega, \eta)$ as

$$g(t, z) := f(t, z)\Pi_T(t, z)\text{Ш}_{\Delta t}(t, z)  \qquad (77)$$

$$G(\omega, \eta) := \mathcal{FT}[g(t, z)](\omega, \eta).  \qquad (78)$$

The two-dimensional Dirac comb with $\Delta t = T/N$ which represents sampling in the continuous picture is

$$\text{Ш}_{\Delta t}(t,z) = \sum_{j,l=-\infty}^{\infty} \delta(t-j\Delta t)\delta(z-l\Delta t), \tag{79}$$

and the two-dimensional windowing function is given by

$$\Pi_T(t,z) = \Lambda_T(t) \cdot \Lambda_T(z) \tag{80}$$

$$\Lambda_T(t) = \begin{cases} 1 - 2\left|\dfrac{t}{T}\right| & \text{if } |t| \le \dfrac{T}{2}, \\ 0 & \text{else} \end{cases} \tag{81}$$

where $\Lambda_T(t)$ and $\Lambda_T(z)$ have support for times $t, z \in [-T/2, T/2]$ as before, but now we have a triangular windowing function instead of the rectangular windowing function. In the above review and for the remainder of this analysis we take $M = N$ for simplicity, though what follows is readily generalized to $M \ne N$.

**Connection between discrete and continuous pictures**

As we have previously discussed, the discrete and finite matrix $F[k, m]$ is related to the continuous time Fourier transform $G(\omega, \eta) = \mathcal{FT}[g(t, z)](\omega, \eta)$ at the discrete frequencies $\omega_k = 2\pi k/T$ and $\eta_m = 2\pi m/T$ via

$$F[k,m] := G(\omega_k, \eta_m) \tag{82}$$

with $k = 0,1,... N - 1$ and $m = 0,1, ... , M - 1$. Similarly, $f[j, l]$ is related to this underlying continuous picture via

$$\hat{f}[j,l] := f(j\Delta t, l\Delta t)\Pi_T(j\Delta t, l\Delta t) \tag{83}$$

$$f[j,l] := \sum_{j',l'\in\mathbb{Z}} \hat{f}[j-j'N, l-l'M] \tag{84}$$

where the $\hat{f}[j, l]$ is defined for all $j, l \in \mathbb{Z}$ and $f[j, l]$ is defined for $j = 0, 1,... N - 1$ and $l = 0,1,...M - 1$. In summary, we have two underlying continuous functions related by a continuous time Fourier transform $G(\omega, \eta) = \mathcal{FT}[g(t, z)](\omega, \eta)$ and two matrices related by a two-dimensional discrete time Fourier transform $F[k, m] = \mathcal{DFT}[f[j, l]]$ and we can relate these two pictures via equation (82) and equation (83).

In our implementation, the Fourier domain constraints are that the true spectrum is both real and positive, although in some implementations these constraints may be relaxed or even abandoned.

***Target DFT is real and positive***

Now we can use the relationship between the continuous and discrete pictures to show that we can define a 2D phase retrieval problem where the DFT we wish to reconstruct is both real and positive. Knowing this justifies using these facts as constraints in the HIO algorithm to get reliable performance.

First, we can show that $F[k, m]$ will be positive when we choose $H_D$ to commute with $H$ and as a consequence of choosing the triangular window function to be that of equations (80) and (81). This follows from establishing that $G(\omega, \eta)$ is positive, which then ensures $F[k, m]$ is positive as it is related to this continuous function via equation (82). One can write $G(\omega, \eta)$ as a convolution as

$$G(\omega,\eta) = \mathcal{FT}[f(t,z)] * \mathcal{FT}[\Pi_T(t,z)] * \mathcal{FT}[\text{Ш}_{\Delta t}(t,z)] \tag{85}$$

We will evaluate each term in this convolution in turn. First, we have

$$\mathcal{FT}[f(t,z)] = \int_{-\infty}^{\infty}\int_{-\infty}^{\infty} f(t,z)e^{-i\omega t}e^{-i\eta z}\,dt\,dz$$

$$= \int_{-\infty}^{\infty}\int_{-\infty}^{\infty} \langle\psi|e^{itH+izH_D}|\psi\rangle\,e^{-i\omega t}e^{-i\eta z}\,dt\,dz \tag{86}$$

Now we use the fact that $[H, H_D] = 0$ to write both Hamiltonians in their shared eigenbasis as $H = \Sigma_i E_i \Pi_i$ and $H_D = \sum_i E_i^D \Pi_i$ where $\Pi_i = |E_i\rangle\langle E_i|$ is the projector onto this shared eigenbasis. This gives

$$\mathcal{FT}[f(t,z)] = \int_{-\infty}^{\infty}\int_{-\infty}^{\infty} \langle\psi|\Pi_i|\psi\rangle e^{itE_i+izE_i^D}e^{-i\omega t}e^{-i\eta z}\,dt\,dz$$

$$= \sum_i |\langle\psi|E_i\rangle|^2 \int_{-\infty}^{\infty} e^{it(E_i-\omega)}\,dt \int_{-\infty}^{\infty} e^{iz(E_i^D-\eta)}\,dz$$

$$= 4\pi^2 \sum_i |\langle\psi|E_i\rangle|^2 \delta(\omega - E_i)\delta(\eta - E_i^D) \tag{87}$$

This function is positive for all $\omega$ and $\eta$. This is why we have introduced a commuting dummy Hamiltonian. If $H$ and $H_D$ do not commute it is possible to have negative values in this step, which will need to be addressed by making changes to later processing steps.

The second term to evaluate is the Fourier transform of the windowing function. This is

$$\mathcal{FT}[\Pi_T(t,z)] = \int_{-\infty}^{\infty}\int_{-\infty}^{\infty} \Lambda_T(t)\Lambda_T(z)e^{-i\omega t}e^{-i\eta z}\,dt\,dz$$

$$= \frac{8\sin^2\left(\frac{T\omega}{4}\right)}{T\omega^2}\frac{8\sin^2\left(\frac{T\eta}{4}\right)}{T\eta^2} \tag{88}$$

We see that this is now positive for all $\omega$ and $\eta$. Note that one could have used any windowing function with a positive Fourier transform. We have chosen a simple triangular window as its Fourier transform is positive as is shown here.

This is the simplest effective windowing function, which corresponds to a triangular window multiplying the time series $f[j, l]$. We can ensure $F[k, l]$ is real by exploiting the fact that $f[j, l] = f^*[-j, -l]$ and by simply ordering our time-series samples appropriately. Other windowing functions are possible in principle, and this choice may be sub-optimal as it discards much of the information obtained at longer evolution times.

In addition to the constraints that the signal is real and positive, we also incorporate knowledge of the phases for $f[0, l]$. This information can be computed classically in any given experiment as these points correspond to evolution under $H_D$ only, provided the initial state it acts upon is also classically simulable.

Finally, there is $\mathcal{FT}[\text{Ш}_{\Delta t}(t, z)]$. Recall that the Fourier transform of a Dirac comb is another Dirac comb, as explained above. This establishes that $G(\omega, \eta)$ is a positive function and therefore that $F[k, m] = G(\omega_k, \eta_m)$ is always positive. This allows us to use this as a constraint to drive the HIO algorithm.

We can also show that F is real, thus making this a second suitable driving constraint. For F to be real the 2D signal must satisfy

$$f[j, l] = f^*[N - j, M - l] \tag{89}$$

modulo $N$ and $M$ and where $j = 0, 1, \ldots, N - 1$ and $l = 0, 1, \ldots, M - 1$. Any signal satisfying equation (89) will have a real discrete Fourier transform. We can now show that our signal satisfies this condition using the fact that

$$\hat{f}[j, l] = \hat{f}^*[-j, -l] \tag{90}$$

and the periodic definition of $f[j, l]$. We have:

$$f^*[N-j, M-l] = \sum_{l', j' \in \mathbb{Z}} \hat{f}^*[N-j-Nj', M-l-Ml']$$

$$= \sum_{l'', j'' \in \mathbb{Z}} \hat{f}^*[-(j-Nj''), -(l-Ml'')]$$

$$= \sum_{l'', j'' \in \mathbb{Z}} \hat{f}^*[(j-Nj''), (l-Ml'')]$$

$$= f[j, l]. \tag{91}$$

Therefore $f[j, l]$ satisfies equation (89) and therefore its discrete Fourier transform $F[k, m]$ is real. Hence, we can use this fact to drive the HIO algorithm.

### *Implementation and Numerical Results*

We consider a specific example of this protocol and test the performance of this algorithm for instances of the Fermi-Hubbard model. For the dummy Hamiltonian $H_D$ we choose

$$H_D = \sum_{i \in V, \sigma} a_{i\sigma}^\dagger a_{i\sigma} \tag{92}$$

which is the total number operator. Under the Jordan-Wigner encoding, this maps to

$$H_D \rightarrow \sum_{i \in V, \sigma} \left( I_{i\sigma} - Z_{i,\sigma} \right). \tag{93}$$

This makes $e^{itH_D}$ implementable via a single layer of single qubit rotation gates. When $|\psi\rangle$ is a superposition of computational basis states we then satisfy the requirement that $|\psi\rangle$ must not be an eigenstate of $H_D$.

### Image Reconstruction

First, we demonstrate that the HIO algorithm works well given quantum signals set up as previously described. We test this numerically using a 2D spin Fermi-Hubbard model as $H$ in equation (76), with the hopping strength $\tau = 1$ and on-site interactions $U = 4$. For the commuting Hamiltonian $H_D$ we use the total particle number operator and observed that this worked well in practice, but note that other choices of $H_D$ are possible. The results have already been displayed in Figures 7a to 7c. We obtain this numerically through brute force calculation of $f$ to define the target spectrum we want to reconstruct $F[k, m]$.

### *Spectral Information*

Now we extract the desired information about the spectrum of $H$ from the recovered signal $F[k] := \mathcal{DFT}[f, [j, 0]]$. The result of this is shown in Figures 8a and 8b, showing the recovered 1D spectrum following the image reconstruction in Figures 7a to 7c. We stick to the example of a $2 \times 2$ Fermi-Hubbard model, where Figure 8a shows the result of this procedure for the choice of $|\psi\rangle$ as the uniform superposition over all computational basis states. Figure 8b shows the same problem but we have included the effect of sampling noise, we have 1000 per time series point. Note that Figures 8a and 8b display $F$ as a function of $k$ to more clearly distinguish the target and reconstructed signals. It may in practice be more natural to plot $F$ as a function of the discrete frequencies $\omega_k$ (as in Figures 9a and 9b), where we recall that $\omega_k = 2\pi k/T$ amounts to a simple scaling, without qualitatively affecting the results.

We show the true signal in grey and the recovered in black. Here the true signal includes the effect of the triangular window, by definition. The noiseless plot is obtained from the image reconstruction of Figure 7c, and the noisy plot is obtained from an analogous noise image reconstruction. To obtain these plots we have shifted the recovered signal so that the trivial ambiguity is eliminated. This is to demonstrate the degree of overlap between the true and recovered signal up to this ambiguity. We see that in the noiseless case the spectrum is recovered well. When we introduce sampling noise the shape and location of the peaks in the spectrum are recovered, but there is a constant positive offset in the spectrum. This is considered acceptable behaviour in the presence of noise as the recovered spectrum is *qualitatively* similar to the true spectrum. It is therefore clear that this behaviour can in principle be undone; for example, positive offset can be calculated and shifted back to overlap more faithfully with the true spectrum.

These numeric tests were necessary as there as we have no proof of convergence for the HIO algorithm. We expected we have set-up a real and positive signal as the HIO has been observed to work well on such signals in practice [28]. We see that the signals we have defined can be retrieved, but emphasize that they are convolutions of the "true" Hamiltonian spectrum with the square of a sinc function.

In this 2D example, the HIO algorithm converges properly if the spectrum solution is positive. This is ensured in this example with: (1) $H_D$ commuting with $H$ and (2) using a triangular time-window. This helps because a rectangular time-window has as Fourier transform of a sinc function (sinc($x$) = sinc($x$) = sin($x$)/$x$) that has negative values. This produces instabilities in the HIO algorithm and prevents proper convergence on the optimal solution.

By using a triangular time-window that has an all-positive Fourier transform (specifically, a sinc$^2$ function). This has a cost that the sinc$^2$ function results in a larger widening of the spectral lines, as we convolute by a function (sinc$^2$) that is wider than a normal sinc function. Other windowing may be desirable with these factors in mind.

### *Comparative Overview* of *Proposed Methods*

We are now ready to compare the performance of these two approaches in the context of spectral estimation of the Fermi-Hubbard model. We choose a $3 \times 3$ instance of the (spinful) Fermi-Hubbard model (with $|U/\tau| = 4$) and set up the following task. The target spectrum is the ideal solution obtained from the DFT of the ideal time series $f[j] = \langle\psi| \exp(ijH\Delta t) |\psi\rangle$ for time step $\Delta t = 0.12$ and maximum time evolution of $T = 15$, where the time series is obtained using brute-force calculation of $\exp(ijH\Delta t)$ (for varying $j$), with the input state being

$$|\psi\rangle = \frac{1}{\sqrt{3}} (|010101010\ 010101010\rangle + |110101100\ 010100110\rangle + |011101010\ 000110111\rangle) \quad (94)$$

where the first (last) 9 bits are associated with the occupation of the spin-up (spin-down) modes. This state was chosen as it is suitable for our implementations of the vectorial phase retrieval algorithm and the two-dimensional phase retrieval algorithm. It does not provide an unfair advantage to either adaption - and importantly - it is not an eigenstate of $H_D$ and the states required in the vectorial phase retrieval algorithm remain easy to prepare.

To get as close as possible to a fair comparison of both techniques we allocate a budget of $N_S = 10^9$ circuit runs to our simulation of each phase retrieval technique. This directly limits the number of circuits runs required for each technique to retrieve each $|f[j]| = |\langle\psi| \exp(ijH\Delta t) |\psi\rangle|$ which translates into shot noise on each value, which can later affect the performance of the phase-retrieval reconstruction. More concretely, we model the effect of shot noise induced by the finite number of samples during the statistical estimation of the time-series by sampling from a binomial distribution with success probability $|f[j]|^2$ (Recall the above discussion on the Fermi-Hubbard model).

We chose to set up a comparison in this fashion as both methods have a variety of parameters which can be altered to ensure quality performance in the presence of sample noise. By fixing only the total number of runs we can compare the performance of both methods on the same footing. For example, with vectorial phase-retrieval there is now a trade-off between the number of additional secondary states $R$ permitted and the total number of samples used for obtaining an estimate of each $|f[j]|$. The same is true for the two-dimensional phase-retrieval implementation and the parameter $M$. The optimum setting for each implementation remains an open question and depends on the particular problem under consideration.

Figures 9a and 9b compare the two techniques on the same problem with the same sample budget of $5 \times 10^9$. We target the spectrum given the input state $|\psi\rangle$ in equation (94) for the Fermi-Hubbard Hamiltonian $H$ on a lattice of size $3 \times 3$ with on-site interaction strength $U = 4$ and hopping strength $\tau = 1$, with time step $\Delta t = 0.12$ and maximum time evolution of $T = 15$. In both plots the ideal solution is obtained from $f[j] = \langle\psi| \exp(ijH\Delta t) |\psi\rangle$ and shown in grey. Figure 9a shows the estimated spectrum (black) for vectorial phase-retrieval with R=40 and $3.3 \times 10^5$ shots per point in time $j$ per signal. Figure 9b shows the estimate spectrum (black) and ideal solution (grey) for two-dimensional phase-retrieval with $M = 25$, $\beta = 0.9$ and $L = 5000$ and $1.6 \times 10^6$ shots per $f[j, l]$.

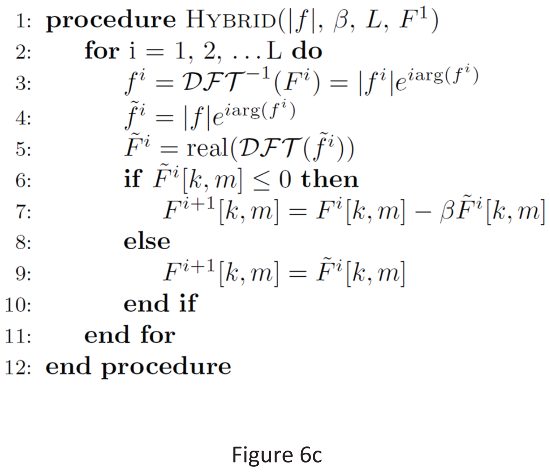

For the 2D implementation we took $M = 25$ and used 320,000 samples per $f[j]$. In conjunction with $\beta = 0.6$ and $L = 10,000$ iterations the HIO algorithm produces the spectrum shown in Figure 6. For the vectorial phase retrieval implementation, we used R = 40 secondary states, and $6 \times 10^5$ samples per signal per point in time $j$. We observe that the 2D HIO method gives a poorer reconstruction in comparison to VPR. In particular, the HIO algorithm struggles to recover the amplitudes of the peaks. It can be checked that the 1-norm (normalized by $N$) of the vector with entries |$F_{\text{reconstructed}}[k]$| - |$F_{\text{exact}}[k]$| is 0.0018 for VPR and 0.0028 for 2DPR, confirming the intuition from a visual inspection of Figures 9a and 9b. One can also observe that the peaks recovered using 2D HIO appear slightly broadened (which generally leads to a lower resolution on the recovered spectrum), this is due to the windowing function we use to enforce the positivity constraint we use to drive HIO. This is not necessarily a fundamental fact, and one could potentially adapt more advanced modern two-dimensional phase retrieval methods to quantum phase-estimation problem while also exploiting other commuting Hamiltonians $H_D$ that could potentially lead to better results. The restriction to an 18-mode Fermi-Hubbard instance is inherent to our numerical modelling demonstration, but we expect that the phase-retrieval algorithms can be applied to system sizes beyond the classically tractable ones and can be applied to experimental data from actual quantum hardware.

### *Comparison with the standard approach*

There are two key advantages of using phase-retrieval compared with the standard statistical phase-estimation approach that uses controlled time-evolution: (1) It removes a significant source of errors resulting from the sensitivity of the original scheme to the decoherence of the single qubit controlling the dynamics; (2) It requires a smaller number of gates and less circuit depth required to implement the time evolution compared to its controlled counterpart. In the table below we summarise the reduction in circuit complexity achieved by phase retrieval for three simple examples that capture the essence of the discussion: i) the 1D Transverse-Field Ising Model (TFIM) implemented on hardware with all-to-all connectivity; ii) 1D TFIM with matching hardware connectivity; iii) the 2D Fermi-Hubbard model with square-lattice hardware connectivity. In each case we calculate the complexity of 1D vectorial phase retrieval. We do not take into account the cost of preparing or uncomputing the initial state $|\psi\rangle$, which we assume to be simple, nor the cost of preparing a superposition of $|\psi\rangle$ and another state. In our experiments, the superposition used was essentially a GHZ state, this is not a fundamental requirement. In the case of quantum hardware with all-to-all connectivity, a quantum circuit computing a unitary operator $U$ can be converted into a quantum circuit for computing controlled-$U$ by replacing every CNOT gate with a Toffoli gate (requiring 6 CNOT gates each), and every single-qubit unitary $V$ with a controlled-$V$ operator (requiring 2 CNOT gates each). Despite being only a constant factor gain, this can make a significant difference to the ability of near-term quantum computers to obtain meaningful results, by increasing the number of accessible Trotter steps. However, the difference in complexity between the two situations can be significantly greater if there are restrictions on hardware connectivity, as in 1D and 2D architectures. It is instructive to compare the bounds obtained in a realistic regime for near-term quantum algorithms. As an example, assume that we have a quantum computer with 100 qubits that can execute quantum circuits of CNOT depth at most 100 accurately. Then, based on the algorithmic complexities in Table 2, we could not even implement 1 Trotter step for the 1D TFIM under 1D connectivity if the standard method is used, but we could implement 25 Trotter steps using phase retrieval. The reductions in gate count are less significant than depth, but are still relatively substantial (e.g. approximately a factor of 3 for the 1D TFIM).

A key aspect of making phase-retrieval work is to enlarge the problem that we wish to solve in a computationally inexpensive way, either by enlarging the set of input states included in the procedure, or by implementing additional (comparatively simple) time dynamics. The saving in terms of circuit depth therefore comes at a price of a larger number of circuits to be implemented and required shots. Nonetheless, we have shown that phase-retrieval is not out of reach of current hardware.

To get a sense of how large the reduction in complexity can be, first observe that if the quantum hardware allows for all-to-all connectivity, any quantum circuit computing a unitary operator $U$ can be converted into a quantum circuit for computing controlled-$U$ by replacing every CNOT gate with a Toffoli gate, and every single-qubit unitary V with a controlled-V operator. A Toffoli gate can be implemented using 6 CNOT gates and controlled-$V$ can be implemented using 2 CNOT gates for any single-qubit unitary $V$. So, if the original quantum circuit had $c$ CNOT gates and $s$ single-qubit gates, the controlled circuit will have at most $6c + 2s$ CNOT gates - at most a constant factor increase in complexity, if $c \geq s$ (for example), but still relatively substantial for near-term applications. However, the difference in complexity between the two situations can be greater if there are restrictions on hardware connectivity, or if one considers circuit depth instead.

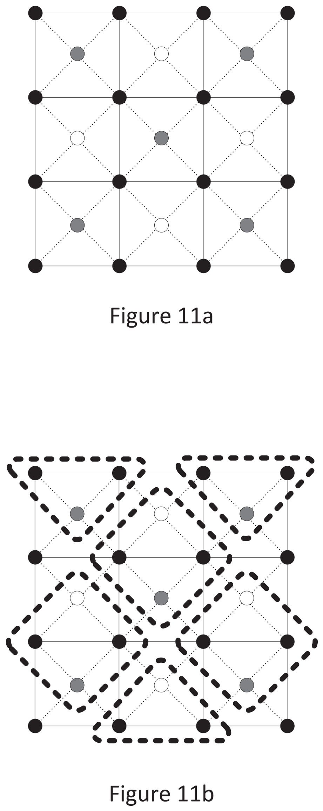

Figures 11a and 11b show a possible layout of the spinless Fermi-Hubbard model on a lattice with 2D connectivity. The connectivity is indicated by dashed lines while the Fermi-Hubbard lattice interactions are indicated by solid lines. The face qubits in white are needed for the compact encoding. The face qubits in grey are used to implement geometrically local control. The diagram on the right indicates one of the four Trotter layer groupings of interactions (indicated by thick dotted lines) which can be implemented in parallel, in this case horizontal hopping interactions. With the control and encoding qubits these interactions are Pauli weight-4.

Table 1: The cost of implementing $k$ Trotter layers for several Hamiltonians, an $n$-qubit transverse field Ising model and an $n \times n$ spinless Fermi-Hubbard model (note that $\lceil . \rceil$ denotes the ceiling function). "Depth" is CNOT depth. Note that the algorithms achieving the minimal CNOT depth and CNOT count may be different. "2D FH" is Fermi-Hubbard without spin. We consider the spinless Fermi-Hubbard model for simplicity, and these calculations are approximate.

| Model | H/w | CNOTs (PR) | CNOTs (no PR) | Depth (PR) | Depth (no PR) |
|---|---|---|---|---|---|
| 1D TFIM | All-to-all | $(2n - 2)k$ | $(6n - 4)k$ | $4k$ | $2\lceil \log_2 n \rceil + 10k$ |
| 1D TFIM | 1D | $(2n - 2)k$ | $6(n - 1) + (6n - 4)k$ | $4k$ | $6\lceil n/2 \rceil + 10k$ |
| 2D FH | 2D | $32kn(n - 1)/2$ | $48kn(n-1)/2$ $+ 6\lceil (n-1)^2/2 \rceil$ | $32k$ | $48k + 3(n - 2)$ |

Here we approximately calculate the reduction in circuit complexity achieved by phase retrieval for several simple examples: the 1D and 2D Ising model with transverse field, both all-to-all and with matching hardware connectivity, and the 2D Fermi-Hubbard model with square-lattice hardware connectivity. In each case, we consider the complexity of implementing $k$ Trotter steps - i.e. $k$ repetitions of an operator of the form $\Pi_{j=1}^{m} \exp(i\theta_j H_j)$ for a Hamiltonian of the form $H = \sum_j H_j$. Note that it is important to consider $k > 1$ steps because the cost of interacting with the control qubit can be amortised across multiple steps by preparing a GHZ state, as we will see below. This approach may add its own difficulties in terms of rendering the circuit more prone to decoherence, but we will ignore this issue for simplicity. We also stress that there is no guarantee that the implementations we describe here are optimal.

### 1D Ising model with transverse field

This Hamiltonian is defined as $H = \sum_{i=1}^{n-1} Z_i Z_{i+1} + \sum_{j=1}^{n} X_j$. A Trotter step can be implemented using $2(n - 1)$ CNOT gates and in CNOT depth 4. To implement a controlled Trotter step, we need to implement controlled-$e^{i\theta ZZ}$ and controlled-$e^{i\theta X}$ gates. These have circuits using four and two CNOT gates, respectively. With all-to-all connectivity, then, each Trotter layer can be implemented using $4(n - 1) + 2n = 6n - 4$ CNOT gates. Implementing these in a straightforward way would lead to a high-depth circuit, as each controlled unitary acts on the same control qubit. However, we can reduce the depth by constructing a GHZ state of $n$ qubits, where each gate that needs to be applied in parallel uses a different qubit of this state. The CNOT depth of producing such a state given all-to-all connectivity is at most $\lceil \log_2 n \rceil$. Following this, we can split the time-evolution steps into three groups ($ZZ$ terms on (odd, even) qubits, $ZZ$ terms on (even, odd) qubits, and $X$ terms) and implement each group in parallel. At the end, the GHZ state is uncomputed, before measuring the control qubit as in the usual protocol. The total CNOT depth (with all-to-all connectivity) is then $2\lceil \log_2 n \rceil + 10k$ as each layer can be implemented in CNOT depth 10.

With 1D connectivity, the situation is more difficult as we need to create a distributed GHZ state. This can be done with a small extra cost in gate count, but a linear cost in depth. Now we include an ancilla qubit for controlled operations next to each qubit in the original 1D graph. Once these qubits have been prepared in a GHZ state, we can perform controlled operations across any pair of qubits in the original graph without the need for any swaps. The map $|000\rangle \mapsto |000\rangle$, $|100\rangle \mapsto |101\rangle$ can be carried out using three CNOT gates in 1D connectivity ($\text{CNOT}_{12}$, $\text{CNOT}_{23}$, $\text{CNOT}_{12}$), so the required state can be prepared using $3(n - 1)$ CNOT gates and in CNOT depth $3\lceil n/2 \rceil$. Once this has been prepared, the costs for the time-evolution part are the same as for all-to-all connectivity. The total CNOT cost for $k$ Trotter steps, including the cost of uncomputing the GHZ state, is then $6(n - 1) + (6n - 4)k$, and the CNOT depth is $6\lceil n/2 \rceil + 10k$.

### 2D Fermi-Hubbard model

Consider an $n \times n$ Fermi-Hubbard model without spin on a 2D lattice. Consider even $n$ only and use the compact fermionic encoding [33] and layout shown in Figures 11a and 11b. The full Hamiltonian is made of horizontal $\Sigma_{\langle i,j \rangle}(X_i X_j Y_{f(i,j)} + Y_i Y_j Y_{f(i,j)})/2$ and vertical $\Sigma_{\langle i,j \rangle} \pm (X_i X_j X_{f(i,j)} + Y_i Y_j X_{f(i,j)})/2$ interactions, where the sum is over pairs of horizontally or vertically adjacent sites on an $n \times n$ lattice and $f(i,j)$ are face qubits placed on this lattice. The Hamiltonian can be split into four sets of $n(n - 1)/2$ interactions. Within each group all interactions can be performed in parallel. Every interaction consists of two weight-3 (at most) Pauli interactions. Therefore, each interaction can be done using 8 CNOT gates, meaning that a full Trotter step will have a depth of 32 CNOT gates and the total number of CNOT gates will be $32 n(n - 1)/2$. This calculation is approximate and simply treats edge interactions identically to those in bulk. When performing controlled evolution under this Hamiltonian one possible layout of control ancilla qubits is shown in Figures 11a and 11b. As in the case of the Ising model above, we consider creating a distributed GHZ state so that we can implement local control. This particular selection uses the remaining face qubits not used by the compact encoding. Now every "controlled" interaction can be performed by evolving under two weight-4 Pauli terms, where the interaction terms have been augmented so that they include a Pauli-$Z$ on the local "control" ancilla. Therefore, each interaction can be done using 12 CNOT gates, meaning that a full Trotter step will have a depth of 48 CNOT gates and the total number of CNOT gates will be $48n(n - 1)/2$. (This all uses the standard approach to performing a controlled rotation by a weight-k Pauli operation [34]). The additional cost of creating the distributed GHZ state depends on the number of control ancillas $\lceil (n - 1)^2/2 \rceil$ and their connectivity. The total count of CNOT gates will be $3 \times \lceil (n - 1)^2/2 \rceil$. The depth is approximately $3(n - 2)/2$ (for even lattices with $n > 2$). One can begin building the GHZ state from the central control qubit and move outward along the branches approximately in parallel. It takes 3 CNOT gates to spread the entanglement to the nearest control qubit, shown in grey. This is done in the same manner as described for the Ising model.

In all of the above costings, we do not include the cost of preparing (or uncomputing) the initial state $|\psi\rangle$ - which we assume to be simple - nor the cost of preparing a superposition of $|\psi\rangle$ with another state. In some situations, this may be fairly substantial, e.g. if this superposition is a GHZ state.

### *Discussion*

We have demonstrated how to design phase-retrieval algorithms for the problem of statistical phase estimation. These algorithms allow for the reconstruction of the phases of the time series (time evolution) of a quantum state $|\psi\rangle$ with respect to a given Hamiltonian $H$, while only having access to their absolute values. To achieve this seemingly impossible goal, one needs to address a more general problem involving (the absolute values of) a larger set of time series, resulting from increasing the set of input states or enlarging the range of time-evolutions available to us. To overcome the technical problems outlined above we have re-designed two well-known phase retrieval algorithms, vectorial phase retrieval and two-dimensional phase retrieval, which we demonstrate good performance in retrieving the spectrum of a Fermi-Hubbard model.

In the vectorial phase-retrieval scenario, we obtain (absolute values of) time series corresponding to time evolution of multiple input states, but - more importantly - time evolution of their superpositions. Finding the right set of quantum states to successfully complement our target input state $|\psi\rangle$ while also being comparatively easy to generate, requires some non-trivial design that will need to be adapted to the Hamiltonian and target input state of interest. We also showed that despite quantum phase estimation being a one-dimensional signal processing problem, one can exploit the benefits of two-dimensional phase-retrieval by adding a quench evolution governed by a dummy Hamiltonian $H_D$ commuting with $H$.

Despite the two techniques being rather different in design and post-processing algorithms, there are analogies in their adaptation to quantum phase estimation. One could see the time-evolution with dummy Hamiltonian $H_D$ as an alternative way of generating a non-trivial family time series in addition to the one of the target input state $|\psi\rangle$, in a similar fashion as vectorial phase retrieval exploits multiple (state evolution) time series corresponding to different input states and their superpositions.

We demonstrated that the performance of the algorithms is resilient to shot noise affecting the estimation of the time-series resulting from the limited number of accessible circuit runs. Further investigation of the impact of circuit imperfection on the performance of the algorithm is left to future work, but as a first proxy one can model the effect of gate imperfections by increasing the value of the shot noise.

The present disclosure extends to computers or other processing means for enacting the above methods, such computers being adapted and/or configured to enact those steps. This may further include a quantum computer for generating the time series by measurement an output of a quantum computer having encoded thereon the operation of $H$ acting on the input state for a time t. The classical processor may therefore be operatively coupled to the quantum computer to supply control signals thereto, and to receive outputs therefrom. Similarly, computer programs or software arranged to cause, the instructions encoded therein are executed by a computer, the methods set out herein to be enacted, are also disclosed herein.

Finally, the present disclosure contains the following clauses.

Clause 1) A method for reconstructing phase information in a time series, the time series being derived from a time evolution of an input state acted on by a Hamiltonian, H, the method comprising:

(a) receiving an input state, $|\psi\rangle$, a total time evolution time, T, and the Hamiltonian, *H;*

(b) enacting a time evolution of the input state using H to generate an absolute value of a first time series, $|f_1|$, and generating at least one additional family of absolute values of time series, wherein each time series is a discrete or continuous function of time *t,* for $t \in [0, T]$; and

(c) extracting phase information for the time series of the input state from the absolute values of the first time series and the at least one additional family of absolute values of time series.

Clause 2) The method of clause 1, wherein the at least one additional family of absolute value time series includes, for $r = 1, ... R$, a set of:

$R$ second absolute value time series, $\left|f_2^{(r)}\right|$, derived by enacting the time evolution using $H$ on $R$ additional input states, $|\varphi_r\rangle \neq |\psi\rangle$, wherein $|\varphi_i\rangle \neq |\varphi_j\rangle$ for $i \neq j$;

$R$ third absolute value time series $\left|f_3^{(r)}\right|$, derived by enacting a time evolution using $H$ on a superposition of two input states, $(|\psi\rangle + |\varphi_r\rangle)$; and

$R$ fourth absolute value time series $\left|f_4^{(r)}\right|$, derived by enacting a time evolution using $H$ on a superposition of two input states $(|\psi\rangle + i|\varphi_r\rangle)$.

Clause 3) The method of clause 2, wherein the phase information is extracted from the at least one additional family of absolute value time series by optimising a cost function applied to the first, second, third, and fourth absolute value time series for each r $\in$ {1, ..., $R$}.

Clause 4) The method of clause 3 wherein the cost function includes a relative phase term:

$$Q_{\text{interference}}(\boldsymbol{y}) := \sum_{r=1}^{R}\left[\sum_{j=0}^{N-1}\left|y_j - y_j^{(r)}G_r[j]/|G_r[j]|\right|^2\right]$$

wherein $G_r$ represents estimates of the relative difference in phase between $|\psi\rangle$ and $|\varphi_r\rangle$ for a value of r and $\boldsymbol{y}$ is a vector encoding the phase of each time series at discrete time steps.

Clause 5) The method of clause 3 or clause 4, wherein the cost function includes a support term:

$$Q_{\text{support}}^{(s)}(\boldsymbol{y}) := \sum_{k=s}^{N-1}\left|\sum_{j=0}^{N-1}|f_1[j]|y_j\exp\left[\frac{-i2\pi jk}{N}\right]\right|^2 + \sum_{r=1}^{R}\left[\sum_{k=s}^{N-1}\left|\sum_{j=0}^{N-1}\left|f_2^{(r)}[j]\right|y_j^{(r)}\exp\left[\frac{-i2\pi jk}{N}\right]\right|^2\right]$$

wherein $\boldsymbol{y}$ is a vector encoding the phase of each time series at discrete time steps.

Clause 6) The method of any one of clauses 2 to 5, wherein the input states $|\psi\rangle$ and $|\varphi_r\rangle$ are selected so that their corresponding times series, $f_1$ and $f_2^{(r)}$, are spectrally independent of one another and their Fourier transforms each have no support outside a finite interval.

Clause 7) The method of clause 1, wherein the at least one additional family of absolute value time series includes providing a dummy Hamiltonian, $H_D$, which implements a time evolution in an independent time dimension, $z$, and wherein $|f_1|$ and the at least one additional family of absolute value time series collectively form a two-dimensional absolute value time series:

$$|f(t,z)| := \left|\langle\psi|e^{itH}e^{izH_D}|\psi\rangle\right|.$$

Clause 8) The method of clause 7, wherein the dummy Hamiltonian $H_D$ commutes with the Hamiltonian $H$.

Clause 9) The method of any of clauses 7 or 8, wherein the input state $|\psi\rangle$ is not an eigenvector of $H_D$.

Clause 10) The method of any of clauses 7 to 9, wherein the dummy Hamiltonian $H_D$ is the total particle number operator.

Clause 11) The method of any one of clauses 7 to 10, wherein the dummy Hamiltonian $H_D$ is a sum of single qubit Pauli-Z operators.

Clause 12) The method of any one of clauses 7 to 11, wherein the dummy Hamiltonian $H_D$ is encoded using a Jordan-Wigner mapping as:

$$H_D = \frac{1}{2}\sum_{i\in V,\sigma}(I_{i\sigma} - Z_{i\sigma}).$$

Clause 13) The method of any one of clauses 7 to 12, wherein phase information is extracted from $|f(t, z)|$ by performing a hybrid input-output algorithm to iteratively converge on a reconstructed phase.

Clause 14) The method of clause 13 wherein the hybrid input-output algorithm loops the following four steps, where the index $i$ tracks the iteration number of the loop and $f^0([j, l]) := f([j, l]) := |\langle \psi | e^{it_j H} e^{iz_l H_D} | \psi \rangle | e^{\theta}$, where $\theta$ is a complex phase randomly chosen in the interval $[0, 2\pi]$:

(i) from $f^i[j, l]$, generate a new two-dimensional time series, $\tilde{f}^i[j, l]$, such that $|\tilde{f}^i[j, l]| = |f^i[j, l]|$ and the phase of $\tilde{f}^i[j, l]$ is the same as the phase of $f^i[j, l]$;
(ii) perform a discrete Fourier transform on $\tilde{f}^i[j, l]$ to derive $\tilde{F}^i[k, m]$;
(iii) where $\tilde{F}^i[k, m] \geq 0$, set $F^{i+1}[k, m] = \tilde{F}^i[k, m]$, and otherwise, set $F^{i+1}[k, m] = F^i[k, m] - \beta \tilde{F}^i[k, m]$, where $0 \leq \beta \leq 1$ is a tuneable parameter selected by a user;
(iv) perform an inverse discrete Fourier transform on $F^{i+1}[k, m]$ to derive $f^{i+1}[j, l]$.

Clause 15) The method of clause 14, wherein steps (i) to (iv) are repeated until a convergence condition is met.
Clause 16) The method of clause 15, wherein the convergence condition comprises:

a maximum number of loops; or
a threshold value where the value of $\tilde{f}^i[j, l]$, $f^i[j, l]$, $F^i[k, m]$, or $\tilde{F}^i[k, m]$ changes by less than the threshold value in successive iterations.

Clause 17) The method of any one of clauses 7 to 16, wherein a windowing function is applied to $|f(t, z)|$ prior to extracting the phase information,
**[0254]** Clause 18) The method of clause 17, wherein the windowing function is a triangular windowing function.
Clause 19) The method of any preceding clause, wherein each absolute value time series is a discrete time series comprising values at $N$ times and wherein an input parameter in step (a) of clause 1 is the size of a time step, $\Delta t = T/N$.
Clause 20) The method of clause 19, wherein each absolute value time series is derived by measuring an output of a quantum computer having encoded thereon the operation of $H$ acting on the input state for times $t_j$, where $j \in 0, 1, \ldots, N$ and $t_j = j\Delta t$.
Clause 21) The method of clause 20, wherein each time series is extracted from a plurality of measurements of the output of the quantum computer for that time series.
Clause 22) An apparatus for reconstructing phase information in a time series, the time series being derived from a time evolution of an input state acted on by a Hamiltonian, $H$, the apparatus comprising at least one processor configured to:

(a) receive an input state, $|\psi\rangle$, a total time evolution time, $T$, and the Hamiltonian, $H$;
(b) enact a time evolution of the input state using $H$ to generate an absolute value of a first time series, $|f_1|$, and generate at least one additional family of absolute values of time series, wherein each time series is a discrete or continuous function of time $t$, for $t \in [0, T]$; and
(c) extract phase information for the time series of the input state from the absolute values of the first time series and the at least one additional family of absolute values of time series.

Clause 23) The apparatus of clause 22, further comprising a quantum computer for generating the time series by measurement of an output of a quantum computer having encoded thereon the operation of $H$ acting on the input state for a time $t$, and wherein the classical processor is operatively coupled to the quantum computer to supply control signals thereto, and to receive outputs therefrom.
Clause 24) The apparatus of clause 22 or clause 23, the apparatus further being arranged to carry out any of the methods set out in clauses 2 to 21.
Clause 25) A computer program comprising instructions which, when enacted by a processor, cause the processor to enact the method steps of any of clauses 1 to 12.

**Claims**

1. A method for reconstructing phase information in a time series, the time series being derived from a time evolution of an input state acted on by a Hamiltonian, $H$, the method comprising:

(a) receiving an input state, $|\psi\rangle$, a total time evolution time, $T$, and the Hamiltonian, $H$;
(b) enacting a time evolution of the input state using $H$ to generate an absolute value of a first time series, $|f_1|$, and

generating at least one additional family of absolute values of time series, wherein each time series is a discrete or continuous function of time $t$, for $t \in [0, T]$; and

(c) extracting phase information for the time series of the input state from the absolute values of the first time series and the at least one additional family of absolute values of time series.

2. The method of claim 1, wherein the at least one additional family of absolute value time series includes, for $r = 1, ... R$, a set of:

$R$ second absolute value time series, $\left|f_2^{(r)}\right|$, derived by enacting the time evolution using $H$ on $R$ additional input states, $|\varphi_r\rangle \neq |\psi\rangle$, wherein $|\varphi_i\rangle \neq |\varphi_j\rangle$ for $i \neq j$;

$R$ third absolute value time series $\left|f_3^{(r)}\right|$, derived by enacting a time evolution using $H$ on a superposition of two input states, $(|\psi\rangle + |\varphi_r\rangle)$; and

$R$ fourth absolute value time series $\left|f_4^{(r)}\right|$, derived by enacting a time evolution using $H$ on a superposition of two input states $(|\psi\rangle + i|\varphi_r\rangle)$.

3. The method of claim 2, wherein the phase information is extracted from the at least one additional family of absolute value time series by optimising a cost function applied to the first, second, third, and fourth absolute value time series for each $r \in \{1, ... , R\}$.

4. The method of claim 3 wherein the cost function includes a relative phase term:

$$Q_{\text{interference}}(\boldsymbol{y}) := \sum_{r=1}^{R} \left[ \sum_{j=0}^{N-1} \left| y_j - y_j^{(r)} G_r[j]/|G_r[j]| \right|^2 \right]$$

wherein $G_r$ represents estimates of the relative difference in phase between $|\psi\rangle$ and $|\varphi_r\rangle$ for a value of $r$ and $\boldsymbol{y}$ is a vector encoding the phase of each time series at discrete time steps.

5. The method of claim 3 or claim 4, wherein the cost function includes a support term:

$$Q_{\text{support}}^{(s)}(\boldsymbol{y}) := \sum_{k=s}^{N-1} \left| \sum_{j=0}^{N-1} |f_1[j]| y_j \exp\left[\frac{-i2\pi jk}{N}\right] \right|^2 + \sum_{r=1}^{R} \left[ \sum_{k=s}^{N-1} \left| \sum_{j=0}^{N-1} \left|f_2^{(r)}[j]\right| y_j^{(r)} \exp\left[\frac{-i2\pi jk}{N}\right] \right|^2 \right]$$

wherein $\boldsymbol{y}$ is a vector encoding the phase of each time series at discrete time steps.

6. The method of any one of claims 2 to 5, wherein the input states $|\psi\rangle$ and $|\varphi_r\rangle$ are selected so that their corresponding times series, $f_1$ and $f_2^{(r)}$, are spectrally independent of one another and their Fourier transforms each have no support outside a finite interval.

7. The method of claim 1, wherein the at least one additional family of absolute value time series includes providing a dummy Hamiltonian, $H_D$, which implements a time evolution in an independent time dimension, $z$, and wherein $|f_1|$ and the at least one additional family of absolute value time series collectively form a two-dimensional absolute value time series:

$$|f(t, z)| := \left| \langle \psi | e^{itH} e^{izH_D} | \psi \rangle \right|.$$

8. The method of claim 7, wherein:

the dummy Hamiltonian $H_D$ commutes with the Hamiltonian $H$; and/or

the input state $|\psi\rangle$ is not an eigenvector of $H_D$; and/or
the dummy Hamiltonian $H_D$ is the total particle number operator; and/or
the dummy Hamiltonian $H_D$ is a sum of single qubit Pauli-Z operators, optionally wherein the dummy Hamiltonian $H_D$ is encoded using a Jordan-Wigner mapping as:

$$H_D = \frac{1}{2} \sum_{i \in V, \sigma} (I_{i\sigma} - Z_{i\sigma}).$$

9. The method of any one of claims 7 or 8, wherein phase information is extracted from $|f(t, z)|$ by performing a hybrid input-output algorithm to iteratively converge on a reconstructed phase, optionally wherein the hybrid input-output algorithm loops the following four steps, where the index $i$ tracks the iteration number of the loop and $f^0([j, l]) := f([j, l]) := |\langle\psi|e^{itjH}e^{izlH_D}|\psi\rangle|e^{\theta}$, where $\theta$ is a complex phase randomly chosen in the interval $[0,2\pi]$:

(i) from $f^i[j, l]$, generate a new two-dimensional time series, $\tilde{f}^i[j, l]$, such that $|\tilde{f}^i[j, l]| = |f^i[j, l]|$ and the phase of $\tilde{f}^i[j, l]$ is the same as the phase of $f^i[j, l]$;
(ii) perform a discrete Fourier transform on $\tilde{f}^i[j, l]$ to derive $\tilde{F}^i[k, m]$;
(iii) where $\tilde{F}^i[k, m] \geq 0$, set $F^{i+1}[k, m] = \tilde{F}^i[k, m]$, and otherwise, set $F^{i+1}[k, m] = F^i[k, m] - \beta\tilde{F}^i[k, m]$, where $0 \leq \beta \leq 1$ is a tuneable parameter selected by a user;
(iv) perform an inverse discrete Fourier transform on $F^{i+1}[k, m]$ to derive $f^{i+1}[j, l]$.

10. The method of claim 9, wherein steps (i) to (iv) are repeated until a convergence condition is met, optionally wherein the convergence condition comprises:

a maximum number of loops; or
a threshold value where the value of $\tilde{f}^i[j, l]$, $f^i[j, l]$, $F^i[k, m]$, or $\tilde{F}^i[k, m]$ changes by less than the threshold value in successive iterations.

11. The method of any one of claims 7 to 10, wherein a windowing function is applied to $|f(t, z)|$ prior to extracting the phase information, optionally wherein the windowing function is a triangular windowing function.

12. The method of any preceding claim, wherein each absolute value time series is a discrete time series comprising values at $N$ times and wherein an input parameter in step (a) of claim 1 is the size of a time step, $\Delta t = T/N$, optionally wherein each absolute value time series is derived by measuring an output of a quantum computer having encoded thereon the operation of $H$ acting on the input state for times $t_j$, where $j \in 0, 1, ..., N$ and $t_j = j\Delta t$, further optionally wherein each time series is extracted from a plurality of measurements of the output of the quantum computer for that time series.

13. An apparatus for reconstructing phase information in a time series, the time series being derived from a time evolution of an input state acted on by a Hamiltonian, $H$, the apparatus comprising at least one processor configured to:

(a) receive an input state, $|\psi\rangle$, a total time evolution time, $T$, and the Hamiltonian, $H$;
(b) enact a time evolution of the input state using $H$ to generate an absolute value of a first time series, $|f_1|$, and generate at least one additional family of absolute values of time series, wherein each time series is a discrete or continuous function of time $t$, for $t \in [0, T]$; and
(c) extract phase information for the time series of the input state from the absolute values of the first time series and the at least one additional family of absolute values of time series.

14. The apparatus of claim 13, further comprising a quantum computer for generating the time series by measurement of an output of a quantum computer having encoded thereon the operation of $H$ acting on the input state for a time t, and wherein the classical processor is operatively coupled to the quantum computer to supply control signals thereto, and to receive outputs therefrom.

15. A computer program comprising instructions which, when enacted by a processor, cause the processor to enact the method steps of any of claims 1 to 12.

Figure 1a (Prior Art)

Figure 1b

110

Receive input state and Hamiltonian

112

Enact time evolution of the input state using Hamiltonian

114

Generate an absolute value of a first time series

116

Generate at least one additional family of absolute values of time series

118

Extract phase information for time series of input state

Figure 1c

Figure 2a

Figure 2b

1: **procedure** v-PR( $|\tilde{f}_1[j]|$, $|\tilde{f}_2^{(r)}[j]|$, $|\tilde{f}_3^{(r)}[j]|$, $|\tilde{f}_4^{(r)}[j]|$ for $r = 1, 2, \ldots, R$, at $j = 0, 1, \ldots, N-1$.)

2:     **for** s = 0, 1, $\ldots$, N-1 **do**

3:         Evaluate $G_r[j]$ for $r = 1, 2, \ldots, R$, at $j = 0, 1, \ldots, N-1$.

4:         Obtain $\tilde{A}_s^\dagger \tilde{A}_s \in \mathbb{C}^{(R+1)N \times (R+1)N}$.

5:         Evaluate the two smallest eigenvalues of $\tilde{A}_s^\dagger \tilde{A}_s$ (with the smallest denoted by $\lambda_{\min}(\tilde{A}_s^\dagger \tilde{A}_s)$).

6:     **end for**

7:     Obtain optimal $s^*$ (heuristically).

8:     Evaluate $\mathbf{y}_{\min} \in \mathbb{C}^{(R+1)N}$ s.t. $\mathbf{y}_{\min}^\dagger \tilde{A}_{s^*}^\dagger \tilde{A}_{s^*} \mathbf{y}_{\min} = (R+1)N\,\lambda_{\min}(\tilde{A}_{s^*}^\dagger \tilde{A}_{s^*})$.

9:     Output $\{\,|f_1[j]|\,(y_{\min})_j\,\}_{j=0}^{N-1}$.

10: **end procedure**

Figure 2c

EP 4 722 994 A1

Figure 3

Figure 4a

Figure 4b

Figure 4c

Figure 4d

Figure 5a

Figure 5b

Figure 6a

$$F^{i+1}[k, m] = \begin{cases} \tilde{F}^i[k, m], & \tilde{F}^i[k, m] \geq 0 \\ F^i[k, m] - \beta \tilde{F}^i[k, m] & \text{else} \end{cases}$$

Figure 6b

1: **procedure** $\textsc{Hybrid}(|f|, \beta, L, F^1)$
2:     **for** i $= 1, 2, \ldots L$ **do**
3:         $f^i = \mathcal{DFT}^{-1}(F^i) = |f^i|e^{i\arg(f^i)}$
4:         $\tilde{f}^i = |f|e^{i\arg(f^i)}$
5:         $\tilde{F}^i = \mathrm{real}(\mathcal{DFT}(\tilde{f}^i))$
6:         **if** $\tilde{F}^i[k, m] \leq 0$ **then**
7:           $F^{i+1}[k, m] = F^i[k, m] - \beta\tilde{F}^i[k, m]$
8:         **else**
9:           $F^{i+1}[k, m] = \tilde{F}^i[k, m]$
10:         **end if**
11:     **end for**
12: **end procedure**

Figure 6c

## Target F[k,m]

Figure 7a

## Measured |f[j,l]|

Figure 7b

Figure 7c

Figure 8a

Figure 8b

Figure 9a

Figure 9b

Figure 10a

Figure 10b

Figure 11a

Figure 11b

Europäisches
Patentamt
European
Patent Office
Office européen
des brevets

# EUROPEAN SEARCH REPORT

**Application Number**

EP 25 20 6726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | O'BRIEN THOMAS E. ET AL: "Error Mitigation via Verified Phase Estimation", PRX QUANTUM, vol. 2, no. 2, 1 May 2021 (2021-05-01), XP093367413, ISSN: 2691-3399, DOI: 10.1103/PRXQuantum.2.020317 * the whole document * | 1-15 | INV. G06N10/60 ADD. G06N10/20 |
| A | YULONG DONG ET AL: "Ground state preparation and energy estimation on early fault-tolerant quantum computers via quantum eigenvalue transformation of unitary matrices", ARXIV.ORG, CORNELL UNIVERSITY LIBRARY, 201 OLIN LIBRARY CORNELL UNIVERSITY ITHACA, NY 14853, 18 October 2022 (2022-10-18), XP091346224, DOI: 10.1103/PRXQUANTUM.3.040305 * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 18 February 2026 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Oxford Chemistry Primers. **S. DUCKETT** ; **B. GILBERT**. Foundations of Spectroscopy. Oxford University Press, 2000
- **J. P. F. LEBLANC** ; **ANDREY E. ANTIPOV** ; **FEDERICO BECCA** ; **IRENEUSZ W. BULIK** ; **GARNET KIN-LIC CHAN** ; **CHIA-MIN CHUNG** ; **YOUJIN DENG** ; **MICHEL FERRERO** ; **THOMAS M. HENDERSON** ; **CARLOS A. JIMÉNEZ-HOYOS**. Solutions of the two-dimensional Hubbard model: Benchmarks and results from a wide range of numerical algorithms. *Phys. Rev. X*, December 2015, vol. 5, 041041, https://link.aps.org/doi/10.1103/PhysRevX.5.041041
- **BELA BAUER** ; **SERGEY BRAVYI** ; **MARIO MOTTA** ; **GARNET KIN-LIC CHAN**. Quantum algorithms for quantum chemistry and quantum materials science. *Chemical Reviews*, October 2020, vol. 120 (22), ISSN 1520-6890, 12685-12717, http://dx.doi.org/10.1021/acs.chemrev.9b00829
- **R. SOMMA** ; **G. ORTIZ** ; **J. E. GUBERNATIS** ; **E. KNILL** ; **R. LAFLAMME**. Simulating physical phenomena by quantum networks. *Phys. Rev. A*, April 2002, vol. 65, 042323, https://link.aps.org/doi/10.1103/PhysRevA.65.042323
- **ROLANDO D SOMMA**. Quantum eigenvalue estimation via time series analysis. *New Journal of Physics*, December 2019, vol. 21 (12), 123025, https://dx.doi.org/10.1088/1367-2630/ab5c60
- **THOMAS E O'BRIEN** ; **BRIAN TARASINSKI** ; **BARBARA M TERHAL**. Quantum phase estimation of multiple eigenvalues for small-scale (noisy) experiments. *New Journal of Physics*, February 2019, vol. 21 (2), 023022, https://dx.doi.org/10.1088/1367-2630/aafb8e
- **LIN LIN** ; **YU TONG**. Heisenberg-limited ground-state energy estimation for early fault-tolerant quantum computers. *PRX Quantum*, February 2022, vol. 3, 010318, https://link.aps.org/doi/10.1103/PRXQuantum.3.010318
- **KIANNA WAN** ; **MARIO BERTA** ; **EARL T. CAMPBELL**. Randomized quantum algorithm for statistical phase estimation. *Phys. Rev. Lett.*, July 2022, vol. 129, 030503, https://link.aps.org/doi/10.1103/PhysRevLett.129.030503

- **GUOMING WANG** ; **DANIEL STILCK FRANGA** ; **RUIZHE ZHANG** ; **SHUCHEN ZHU** ; **PETER D. JOHNSON**. Quantum algorithm for ground state energy estimation using circuit depth with exponentially improved dependence on precision. *Quantum*, November 2023, vol. 7, 1167, https://doi.org/10.22331/q-2023-11-06-1167
- **NICK S. BLUNT** ; **LAURA CAUNE** ; **RÓBERT IZSÁK** ; **EARL T**. Campbell, and Nicole Holzmann. Statistical phase estimation and error mitigation on a superconducting quantum processor. *PRX Quantum*, December 2023, vol. 4, 040341, https://link.aps.org/doi/10.1103/PRXQuantum.4.040341
- **THOMAS E. O'BRIEN** ; **STEFANO POLLA** ; **NICHOLAS C. RUBIN** ; **WILLIAM J. HUGGINS** ; **SAM MCARDLE** ; **SERGIO BOIXO** ; **JARROD R. MCCLEAN** ; **RYAN BABBUSH**. Error mitigation via verified phase estimation. *PRX Quantum*, May 2021, vol. 2, 020317, https://link.aps.org/doi/10.1103/PRXQuantum.2.020317
- **A. BARONI** ; **J. CARLSON** ; **R. GUPTA** ; **ANDY C. Y. LI** ; **G. N. PERDUE** ; **A. ROGGERO**. Nuclear two point correlation functions on a quantum computer. *Phys. Rev. D*, April 2022, vol. 105, 074503, https://link.aps.org/doi/10.1103/PhysRevD.105.074503
- **NISHAD MASKARA** ; **STEFAN OSTERMANN** ; **JAMES SHEE** ; **MARCIN KALINOWSKI** ; **ABIGAIL MCCLAIN GOMEZ** ; **RODRIGO ARAIZA BRAVO** ; **DEREK S. WANG** ; **ANNA I. KRYLOV** ; **NORMAN Y. YAO** ; **MARTIN HEAD-GORDON**. *Programmable simulations of molecules and materials with reconfigurable quantum processors*, 2023, https://arxiv.org/abs/2312.02265
- **BELA BAUER** ; **DAVE WECKER** ; **ANDREW J. MILLIS** ; **MATTHEW B. HASTINGS** ; **MATTHIAS TROYER**. Hybrid quantum-classical approach to correlated materials. *Phys. Rev. X*, September 2016, vol. 6, 031045, https://link.aps.org/doi/10.1103/PhysRevX.6.031045
- **HANS HON SANG CHAN** ; **RICHARD MEISTER** ; **MATTHEW L. GOH** ; **BÁLINT KOCZOR**. *Algorithmic shadow spectroscopy*, 2024, https://arxiv.org/abs/2212.11036
- **YILUN YANG** ; **ARTHUR CHRISTIANEN** ; **MARI CARMEN BAÑULS** ; **DOMINIK S. WILD** ; **J. IGNACIO CIRAC**. Phase-sensitive quantum measurement without controlled operations. *Phys. Rev. Lett.*, May 2024, vol. 132, 220601, https://link.aps.org/doi/10.1103/PhysRevLett.132.220601

- **A. E. RUSSO** ; **K. M. RUDINGER** ; **B. C. A. MORRISON** ; **A. D. BACZEWSKI**. Evaluating energy differences on a quantum computer with robust phase estimation. *Phys. Rev. Lett.*, May 2021, vol. 126, 210501, https://link.aps.org/doi/10.1103/Phys-RevLett.126.210501
- **ADRIAAN WALTHER**. The question of phase retrieval in optics. *Optica Acta: International Journal of Optics*, 1963, vol. 10 (1), 41-49, https://doi.org/10.1080/713817747
- **OREN RAZ** ; **NIRIT DUDOVICH** ; **BOAZ NADLER**. Vectorial phase retrieval of 1-d signals. *IEEE Transactions on Signal Processing*, 2013, vol. 61 (7), 1632-1643
- **JAMES FIENUP**. Phase retrieval algorithms: a comparison. *Applied optics*, August 1982, vol. 21, 2758-69
- Signals & Systems. **A.V. OPPENHEIM** ; **A.S. WILLSKY** ; **S.H. NAWAB**. Prentice-Hall signal processing series. Prentice-Hall International, 1997
- **RICK P. MILLANE**. Phase retrieval in crystallography and optics. *Journal of The Optical Society of America A-optics Image Science and Vision*, 1990, vol. 7 (3), 394-411
- **J. DAINTY** ; **JAMES FIENUP**. Phase retrieval and image reconstruction for astronomy. *Image Recovery: Theory Appl*, 1987, vol. 13, 01
- **TAMIR BENDORY** ; **ROBERT BEINERT** ; **YONINA C. ELDAR**. Fourier Phase Retrieval: Uniqueness and Algorithms. Springer International Publishing, 2017, 55-91
- **YU.M. BRUCK** ; **L.G. SODIN**. On the ambiguity of the image reconstruction problem. *Optics Communications*, 1979, vol. 30 (3), ISSN 0030-4018, 304-308, https://www.sciencedirect.com/science/article/-pii/0030401879903584
- **DANI KOGAN** ; **YONINA C. ELDAR** ; **DAN ORON**. On the 2d phase retrieval problem. *IEEE Transactions on Signal Processing*, February 2017, vol. 65 (4), ISSN 1941-0476, 1058-1067
- **ELIYAHU OSHEROVICH**. Numerical methods for phase retrieval. *ArXiv, abs/1203.4756*, 2012, https://api.semanticscholar.org/CorpusID:14566173
- **DANIEL P. AROVAS** ; **EREZ BERG** ; **STEVEN A. KIVELSON** ; **SRINIVAS RAGHU**. The Hubbard model. *Annual Review of Condensed Matter Physics*, 2022, vol. 13 (2022), ISSN 1947-5462, 239-274, https://www.annualreviews.org/content/journals/10.1146/annurev-conmatphys-031620-102024
- **MINGPU QIN** ; **THOMAS SCHÄFER** ; **SABINE ANDERGASSEN** ; **PHILIPPE CORBOZ** ; **EMANUEL GULL**. The Hubbard model: A computational perspective. *Annual Review of Condensed Matter Physics*, March 2022, vol. 13 (1), ISSN 1947-5462, 275-302, http://dx.doi.org/10.1146/annurev-conmatphys-090921-033948
- **ROBERT BEINERT**. One-dimensional phase retrieval with additional interference intensity measurements. *Results in Mathematics*, 2017, vol. 72 (1), 1-24, https://doi.ora/10.1007/s00025-016-0633-9
- **EMMANUEL J. CANDES** ; **THOMAS STROHMER** ; **VLADISLAV VORONINSKI**. *Phaselift: Exact and stable signal recovery from magnitude measurements via convex programming*, 2011, https://arxiv.orq/abs/1109.4499
- **KISHORE JAGANATHAN** ; **YONINA C. ELDAR** ; **BABAK HASSIBI**. *Phase retrieval: An overview of recent developments*, 2015, https://arxiv.org/abs/1510.07713
- **CHARLES DERBY** ; **JOEL KLASSEN** ; **JOHANNES BAUSCH** ; **TOBY CUBITT**. Compact fermion to qubit mappings. *Phys. Rev. B*, July 2021, vol. 104, 035118, https://link.aps.org/doi/10.1103/Phys-RevB.104.035118
- **MICHAEL A. NIELSEN** ; **ISAAC L. CHUANG**. Quantum Computation and Quantum Information. Cambridge University Press, 2010